(19) Europäisches Patentamt / European Patent Office / Office européen des brevets

(11) **EP 3 319 089 B1**

(12) **EUROPEAN PATENT SPECIFICATION**

(45) Date of publication and mention
of the grant of the patent:
**27.10.2021 Bulletin 2021/43**

(21) Application number: **16817649.3**

(22) Date of filing: **06.06.2016**

(51) Int Cl.:
*G11B 20/00* (2006.01)    *H04N 5/85* (2006.01)
*H04N 5/913* (2006.01)    *H04N 9/82* (2006.01)

(86) International application number:
**PCT/JP2016/066723**

(87) International publication number:
**WO 2017/002540 (05.01.2017 Gazette 2017/01)**

(54) **INFORMATION PROCESSING DEVICE, INFORMATION PROCESSING SYSTEM, INFORMATION PROCESSING METHOD, AND PROGRAM**

INFORMATIONSVERARBEITUNGSVORRICHTUNG, INFORMATIONSAUFZEICHNUNGSSYSTEM, INFORMATIONSVERARBEITUNGSVERFAHREN UND PROGRAMM

DISPOSITIF DE TRAITEMENT D'INFORMATIONS, SYSTÈME DE TRAITEMENT D'INFORMATIONS, PROCÉDÉ DE TRAITEMENT D'INFORMATIONS, ET PROGRAMME

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.06.2015 JP 2015131135**

(43) Date of publication of application:
**09.05.2018 Bulletin 2018/19**

(73) Proprietor: **Sony Group Corporation**
**Tokyo 108-0075 (JP)**

(72) Inventors:
• **KOBAYASHI, Yoshiyuki**
  **Tokyo 108-0075 (JP)**

• **UCHIMURA, Kouichi**
  **Tokyo 108-0075 (JP)**

(74) Representative: **Witte, Weller & Partner**
**Patentanwälte mbB**
**Postfach 10 54 62**
**70047 Stuttgart (DE)**

(56) References cited:
**EP-A1- 1 711 009       EP-A1- 1 768 407**
**WO-A1-2012/147350    WO-A1-2014/077827**
**JP-A- 2000 324 443     JP-A- 2011 221 776**
**US-A1- 2006 067 530**

## Description

TECHNICAL FIELD

The present disclosure relates to an information processing apparatus, an information processing system, an information recording medium, and an information processing method, and a program. In more details, the present disclosure relates to an information processing apparatus, an information processing system, an information recording medium, and an information processing method, and a program realizing a configuration allowing a copy process under predetermined management such as a configuration allowing a copy process of data recorded on a medium (information recording medium) such as a disc under a condition that permission information is received from a management server.

BACKGROUND ART

As information recording media of various kinds of contents such as movies and music, various information recording media such as a digital versatile disc (DVD), a Blu-ray (registered trademark) disc (BD), and a flash memory are used. For most of contents such as music data and image data recorded on such information recording media, an author, a seller, and the like have a copyright, a distribution right, and the like. Accordingly, even for a user who has purchased a disc, there is a predetermined restriction on the use of contents recorded on the disc. For example, it is not allowed to unlimitedly copy contents recorded on a disc to another medium.

As a copy management configuration of contents stored on media, a copy allowing configuration conditioned on the reception of copy management information from a management server is known. More specifically, for example, the process is performed in the following sequence.

A user loads a first medium that is a copy source such as a disc storing a content or the like into a user apparatus such as a PC or a recording reproduction apparatus, and the user apparatus is connected to a management server through a network. Thereafter, the user apparatus transmits information defined in advance such as a disc identifier (ID) or the like of the first medium to the server.

After checking the validity of reception information and the like, the server transmits copy management information recording copy permission data and the like to the user apparatus. The user apparatus can check the copy permission data recorded in the copy management information transmitted from the server, read the copy permission data from the first medium, and perform copying for a second medium that is a copy destination.

Such a copy management configuration is called a managed copy (MC), and, for example, details thereof are written in Patent Document 1 (Japanese Patent Application Laid-Open No. 2008-98765) .

In a case where a content stored in a medium such as a Blu-ray (registered trademark) disc (BD) storing a movie or the like that is a copyright management target is copied by a user apparatus, for example, to another medium such as a flash memory or another disc, it is necessary to perform a process according to the managed copy (MC) described above. In other words, copying is allowed with being conditioned on the reception of copy management information from the management server.

In most of media such as a disc in which the current contents have been recorded, such as a BD-ROM and the like, for example, which are recording media of movie contents and the like, high definition (HD) images that are high-quality images are recorded. Such an image is a 2K image corresponding to a so-called high vision.

However, in the future, it is predicted that the image quality is further improved, and the number of media in which ultra high definition (UHD) images, for example, 4K images having an increased number of pixels are recorded is increased.

In addition, a data recording and reproducing process using a BD and a 4K image are described, for example, in Patent Document 2 (Japanese Patent Application Laid-Open No. 2011-023071) and the like.

For a data recording form of an ultra high definition image (UHD image) for a BD, currently, standardization has progressed in a Blu-ray (registered trademark) disc association (BDA) that is a standard formulation organization.

The BDA is in the middle of formulation of standardization in consideration of not only a 4K image having an increased number of pixels but also the color gamut of an image output to a display and a high dynamic range (HDR) image having extended contrast ratio.

Compared to a standard dynamic range (SDR) image that is widely used in a current 2K supporting display, an HDR image has a wider representable color gamut, can set a higher contrast ratio, and can represent an image that is closer to a real image viewed through naked-eyes.

In a BD, various types of data such as reproduction data, reproduction control information, management information, and the like are recorded according to a BD supporting data format, for example, a BDMV format.

In a case where BD format recording data is converted into data of another format, for example, an MP4 format, and the data of the another format is recorded in a medium such as a flash memory, in other words, a copy process is performed, it is necessary to perform a copy process accompanying a format conversion.

In addition, in a case where the copy management configuration described above, in other words, a copy process according to the managed copy (MC) is performed, a user apparatus performing copying, for example, needs to acquire copy management information from a copy management server and select and copy only copy allowed target data recorded in the copy management information.

However, as the ultra high definition images (UHD image) described above, there are ultra high definition images (UHD images) of various different types.

In addition, for example, in the current state in which the spread of reproduction apparatuses capable of reproducing ultra high definition images (UHD images) is not sufficient, it is predicted to circulate BDs in which both a conventional HD image and an ultra high definition image (UHD image) are recorded together for the same content.

In order to perform copy management by applying the managed copy (MC) described above, it is necessary to clarify image data that is copy allowed data in copy management information transmitted from a management server.

However, in copy management information that has been proposed until now, an ultra high definition image (UHD image) is not sufficiently considered in the current state.

For example, in a case where both an HDR image and an SDR image are recorded in a copy source medium (first medium), a recording form of copy management information of a case where only one of the HDR image and the SDR image is set as a copy allowed target is not clearly defined.

In such a current state, even when copy management information is received from a copy management server, there is a problem in that a user apparatus cannot determine image data of one of an HDR image and an SDR image that is copy allowed data. Consequently, there is concern that reliable copy management cannot be realized. Another prior art solution is known from document EP1768407.

CITATION LIST

PATENT DOCUMENT

Patent Document 1: Japanese Patent Application Laid-Open No. 2008-98765
Patent Document 2: Japanese Patent Application Laid-Open No. 2011-023071

SUMMARY OF THE INVENTION

PROBLEMS TO BE SOLVED BY THE INVENTION

The present disclosure, for example, has been made in consideration of the problems described above, and an object thereof is to provide an information processing apparatus, an information processing system, an information recording medium, and an information processing method, and a program realizing a configuration enabling copy allowed data to be reliably selected even in a case where a copy process is performed from a medium in which various images such as an HDR image and the like are recorded in a configuration performing a copy process on the basis of copy management information.

SOLUTIONS TO PROBLEMS

Aspects of the present invention are defined in the appended claims.

Other different objects, features, and advantages of the present disclosure will be disclosed by more detailed descriptions based on embodiments of the present disclosure and the attached drawings to be described later. In addition, in this specification, a system is a logical aggregated configuration of a plurality of apparatuses, and apparatuses of the configuration are not limited to being disposed in a same casing.

EFFECTS OF THE INVENTION

According to the configuration of one embodiment of the present disclosure, a configuration enabling selective copy permission for each of a basic layer and an auxiliary layer used for reproduction of video data is realized.

More specifically, for example, a copy execution apparatus performing a data copying process between media performs a process of receiving dynamic range scalability limiting information that is copy limiting information recording whether or not copy is allowed for each of a basic layer and an auxiliary layer used for reproduction of video data from a copy management server, determining whether or not copy is allowed for each of the layers, selecting layer data allowed to be copied or video data generated on the basis of the copy-allowed layer data, and copying the selected data to a second medium.

According to this configuration, a configuration enabling selective copy permission for each of a basic layer and an auxiliary layer used for reproducing video data is realized.

In addition, the effects described in this specification are merely examples, and effects are not limited thereto, but there may be additional effects.

BRIEF DESCRIPTION OF DRAWINGS

Fig. 1 is a diagram that describes an overview of a managed copy (MC) system.
Fig. 2 is a diagram that describes a unit configuration and a unit key management table.
Fig. 3 is a diagram that describes an example of the configuration of directories of a medium.
Fig. 4 is a diagram that describes the sequence of a copy process (managed copy (MC)) according to the management of a management server.

Fig. 5 is a diagram that describes configuration data of a copy control management file (managed copy manifest file (MCMF)) that is recording information of a first medium.

Fig. 6 is a diagram that illustrates an example of data included in a copy execution request.

Fig. 7 is a diagram that describes basic information included in server response information (offer list) 131.

Fig. 8 is a diagram that describes an example of a reproduction process of BDMV format data.

Fig. 9 is a diagram that describes MPEG-2 TS format data.

Fig. 10 is a diagram that describes MP4 format data.

Fig. 11 is a diagram that describes MP4 format data.

Fig. 12 is a diagram that illustrates an example of video data (video elementary stream) recorded in a BD in accordance with a BDMV format.

Fig. 13 is a diagram that describes the types of specific recording examples of video data for a BD.

Fig. 14 is a diagram that describes an example of a conversion process from an MPEG-2 TS format into an MP4 format.

Fig. 15 is a diagram that describes an example of data of additional information recorded in server response information (offer response).

Fig. 16 is a diagram that describes a specific example of server response information (offer response) provided by a management server.

Fig. 17 is a diagram that describes an example of display of detailed information of a content based on server response information (offer response) provided by a management server.

Fig. 18 is a diagram that illustrates a flowchart describing a copy process sequence using dynamic range scalability information included in server response information.

Fig. 19 is a diagram that illustrates a flowchart describing a copy process sequence using dynamic range scalability information included in server response information.

Fig. 20 is a diagram that illustrates a flowchart describing a copy process sequence using pair stream limiting information included in server response information.

Fig. 21 is a diagram that illustrates a flowchart describing a copy process sequence using pair stream limiting information included in server response information.

Fig. 22 is a diagram that illustrates a flowchart describing the whole process sequence of a copy process.

Fig. 23 is a diagram that illustrates a flowchart describing the whole process sequence of a copy process.

Fig. 24 is a diagram that illustrates a flowchart describing the whole process sequence of a copy process.

ess.

Fig. 25 is a diagram that illustrates a flowchart describing the whole process sequence of a copy process.

Fig. 26 is a diagram that illustrates a flowchart describing the whole process sequence of a copy process.

Fig. 27 is a diagram that describes an example of the configuration of an information processing apparatus performing a format conversion and a data recording process.

Fig. 28 is a diagram that describes an example of the configuration of an information processing apparatus performing a format conversion and a data recording process.

Fig. 29 is a diagram that describes an example of the hardware configurations of an information processing apparatus performing data copying and a data recording and reproducing process and a copy management server.

MODE FOR CARRYING OUT THE INVENTION

Hereinafter, an information processing apparatus, an information processing system, an information recording medium, and an information processing method, and a program according to the present disclosure will be described in detail with reference to the drawings. In addition, the description will be presented according to the following items.

1. Overview of Copy Control Process of Content Based on Server Management
2. Example of Recording Configuration of Content
3. Copy Process Sequence Based on Server Management
4. Data Recording Format of Media Recording Data

   4-1. BDMV Format and MPEG-2 TS Format
   4-2. MP4 Format

5. Type of Video Data Recorded according to BDMV Format
6. Data Copy Process between Media Accompanying Format Conversion
7. Specific Example of Server Response Information (Offer Response) Provided by Management Server and Example of Display
8. Process Sequence Performed by Information Processing Apparatus

   8-1. Copy Process Sequence Using Dynamic Range Scalability Information Included in Server Response Information
   8-2. Copy process Sequence Using Pair Stream Limiting Information Included in Server Response Information
   8-3. Whole Process Sequence of Copy process

9. Example of Configuration of Information Processing Apparatus

9-1. Example of Configuration of Information Processing Apparatus Performing Format Conversion and Data Recording Process
9-2. Example of Hardware Configuration of Information Processing Apparatus

10. Summary of Configuration of Present Disclosure

[1. Overview of Copy Control Process of Content Based on Server Management]

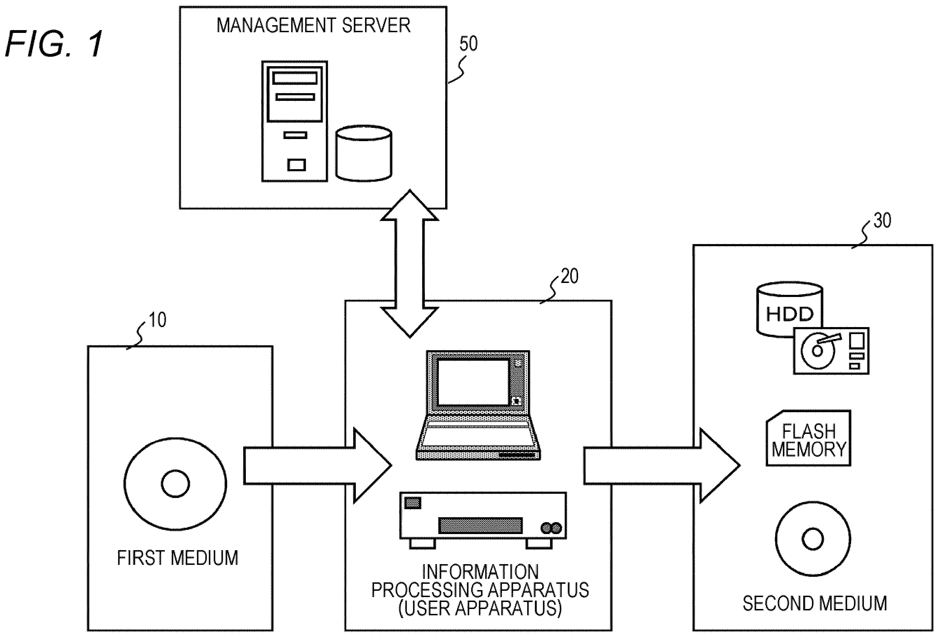

First, an overview of a copy control process of contents based on server management will be described with reference to Fig. 1.

For example, most of contents such as movies recorded in a Blu-ray (registered trademark) disc (BD) and the like are allowed to be used under predetermined copyright management. Accordingly, even for a user who purchases a disc, there is a predetermined restriction on the use of a disc-recorded content. For example, it is not allowed to unlimitedly copy a disc-recorded content to a medium such as another disc.

As a copy management configuration of such a media stored content, a copy allowing process configuration being conditioned upon the reception of copy permission information from a management server is known. Fig. 1 is a diagram that describes an overview of a managed copy (MC) system as an example thereof.

An information processing apparatus 20 is a user's PC, a recorder (recording and reproducing apparatus), or the like and can load and reproduce a first medium 10 in which a movie or the like that is a copyright management target content is recorded.

The information processing apparatus 20 can perform a process of copying the content recorded in this first medium 10 to a second medium 30 that is another medium. The second medium 30 is a recordable medium in the information processing apparatus 20 and, for example, is a medium such as a hard disk (HDD), a flash memory, or a data recordable disc (a BD, a DVD, or the like).

However, when a user freely performs a copy process, the copy of the content occurs in a large quantity, and unjust use or distribution occurs. In order to prevent such a situation, in a case where the information processing apparatus 20 that is a user apparatus copies the content, the information processing apparatus 20 is connected to a management server 50 and receives copy permission information from the management server 50. In the reception of this copy permission information, for example, the process of checking of user's justifiability for the first medium, payment of a predetermined fee, and the like is necessary.

By performing this predetermined process, the information processing apparatus 20 that is a user apparatus can receive copy permission information from the management server 50 and perform content copy that is conditioned on the reception of the copy permission information. This is an overview of managed copy (MC).

[2. Example of Recording Configuration of Content]

Next, a configuration example of data recorded in a medium (the first medium 10 illustrated in Fig. 1) recording a content of which the copyright is managed that is a target of the managed copy (MC) will be described.

Most of contents such as a movie recorded in a disc for which general content recording has been completed, for example, a Blu-ray (registered trademark) disc (BD) or the like are recorded with being encrypted for preventing unjust use such as illegal copy.

An encrypted content compliant with an advanced access content system (AACS) standard that is a standard relating to a copyright protection technology of contents is, as described above, partitioned in unitary units and is recorded as encrypted data to which a different encryption key is applied to each of the units. By employing the configuration of encryption in unitary units, use control in unitary units can be performed, and strict and various kinds of content use control are realized.

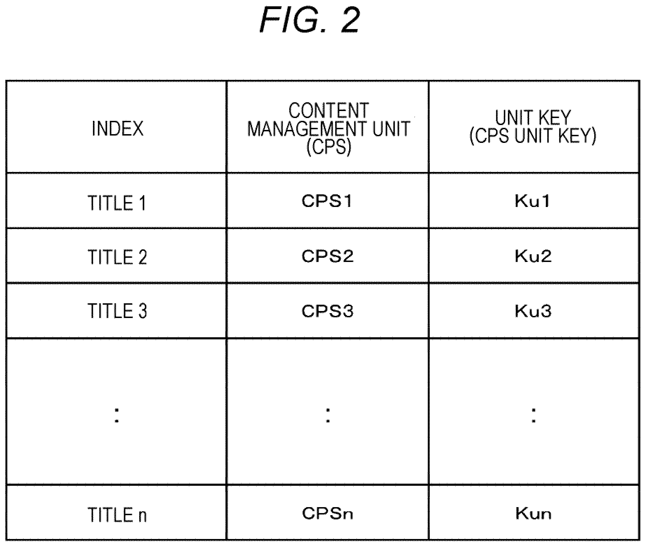

The unit that is a unit for partitioning a content is called a content management unit or a CPS unit, and an encryption key corresponding to each CPS unit is called a CPS unit key, a unit key, or a title key. An example of a correspondence relation between a unit partition of a content recorded in a disc and an encryption key (unit key) is illustrated in Fig. 2.

Fig. 2 is an example of a unit key management table that represents a correspondence relation between a unit (CPS unit) configuring a content recorded in a certain medium, for example, one disc and a CPS unit key that is an encryption key. This unit key management table is recorded in a medium (a BD or the like) together with an encrypted content.

As illustrated in Fig. 2, the CPS unit that is configuration data of a content is partitioned into CPS units 1 to n. A CPS unit key that is a unique encryption key is associated with each of the CPS units 1 to n.

For example, in a case where the CPS unit 1 (CPS1) is to be reproduced, decoding is performed using a CPS unit key 1 (Ku1) . In a case where the CPS unit 2 (CPS2) is to be reproduced, it is necessary to perform decoding by applying a CPS unit key 2 (Ku2) . As an index corresponding to each CPS unit and CPS unit key, for example, "title" is used. "title" is an index set in correspondence with each CPS unit, and, by specifying a title, a CPS unit and a CPS unit key can be specified.

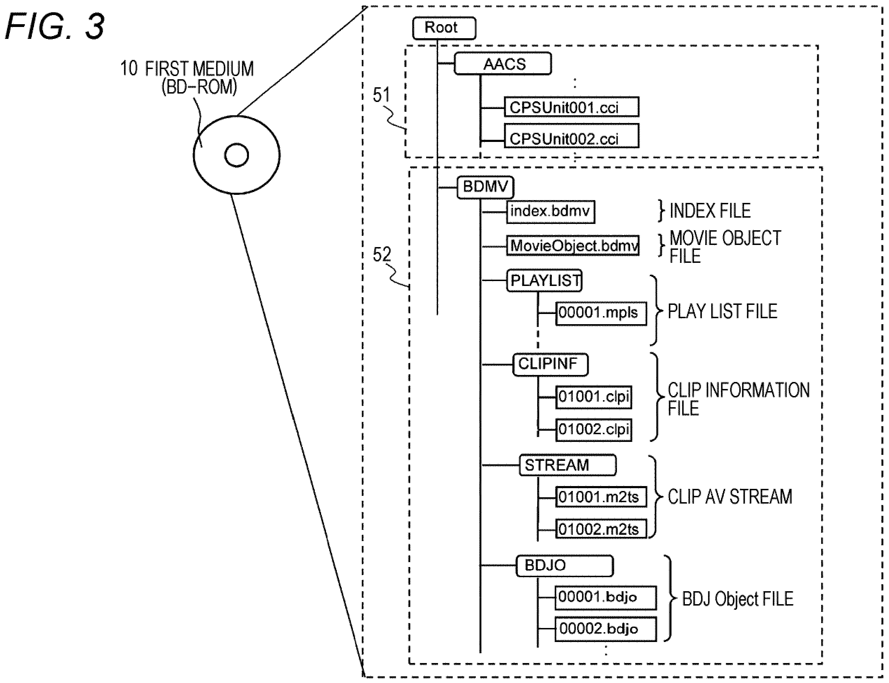

Fig. 3 illustrates the configuration of directories of a case where the first medium 10 is a ROM-type Blu-ray (registered trademark) disc and directories corresponding to recording data of a Blu-ray (registered trademark) disc (BD) .

As illustrated in Fig. 3, the directories are divided into a management information setting unit 51 (AACS directory) and a data section 52 (BDMV directory).

In the management information setting unit 51 (AACS directory), a CPS unit key file, a use control information file, and the like are stored.

Meanwhile, in the data section 52, under the BDMV directory, for example, files such as

an index file,
a play list file,
a clip information file,
a clip AV stream file, and
a BDJO file
are recorded.

In the index file, title information as index information applied to a reproduction process is stored. This title is similar to the title registered in the unit key management table described above with reference to Fig. 2 and is data associated with a CPS unit.

The play list file is a file that defines a reproduction sequence of a content and the like according to program information of a reproduction program designated by a title and includes master-pupil information for clip information having reproduction position information.

The clip information file is a file designated by the play list file and includes reproduction position information of the clip AV stream file and the like.

The clip AV stream file is a file that stores AV stream data that is a reproduction target.

The BDJO file is a file that stores execution control information of a file storing a JAVA (registered trademark) program, a command, and the like.

The sequence in which a content recorded in an information recording medium by an information processing apparatus is as follows.

First, a specific title is designated from an index file by using a reproduction application.

A reproduction program associated with the designated title is selected.

A play list defining the reproduction sequence of a content and the like is selected on the basis of program information of the selected reproduction program.

By using clip information defined in the selected play list, an AV stream or a command as content actual data is read, and the reproduction of the AV stream or an execution process of the command is performed.

In this content reproducing process, according to the selected title, a unit and a unit key described above with reference to Fig. 2 can be determined, a unit key corresponding to a unit that is a reproduction target is acquired, and a decoding process in a unitary unit is performed. In a case where the copy process described with reference to Fig. 1 is performed, copy target data is specified by referring to the information received from the management server 50, and the copy process is performed.

[3. Copy Process Sequence of Content Based on Server Management]

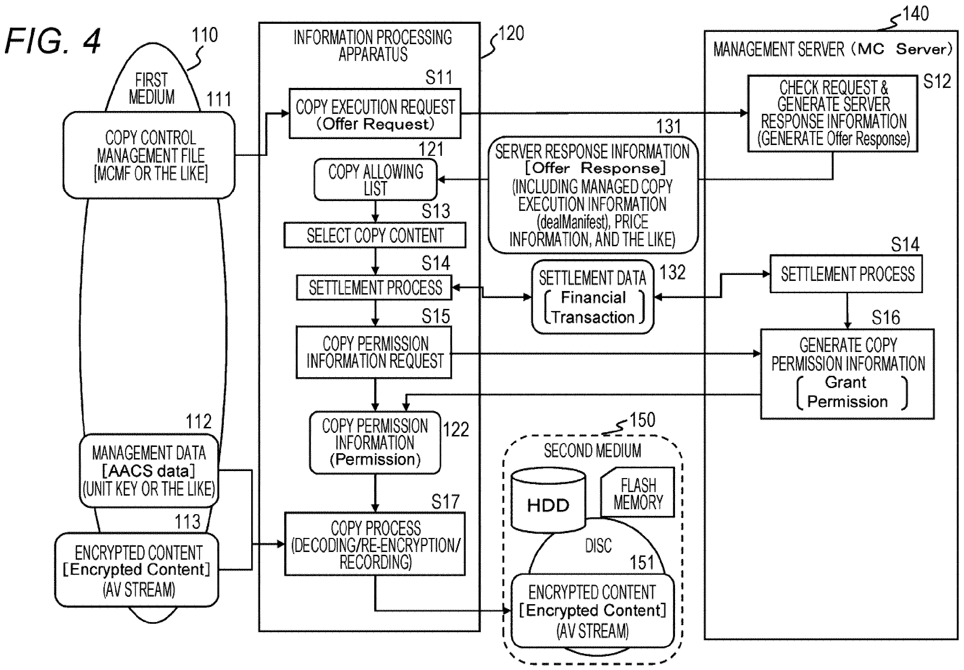

Next, a copy process sequence of contents based on server management will be described with reference to Fig. 4 and subsequent drawings. Fig. 4 is a diagram that describes the sequence of managed copy (MC) that is an example of the copy process of contents based on server management.

In Fig. 4, from the left side,

a first medium 110 such as a ROM disc in which a content such as a movie has been recorded,
an information processing apparatus 120 as a user apparatus reading data such as a content from the first medium 110 and performing a copy process,
a second medium 150 that is a medium as a copy destination of a content and is configured by a hard disk (HDD),
a flash memory, anR/REdisc, or the like, and a management server (MC server) 140 that performs a process of providing permission information of content copy and the like
are illustrated.

The information processing apparatus 120, for example, is configured by a PC, a recording and reproducing apparatus, or the like and performs a process of receiving data read from the first medium 110 as input and recording the data into the second medium 150 as a copy destination medium configured by a hard disk (HDD), a flash memory, an R/RE disc, or the like, in other words, a content copy process.

The first medium 110, for example, is a ROM-type Blu-ray (registered trademark) disc, a DVD disc, or the like. The second medium 150 is a medium in which data can be written and, more specifically, for example, is a hard disk (HDD), a flash memory, a Blu-ray (registered trademark) disc of an R type or an RE type, a DVD disc, or the like.

For example, in the first medium 110 configured by a ROM disc or the like, as illustrated in the drawing, an encrypted content 113 that is a use control content is recorded. The encrypted content 113, for example, is a content formed by an audio visual (AV) stream of a moving image content such as a high definition (HD) movie content that is high definition moving image data, music data, a game program, an image file, audio data, text data, or the like.

The encrypted content 113, as described above with reference to Fig. 2, is an encrypted content, for which encryption is performed by applying a different unit key (CPS unit key) in units of CPS units, having a use management configuration in units of content management units (CPS unit) . In other words, in order to realize use control different for each partition data in a unitary unit, encryption is performed using a key (called a CPS unit key, a unit key, or a title key) that is different for each unit.

In addition, in the first medium 110, key information applied to decoding of the encrypted content 113, management data (AACS data) 112 configured by use control information and the like, and a copy control management file (Managed Copy Manifest File (MCMF)) 111 used at the time of performing a copy process of a recording content of the first medium 110 are stored. The copy control management file (MCMF) will be described in a later stage.

Management data 112 represented as recording information of the first medium 110 illustrated in Fig. 4, for example, is management data defining an advanced access content system (AACS) that is a standard management system relating to a copyright protection technology of contents and is data including a CPS unit key file storing a key (unit key) applied to the decoding of the encrypted content 113, use permission information, a content certificate (CC) representing the justifiability of a content, an encrypted key block (media key block (MKB)) in which a media key used for acquiring a CPS unit key is stored, and the like.

The media key block (MKB) will be simply described. The MKB is an encrypted key block generated on the basis of a key distribution system of a tree structure known as one type of broadcast encryption system. The MKB is a key information block enabling acquisition of a media key $[Km]$ that is a key required for decoding a content only by using a process (decoding) based on a device key $[Kd]$ stored in a user's information processing apparatus having a valid license. This applies an information distribution system according to a so-called hierarchical tree structure, and, only in a case where a user device (information processing apparatus) has a valid license, the acquisition of a media key $[Km]$ is enabled, and, an invalidated (revoke processed) user device cannot acquire a media key $[Km]$. In a memory of the information processing apparatus 120, a device key $[Kd]$ is stored.

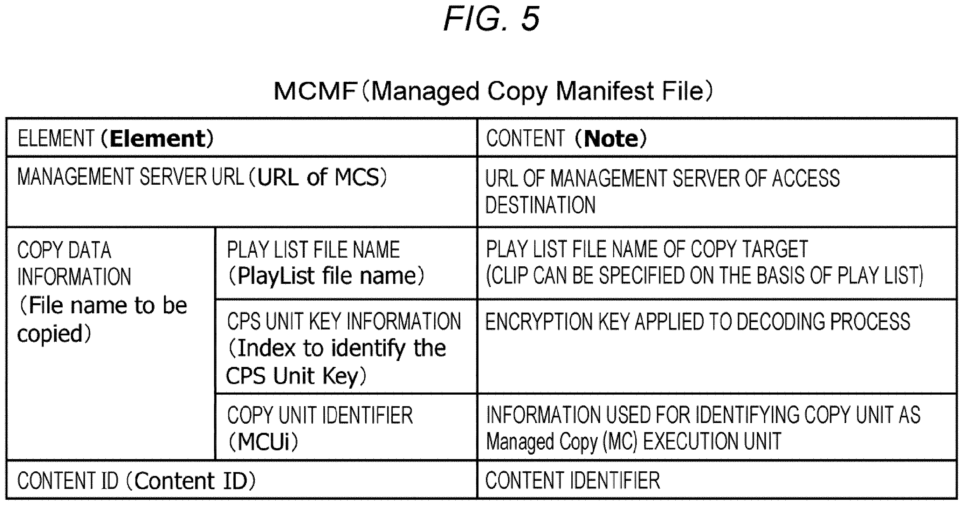

A copy control management file (managed copy manifest file (MCMF)) 111 represented as recording information of the first medium 110 illustrated in Fig. 4 is a file applied at the time of performing a copy process of a content 113 recorded in the first medium 110 and, for example, is XML description data illustrated in Fig. 5.

The copy control management file (managed copy manifest file (MCMF)) 111 will be described with reference to Fig. 5.

In the copy control management file (MCMF), for example, data described below is included.

(1) Management server URL: access information of a management server providing copy permission information; access information for the management server 140 illustrated in Fig. 4.
(2) Copy data information (dealManifest)

(2-1) Play list file name: a file name of a play list that is a copy target
(2-2) CPS unit key information: identification information of a CPS unit key applied to a decoding process of a content that is a copy target
(2-3) Copy unit identifier: unit identification information of a copy unit (MC unit) representing a copy unit of managed copy (MC)

(3) Content ID: an identifier of a content that is a copy target; for example, an international standard audio visual number (ISAN) as content code information is used.

The processing sequence of a case where the encrypted content 113, for example, recorded in the first medium 110 that is a ROM disc is copied to another medium such as a second medium 150 configured by a hard disk, an R/RE disc, or the like will be described with reference to Fig. 4.

The information processing apparatus 120, first, in step S11, transmits a copy execution request (offer request) to the management server 140 by applying server information (an URI or the like) recorded in the copy control management file (MCMF) 111 recorded in the first medium 110.

At this time, a content ID corresponding to a content that is a copy process target and the like are transmitted to the management server 140.

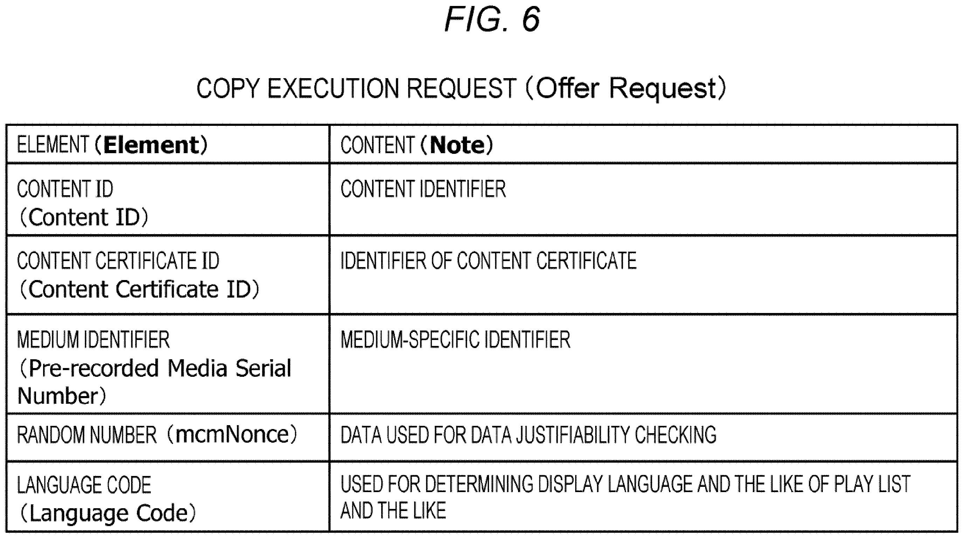

An example of data included in the copy execution request is illustrated in Fig. 6. As illustrated in Fig. 6, for example, data described below is included in the copy execution request.

(a) Content ID: an identifier of a content stored in the first medium
(b) Content certificate ID: a certificate used for checking the justifiability of the content
(c) Media identifier: an identifier of a first medium that is a copy source
(d) Random number: data used for checking the justifiability of data
(e) Language code: code information of a language used by an information processing apparatus

Each information of the information (a) to (c) described above is read from the first medium 110. " (d) Random number" is generated by the information processing apparatus 120. As "(e) Language code", a language code recorded in the memory of the information processing apparatus 120 in advance is acquired and transmitted.

In addition, the language code is used for determining the language and the like of offer detailed information included in a response provided by the management server 140.

The copy process sequence of a content according to the server management will be continued with reference back to Fig. 4. The management server 140, in step S12, performs a verification process of justifiability and the like of reception information such as a content ID received from the information processing apparatus 120 and, in a case where it is checked that there is no problem, generates server response information (offer list) 131 and transmits the generated server response information 131 to the information processing apparatus 120.

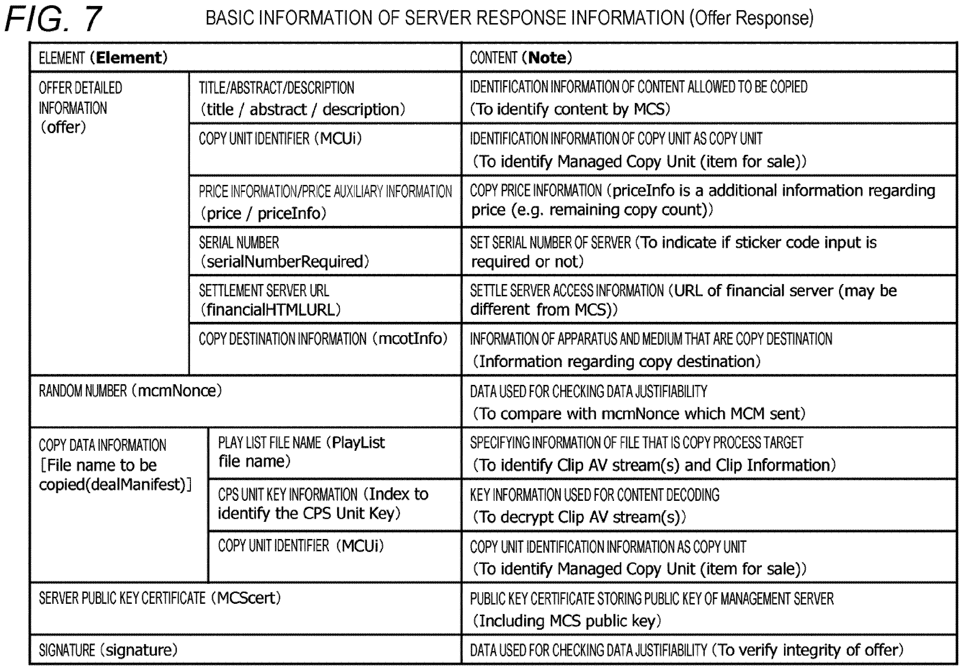

Basic information included in the server response information (offer list) 131 provided by the management server 140 for the information processing apparatus 120 will be described with reference to Fig. 7.

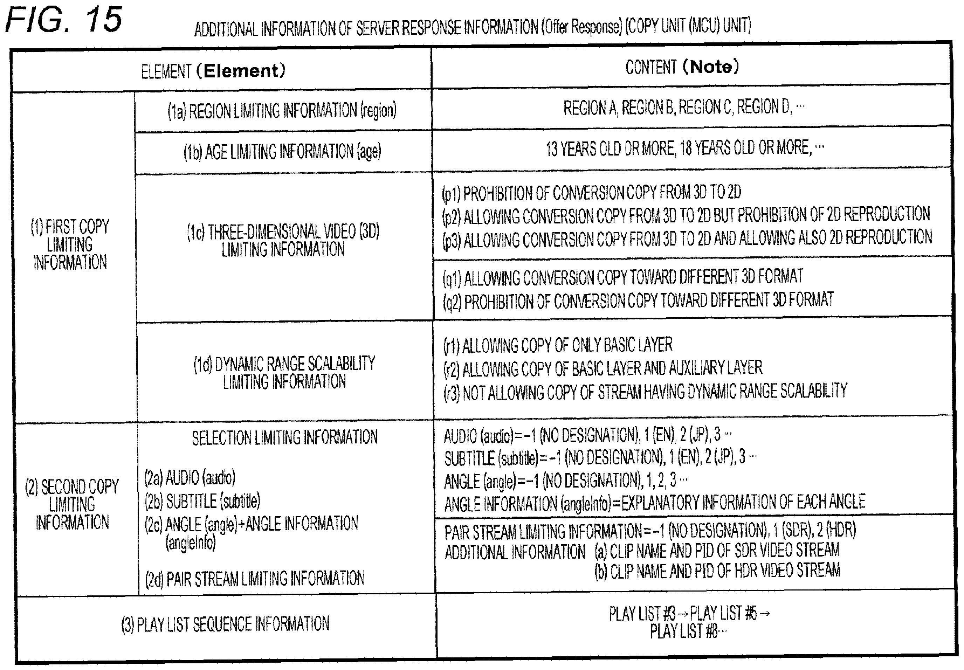

In addition, while described in detail in a later stage, the basic information illustrated in Fig. 7 and further, additional information are included in the server response information (offer list) 131. The additional information will be described in a later stage with reference to Fig. 15 and other drawings.

First, the basic information included in the server response information (offer list) 131 will be described with reference to Fig. 7. Each information described below is included in the basic information.

(1) Offer detailed information

(1a) title/abstract/description: information of a title, an abstract, and a description corresponding to a copy allowed content
(1b) Copy unit identifier (MCU) : an identifier used for identifying a copy unit as a copy unit
(1c) Price information (price): price information of copy
(1d) Price auxiliary information (priceInfo): auxiliary information of price
(1e) Settlement server URL (financialHTMLURL): access information of a server performing a settlement process of a copy fee
(1f) Copy destination information (mcotInfo): information representing the types and the like of media allowed as copy destination apparatuses; For example, media types such as an HDD, a flash memory, and the like are recorded.

(2) Random number (mcmNonce) : a random number used for checking the justifiability of data
(3) Copy data information (File name to be copied) (= dealManifest)

(3a) Play list file name (PlayList file name) : a file name of a play list that is a copy target. In addition, a clip information file or a clip AV stream file also can be specified by specifying the play list.
(3b) CPS unit key information (Index to identify the CPS Unit Key) : identification information of a key (CPS unit key) used for decoding a copy content

(3c) Copy unit identifier (MCUi): identification information of a copy unit (MCU) representing a copy unit

(4) Server public key certificate (MCScert): a certificate in which a public key of a server used for encrypted communication, signature validation, or the like is stored
(5) Signature (signature): signature data used for alteration checking for the entire data

Such information is the basic information included in the server response information (Offer List) 131 provided by the management server 140 for the information processing apparatus 120. Such information is set for each copy unit (MCU) as a copy process unit.

For example, even for a same content A, a copy unit is set according to a copy destination medium. In other words, a copy unit 0001 of the content A for a hard disk and a copy unit 0002 of the content A for a flash memory are set.

In addition, in the server response information (Offer List) 131 illustrated in Fig. 7, information similar to the information recorded in the copy control management file (MCMF) 111 recorded in the first medium 110, which has been described with reference to Fig. 5, is included. In other words, the information is "(3) Copy data information (File name to be copied) (= dealManifest)" described above. As such information, a copy process is performed with high priority for the information received from the management server 140. The reason for this is that there is a possibility that the information received from the management server 140 is sequentially updated.

The description of the copy process sequence of contents according to the server management will be continued with reference back to Fig. 4. The management server 140, in step S12, performs a verification process of the justifiability and the like of reception information such as a content ID received from the information processing apparatus 120 and, in a case where it is checked that there is no problem, generates server response information (Offer List) 131 and transmits the generated server response information 131 to the information processing apparatus 120.

In addition, as described above, while various kinds of additional information are included in the server response information (Offer List) 131 in addition to the basic information illustrated in Fig. 7, this will be described in a later stage.

The information processing apparatus 120 that has received the server response information (Offer List) 131 displays a list (copy allowing list 131) of copy allowed contents in the display unit of the information processing apparatus 120 by applying the response information (Offer List) 131 received from the management server 140. In this list, for example, a price and the like of a case where copy of each content is performed are set.

In step S13, a user performs content selection for designating a content that is a copy target and the like from a copy allowed content list. In addition, in step S14, the information processing apparatus 120 performs a settling process accompanying a copy process for the management server 140. More specifically, a process of transmitting settlement data 132 and the like are performed between the information processing apparatus 120 and the management server 140. In addition, a server performing the settling process may be a settling server other than the management server. Furthermore, in a case where copy of a content for which the copy process is set to be free of charge, the settling process may be omitted.

After the completion of the settling process performed as is necessary, in step S15, the information processing apparatus 120 transmits a copy permission information request to the management server 140. The management server 140, in step S16, checks that settling is performed according to the copy permission information request from the information processing apparatus 120, generates copy permission information 122, and transmits the generated copy permission information 122 to the information processing apparatus 120.

The information processing apparatus 120 performs a content copy process in step S17 with conditioned on the reception of the copy permission information 122 from the management server 140. In other words, the encrypted content 113 is read from the first medium 110, data that is a copy target is selected, a decoding process is performed, and data copy for the second medium 150 configured by a hard disk (HDD), a flash memory, an R/RE disc, or the like that is a copy destination is performed.

In addition, the content copy process, for example, is performed in the following sequence.

(1) an encrypted content is read from the first medium 110 (copy source medium)
(2) a decoding process of the encrypted content using a first management system corresponding to the first medium 110 (copy source medium)
(3) an encryption process of a content using a second management system corresponding to the second medium 150 (copy destination medium)
(4) a recording process of the encrypted content for the second medium 150 (copy destination medium)

The process is performed in such a sequence.
In this way, in a case where an encrypted content is read from a disc and is copied to a medium such as another disc, a process is performed in which, first, the encrypted content that is a copy target is decoded, thereafter, re-encryption according to the standard of the copyright management system corresponding to the medium that is a copy destination is performed, and the content is recorded. By performing such a process, use control is performed also for the medium that is the copy destination, and unjust use and unjust distribution of a copy content can be prevented.

In addition, a content copyright management system relating to digital data is collectively referred to as a digital rights management (DRM) system. There are various types of media in which digital data can be recorded, and various DRM systems corresponding to the media are employed. In a case where digital data is copied between media employing mutually different DRM systems, copy is performed after changing from a DRM system employed by the copy source medium to a DRM system employed by the copy destination medium. By employing such a configuration, unjust use and unjust distribution of a copy content can be prevented.

In such a case, in a case where the management system (referred to as a first DRM) of a copy source and the content management system (referred to as a second DRM) of a copy destination are different from each other, similarly to the sequence of (1) to (4) described above, it is necessary to decode an encrypted content of the copy source once, perform a process according to the management system (second DRM) of the copy destination, for example, re-encryption of the content using another encryption key, and record the re-encrypted content.

In a case where the first management system is a system according to the AACS regulation, the decoding process of the encrypted content according to the first management system of (2) described above is performed as a decoding process in units of CPS units applying a CPS unit key.

In addition, a second management system supporting the copy destination medium (the second medium 150) may be a management system according to the AACS or may be assumed to be a management system corresponding to various regulations according to media such as CPRM, MagicGate, or VCPS.

[4. Data Recording Format of Medium Recording Data]

In a case where a copy process is performed between media, in a case where a copy source and a copy destination have mutually-different data recording formats, it is necessary to perform a format conversion when the copy process is performed.

An example will be described in which data recorded in a first medium (copy source medium (copy source information recording medium)) 10 such as a Blu-ray (registered trademark) disc (BD) is copied to a second medium (copy destination medium (copy destination information recording medium)) 30, for example, a flash memory or the like.

Before a data copy process accompanying a data conversion is described, first, an example of formats of media recording data will be described.

An example of a case where the first medium 10 that is a copy source medium has a data recording configuration according to a BDMV format, and the second medium 30 that is a copy destination medium has a data recording configuration according to an MP4 format will be described.

First, each of such formats will be described.

[4-1. BDMV Format and MPEG-2 TS Format]

The BDMV (Blu-ray (registered trademark) disc movie) format that is a data recording format of a BD and the MPEG-2 TS format will be described.

The BDMV format is as described above with reference to Fig. 3. Fig. 3 is a diagram that illustrates the directories of recording data according to the BDMV format recorded in an information recording medium 10 that is a ROM-type Blu-ray (registered trademark) disc (BD).

The directories, as described with reference to Fig. 3, are partitioned into a management information setting unit 51 (AACS directory) and a data section 52 (BDMV directory) .

In the management information setting unit 51 (AACS directory), a CPS unit key file that is an encrypted key of data, a user control information file, and the like are stored.

Meanwhile, in the data section 52, under the BDMV directory, for example, files such as

an index file,
a play list file,
a clip information file,
a clip AV stream file, and
a BDJO file
are recorded.

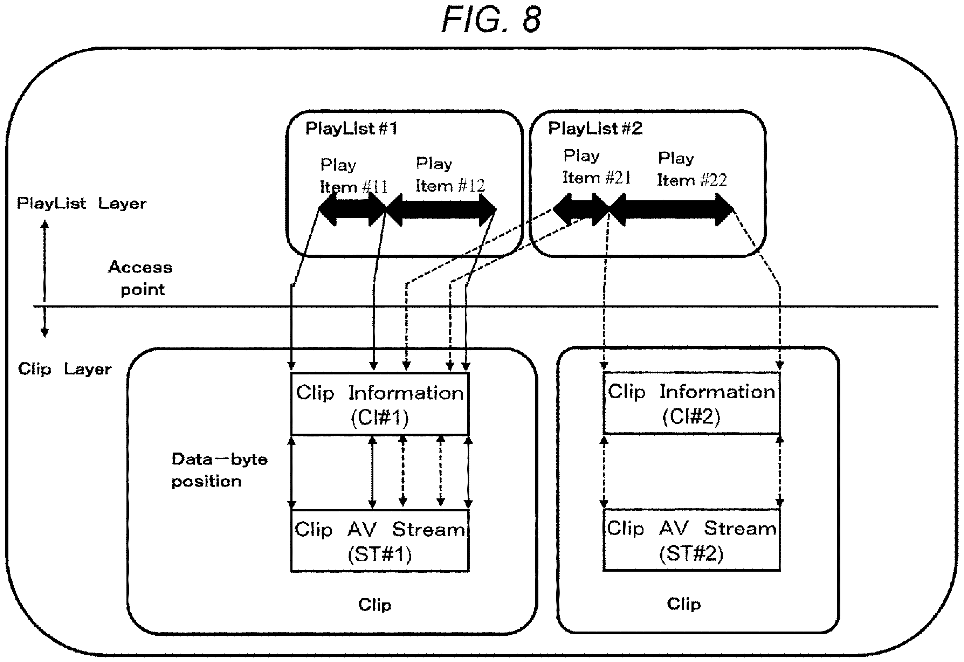

Fig. 8 is a diagram that illustrates a correspondence relation among the following data recorded in the first medium 10, that is,

a play list file,
a clip information file, and
a clip AV stream file.

An AV stream formed by video data and audio data that are actual reproduction target data is recorded as a clip AV stream (Clip AV Stream) file, management information of such an AV stream, and a play list (PlayList) file and a clip information (Clip Information) file are defined as reproduction control information files.

Such files of a plurality of categories, as illustrated in Fig. 8, can be divided into two layers including

a play list layer (PlayList Layer) including a play list (PlayList) file and
a clip layer (Clip Layer) formed by a clip AV stream (Clip AV Stream) file and a clip information (Clip Information) file.

In addition, one clip information (Clip Information) file is associated with one clip AV stream (Clip AV Stream) file, and such a pair may be regarded as one object, and these altogether may be also called a clip (Clip).

Detailed information of data included in the clip AV stream file, for example, management information such as an EP map in which the positional information of I pictures of MPEG data and the like are recorded is recorded in the clip information file.

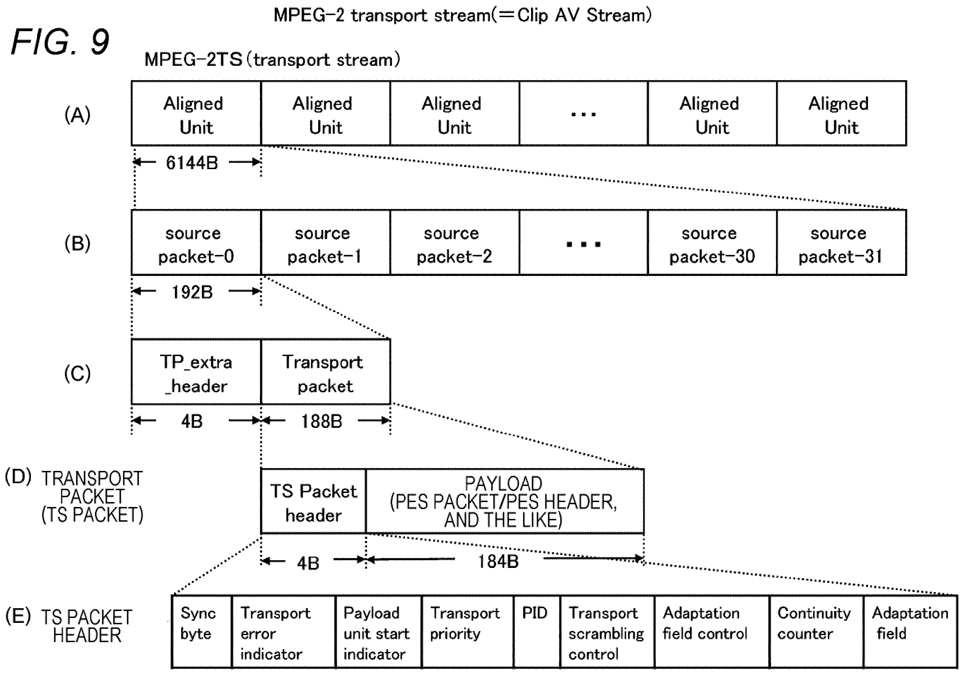

In the clip AV stream (Clip AV Stream) file, data in which an MPEG-2 TS (transport stream) is arranged according to the structure defined in the BDMV format is stored. Details of this configuration will be described in a later stage with reference to Fig. 9.

In addition, in the clip information (Clip Information) file, for example, management information used for acquiring a data position of byte sequence data of a clip AV stream file, corresponding data of a reproduction time position and the like such as (an entry point (EP)) that is a reproduction start point in the case of being expanded on the time axis, and a reproduction start position of input data of the clip AV stream file, and the like is stored.

For example, when a time stamp representing a reproduction time elapsed position from the start point of a content is given, a data reading position of a clip AV stream file, in other words, an address as a reproduction start point can be acquired by referring to the clip information file.

The play list (PlayList) file includes designation information of a reproduction section for reproducible data included in the clip (= clip information file + clip AV stream file) layer.

In the play list (PlayList) file, one or more play items (PlayItem) are set, and each of the play items includes designation information of a reproduction section for reproducible data included in the clip (= clip information file + clip AV stream file) layer.

The clip AV stream (Clip AV Stream) file in which actual data of a video and an audio that are reproduction targets is stored has an MPEG-2 transport stream (TS) file structure, for example, as illustrated in Fig. 9.

The MPEG-2 TS format is a format defining a data storage format (container format) in which coded data that is a content configuration data such as a video (Video), an audio (Audio), a subtitle (Subtitle), and the like is recorded in a recording medium or coded data at the time of transmitting the data through a broadcast wave or a network is stored.

The MPEG-2 TS format is a format standardized in ISO13818-1 and, for example, is used for data recording for aBlu-ray (registered trademark) disc (BD), digital broadcast, and the like.

In addition, as a data recording format mainly for a flash memory, the MP4 format is used. The MP4 format is a format defined in ISO/IECC14496-14 and is a format that is appropriate, for example, in a case where data recording is performed for a flash memory or the like that is frequently used in a smartphone and the like.

Recently, most of used mobile terminals have reproduction applications capable of reproducing MP4 data recorded according to the MP4 format and, in a case where a content is recorded in a medium of a mobile terminal, there are many cases where the content is requested to be recorded in the MP4 format.

An overview of the MP4 format will be described later.

A Blu-ray (registered trademark) disc movie (BDMV) format that is a data recording format for the BD described above is a format that is dedicately used for a BD having coded data of a video, an audio, and the like stored according to the MPEG-2 TS format as its constituent elements.

In addition, coded data of a video, an audio, and a still image that is allowed to be stored according to the MPEG-2 TS format is, for example, the following coded data.

> Video: MPEG-1, MPEG-2, AVC (MPEG-4 AVC), or HEVC (MPEG-4 HEVC)
> Audio: MP1, MP2, MP3, linear PCM, or DTS
> Still Image: JPEG

For example, each coded data described above is stored in transport stream (TS) packets defined in the MPEG-2 TS in a distributed manner.

The MPEG-2 TS format used for a BD or broadcast will be described with reference to Fig. 9.

As illustrated in Fig. 9, the MPEG-2 TS format has the following characteristics.

As illustrated in Fig. 9(A), an MPEG-2 TS file is configured by aligned units of an integer number.

The size of each aligned unit is 6 kB (= 6144 bytes (2048 × 3 bytes).

The aligned unit is started from a first byte of a source packet.

As illustrated in Fig. 9(B), the source packet has a 192-byte length.

As illustrated in Fig. 9 (C), one source packet is formed by TP_extra_header and a TS packet. TP_extra_header has a four-byte length, and the TS packet has a 188-byte length.

As illustrated in Fig. 9(D), the TS packet includes a header (TP header) and a payload section. In the payload of one TS packet, coded data of one type of data such as a video, an audio or the like or control information such as attribute information is stored.

As illustrated in Fig. 9(E), in a header (TP header) of the TS packet, a program ID (PID) as a packet identifier representing the data type of a payload is recorded.

In the payload of the TS packet, a packet (packetized elementary stream (PES)) in which an elementary stream (ES) that is coded data of a video, an audio, or the like is stored, a PES header in which reproduction time information and the like are stored, attribute information corresponding to a content, control information, and the like are stored.

The attribute information and the control information stored in the payload of the TS packet are, more specifically, for example, information called program specific information (PSI/SI) .

In the PSI/SI, for example, a program map table (PMT) is included.

The program map table (PMT) includes a map as a PID that is a packet identifier of a TS packet and corresponding information of a data type. An information processing apparatus performing a process for a TS packet, first, checks a PID corresponding to each data of a video, an audio, a subtitle, and the other control information (attribute information) by referring to the PMT, separates each received packet on the basis of the checked PID corresponding to a data type for each data type, and performs a process corresponding to each data type.

In addition, as illustrated in Fig. 9(E), in the header information of a TS packet, each data described below is stored.

> (a) Synchronization byte (Sync byte)
> (b)          Transport          error          identifier (Transport_error_indicator)
> (c)          Payload          unit          start          identifier (Payload_unit_start_indicator)
> (d) Transport priority (Transport_priority)
> (e) Program ID (PID)
> (f) Transport scrambling control
> (g) Adaptation field control
> (h) Continuity counter
> (i) Adaptation field

[4-2. MP4 Format]

Next, for example, the MP4 format that is a format appropriate for a case where data recording is performed for a flash memory or the like frequently used in a smartphone or the like will be described.

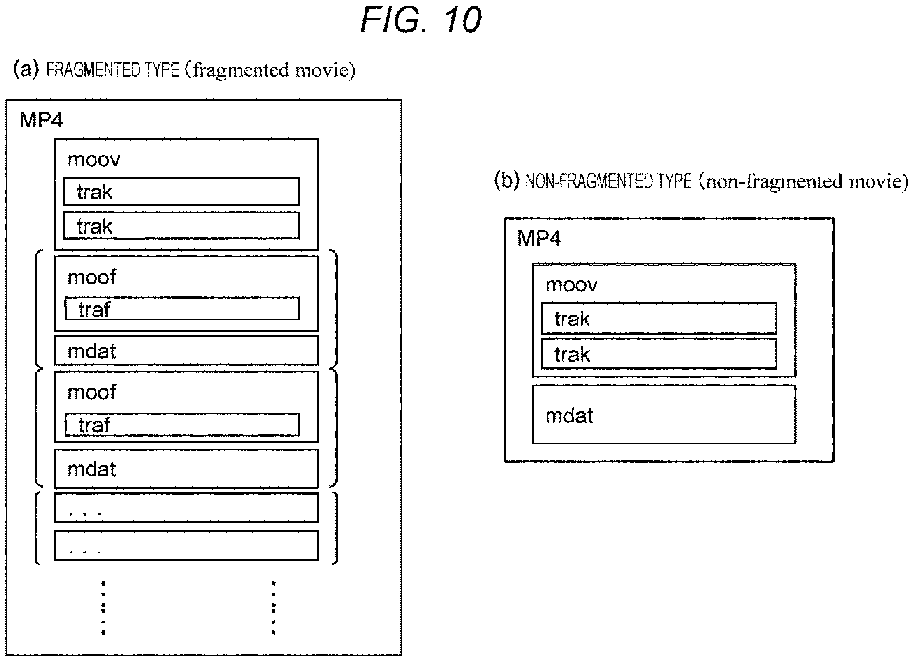

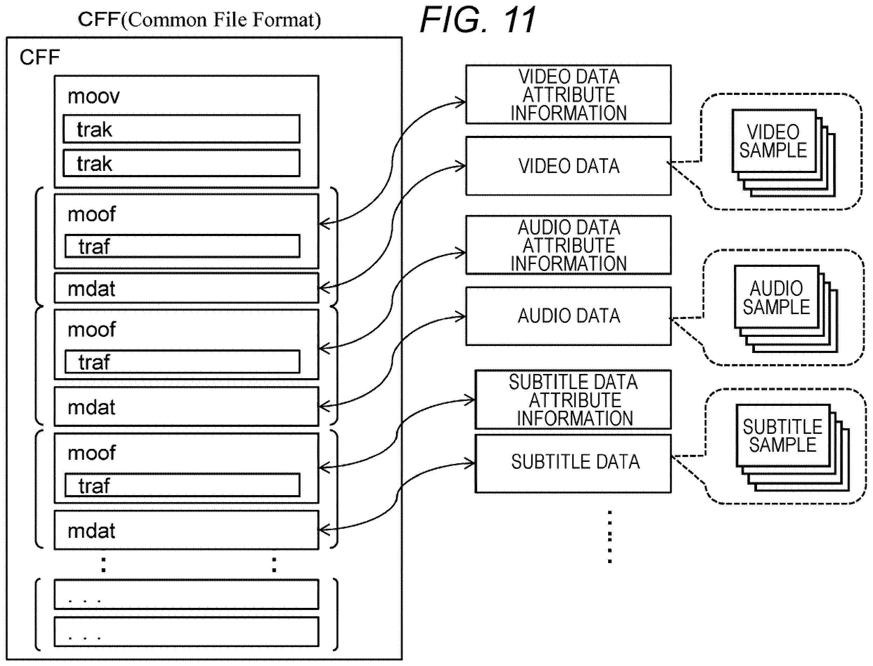

An overview of the MP4 format will be described with reference to Figs. 10 and 11.

Fig. 10 illustrates the following two examples as examples of the MP4 format defined in ISO/IEC14496-14.

> (a) Fragmented (fragmented type) MP4 file (fragmented movie)
> (b) Non-fragmented (non-fragmented type) MP4 file (Non-fragmented movie)

Each of the MP4 files illustrated in Figs. 10(a) and 10(b) is a file set as one processing unit in the process of recording or reproducing data according to the MP4 format.

> (a) The fragmented (fragmented type) MP4 file (fragmented movie) is in a file format in which data of a video, an audio, or the like that is reproduction target data is divided and stored for each reproduction data within a predetermined time.

(b) The non-fragmented (non-fragmented type) MP4 file (non-fragmented movie) is in a file format in which data of a video, an audio, or the like that is reproduction target data is stored without being divided.

In the MP4 file, areas are set in units of boxes, and, in each box, data defined in a unit of a box is stored.

Each box includes areas of a box size (box-size), a box type (box-type), and box data (box-data).

In the box size (box-size), a data length (byte size) of a box is recorded.

In the box type (box-type), the type of data stored in the box is recorded.

In the box data (box-data), data of a type represented in the box type is recorded.

In the fragmented (fragmented type) MP4 file illustrated in Fig. 10(a), boxes of the following types are set.

Boxes of

a moov box,
a trak box,
a moof box,
a traf box, and
an mdat box
are set.

Actual data that is reproduction target data of a video, an audio, a subtitle, or the like is divided and stored in the mdat box.

In addition, a moof box is associated with each mdat box, and, in each moof box, metadata such as attribute information relating to divided actual data stored in an mdat box associated with the moof box, reproduction control information and the like is stored.

The fragmented (fragmented type) MP4 file illustrated in Fig. 10 (a) has a configuration in which actual data (mdat) that is division data of reproduction target data and metadata (moof) corresponding to the division actual data are set as data of one set, data of a plurality of sets is stored, and metadata relating to all the stored data of the plurality of sets is stored in a moov box.

Inside the metadata (moof) corresponding to the division actual data, a traf box is set.

In the traf box, reproduction sequence information and the like of associated actual data (mdat) are stored.

The moov box is a box that is set as a storage area of metadata such as reproduction control information and the like of data stored in all the MP4 files.

Inside the moov box, one or more trak boxes are set. The trak boxes, for example, can be set for each of data types such as a video, an audio, a subtitle, and the like and stores the reproduction sequence information and the like of each data.

In addition, in a case where a plurality of different types of image data, for example, an HD image, a 4K image, and the like are included in reproduction data stored in an MP4 file, individual trak boxes can be set according to such image types.

Furthermore, in a case where a plurality of different types of audio data, for example, a Japanese audio, an English audio, and the like are included in stored audio data of an MP4 file, individual trak boxes can be set according to such audio types.

Similarly, in a case where a plurality of different types of subtitle data, for example, a Japanese subtitle, an English subtitle, and the like are included in stored subtitle data of an MP4 file, individual trak boxes can be set according to such subtitle types.

(b) Non-fragmented (non-fragmented type) MP4 file (non-fragmented movie) is in a file format in which data of an image, an audio, and the like that is reproduction target data is stored without being fragmented.

In the non-fragmented (non-fragmented) MP4 file illustrated in Fig. 10(b), boxes of the following types are set.

Boxes of

a moov box,
a trak box, and
an mdat box
are set.

In the mdat box, actual data that is a reproduction target is stored.

In the moov box, metadata set in correspondence with actual data (mdat) that is reproduction target data, for example, metadata including attributes and reproduction control information of reproduction target actual data (mdat) is stored.

In a trak box set inside the moov box, reproduction sequence information and the like of the actual data (mdat) are stored.

Similarly to " (a) fragmented (fragmented type) MP4 file" described above, also inside the moov box set in (b) the non-fragmented (non-fragmented type) MP4 file, one or more trak boxes are set. The trak boxes, for example, are respectively set for data types such as a video, an audio, a subtitle, and the like.

Fig. 10 illustrates an example of the basic configuration of the MP4 format.

A digital entertainment content ecoststem (DECE) that is a standardization organization relating to the MP4 format standardizes a common file format (CFF) as a new file format based on the MP4. The CFF will be described with reference to Fig. 11.

The common file format (CFF) illustrated in Fig. 11, basically, has the data configuration similar to that of the fragmented type (fragmented movie) MP4 described with reference to Fig. 10(a).

In other words, in a common file format (CFF) file illustrated in Fig. 11, similarly to the fragmented (fragmented type) MP4 file described above with reference to Fig. 10 (a), the following boxes are set.

Boxes of

a moov box,
a trak box,
a moof box,
a traf box, and
an mdat box
are set.

Input data of each of the boxes is almost similar to as that of the fragmented (fragmented type) MP4 file illustrated in Fig. 10(a).

However, in the CFF, there is a restriction that only one type of data is stored in each mdat box.

In other words, in each mdat box, one type of data of

(a) video,
(b) audio, and
(c) subtitle

is stored. There is a restriction that data of (a), data of (b), and data of (c) described above need not to be mixed.

In addition, in a case where a plurality of different types of image data, for example, an HD image, a 4K image, and the like are included in the CFF file, such different images are stored in different mdat boxes.

Similarly, different types of audio data, for example, a Japanese audio, an English audio, and the like are stored in individual mdat boxes, and a Japanese subtitle, an English subtitle, and the like are stored in different mdat boxes.

In addition, in a general fragmented (fragmented type) MP4 file illustrated in Fig. 10(a), in an mdat box set as a storage box of one fragmented data (fragment), it is allowed to store different types of data such as a video, an audio, a subtitle, and the like in a mixed manner.

However, in the common file format (CFF) illustrated in Fig. 11, there is a restriction that only one type of data needs to be stored in one mdat box.

In other words, only one type of data of a video, an audio, and a subtitle is individually stored in each mdat box.

Accordingly, also in the moof box that is a metadata storage area corresponding to the mdat box, metadata set in correspondence with one type of data of a video, an audio, and a subtitle is set to be stored.

In addition, input data of the mdat box that is a data section of the MP4 format is divided into samples as basic data units.

In the common file format (CFF), in one mdat box, a set of data samples of a same type of one of a set of only image samples, a set of audio samples, and a set of subtitle samples is stored.

In addition, in the CFF defined by the DECE, the coding form (codec) and the data form of a video, an audio, and a subtitle allowed to be stored in the CFF file are also defined.

As data formats allowed to be stored in the CFF file, for example, there are the following data formats.

Video: AVC (MPEG-4 AVC), HEVC (MPEG-4 HEVC)
Audio: MPEG-4-AAC, Dolby, AC-3
Subtitle (subtitle): SMPTE Timed Text (SMPTE-TT)

[5. Type of Video Data Recorded according to BDMV Format]

Next, the type of video data recorded according to the BDMV format will be described.

On most of discs for which current content recording has been completed, for example, most of media such as a BD-ROM and the like that are recording media of movie contents and the like, high definition (HD) images that are high-image quality images are recorded.

On most of the current BD-ROMs, mainly HD images, that is, 2K images corresponding to a so-called high vision are recorded. However, from now on, new implementation of high image quality progresses, and it is expected that the number of media on which 4K images that are ultra-high definition (UHD) images are recorded increases.

The data recording form of an ultra-high definition image (UHD image) for a BD is currently in the middle of being standardized by Blu-ray (registered trademark) Disc Association (BDA) that is a standard establishment organization.

BDA is also in the middle of establishing standardization taking not only support for a 4K image but support for a high dynamic range (HDR) image acquired by extending the color gamut or the contrast ratio of an image output to a display into consideration.

The HDR image, compared to a standard dynamic range (SDR) image that is widely used in current 2K-supporting display, has a wider representable color gamut, has a higher settable contrast ratio, and can perform image representation closer to the reality seen through naked eyes.

For example, in a BD, one of an HDR video and an SDR video or both the videos are recorded together, and video information relating to a recorded video is also recorded together.

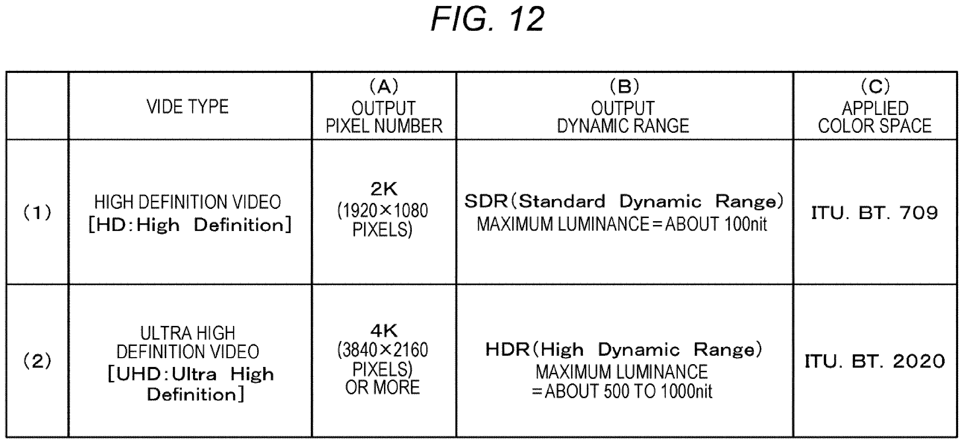

An example of video data recorded in a BD will be described with reference to Fig. 12.

Fig. 12 is a diagram that illustrates an example of video data (video elementary stream) recorded in a BD in accordance with the BDMV format.

Fig. 12 illustrates the following two video examples as below.

(1) High definition (HD) video
(2) Ultra high definition (UHD) video

In a BD, for example, video data illustrated in (1) and (2) is recorded.

While there are various definitions of a high definition video and an ultra high definition video, and there is no clear regulation thereof, generally, the high definition video and the ultra high definition video are videos, for example, having different values and settings of (A) Number of output pixels, (B) Output dynamic range, and (C) Applied color space.

As a specific example, the settings of (A) Number of output pixels, (B) Output dynamic range, and (C) Applied color space are the following settings.

(A) Number of output pixels :2K (1920 × 1080 pixels) for a high definition video (HD) and 4K (3840 × 2160 pixels) for an ultra high definition video (UHD)
(B) Output dynamic range: a standard dynamic range (SDR), for example, having maximum luminance of about 100 nit for a high definition video (HD) and a high dynamic range (HDR), for example, having a maximum luminance of about 500 to 1000 nit for an ultra high definition video (UHD)
(C) Applied color space: ITU.BT.709 for a high definition video (HD) and ITU.BT.2020 for an ultra high definition video (UHD)

A high definition video and an ultra high definition video, as described above, are, for example, videos having different values and settings of (A) Number of output pixels, (B) Output dynamic range, and (C) Applied color space.

In addition, the values and the settings of (A) Number of output pixels, (B) Output dynamic range, and (C) Applied color space relating to the high definition image and the ultra high definition image described with reference to Fig. 12 are examples.

For example, a 4K video of SDR other than HDR may be also referred to as an ultra high definition video.

In addition, an HDR video of 2K may be also referred to as an ultra high definition video.

There is no clear definition of an ultra high definition video, and a video having at least one of the settings of (A) Number of output pixels, (B) Output dynamic range, and (C) Applied color space to be above that of the current high definition video is frequently referred to as an ultra high definition video.

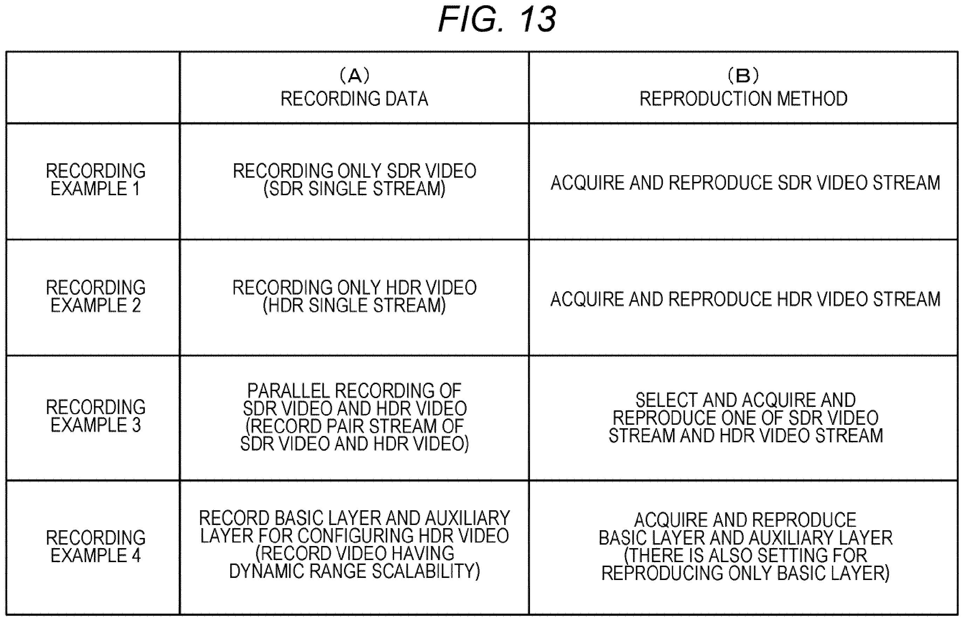

Next, the types of specific recording examples of video data for a BD will be described with reference to Fig. 13.

Fig. 13 illustrates the following four video data recording examples.

(Recording Example 1) Recording of only SDR video (SDR single stream recording)
(Recording Example 2) Recording of only HDR video (HDR single stream recording)
(Recording Example 3) Parallel recording of SDR video and HDR video (pair stream recording of SDR video and HDR video)
(Recording Example 4) Recording of basic layer and auxiliary layer for configuring HDR video (Recording of video having dynamic range scalability)

(Recording Example 1) Recording of only SDR video (SDR single stream recording)

(Recording Example 2) Recording of only HDR video (HDR single stream recording)

These (Recording Example 1) and (Recording Example 2) are examples in which only an SDR video or only an HDR video is recorded in a BD. At the time of reproduction, one recorded video data is read and reproduced.

(Recording Example 3) Parallel recording of SDR video and HDR video (pair stream recording of SDR video and HDR video)

This recording example is an example in which an SDR video and an HDR video are recorded in a BD in parallel for a same content.

For example, a reproduction apparatus capable of reproducing only an SDR video can select and reproduce the SDR video, and a reproduction apparatus capable of reproducing an HDR video can select and reproduce the HDR video.

In this way, a configuration in which an SDR video stream and an HDR video stream are recorded in parallel for a same content is called a pair stream.

(Recording Example 4) Recording of basic layer and auxiliary layer for configuring HDR video (Recording of video having dynamic range scalability)

This recording example is a video recording example in which a process of reproducing an HDR video of a high image quality type can be performed by performing reproduction using both the basic layer and the auxiliary layer.

There are a type capable of performing video reproduction of a low image quality type also by using only the basic layer without using the auxiliary layer and a type incapable of performing reproduction of only the basic layer.

An example of data corresponding to Recording Example 4 will be described.

As an example of a specific layer set of two layers corresponding to coded data generated in a case where scalable coding is performed, in other words, the basic layer and the auxiliary layer, for example, there are layer set examples as below.

(Layer Set Example a)

Basic layer = coded video data having a 10-bit depth
Auxiliary layer = auxiliary data used for extending to a 12-bit depth

(Layer Set Example b)

Basic layer = SDR video coded data
Auxiliary layer = auxiliary data used for generating an HDR video

For example, there is a combination of such layer sets.

As illustrated in Fig. 13, in a case where data copy is performed from a medium in which various different kinds of data are recorded, in order for the copy management configuration described above, in other words, the information processing apparatus 120 illustrated in Fig. 4 to receive server response information 131 that is copy permission information from the copy management server 140 and copy only copy allowed data, it is necessary to assuredly record which data is copy allowed data in the server response information 131.

Details of this copy management process will be described in a later stage.

[6. Data Copy Process between Media Accompanying Format Conversion]

Hereinafter, for example, a process of converting BDMV format data recorded in a first medium 10 such as a Blu-ray (registered trademark) disc (BD) into a format other than the BDMV format, for example, an MP4 format and copying the converted data to a second medium such as a flash memory will be described.

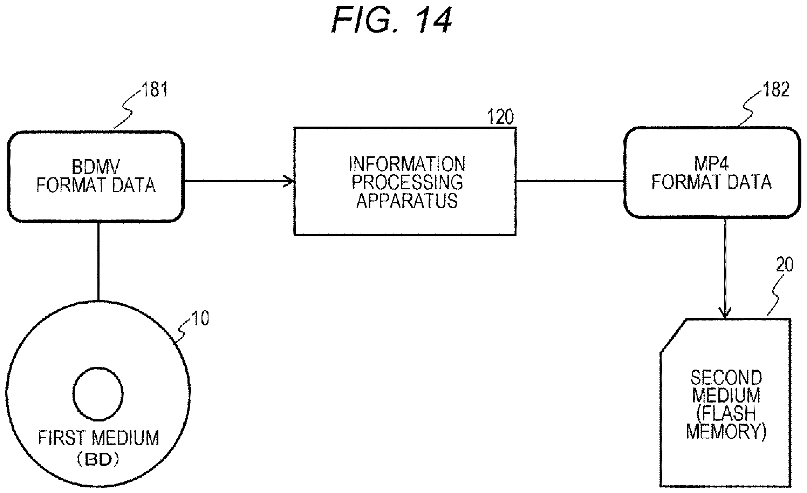

A configuration example in which BDMV format data is read from a Blu-ray (registered trademark) disc (BD), the read BDMV format data is converted into MP4 format data, and data recording (copying) is performed for a second medium such as a flash memory will be described with reference to Fig. 14.

An information processing apparatus 120 illustrated in Fig. 14 reads BDMV format data from a first medium (BD) 10, converts the read data into MP4 format data, and records the converted MP4 format data in a second medium (flash memory) 30.

When this data conversion process is performed, the information processing apparatus 120 reads BDMV format data 181 including an MPEG-2 TS file in which reproduction target data such as a video, an audio, a subtitle, and the like are stored, in other words, a transport stream (TS) file generated according to the MPEG-2 TS format described with reference to Fig. 9, and the like from the first medium (BD) 10.

In addition, MP4 format data 182 is generated by performing a format conversion based on the read BDMV format data 181, and the generated MP4 format data 182 is recorded in the second medium (flash memory) 30.

In this format conversion process, the information processing apparatus 120 needs to select only video data of which copy is allowed from video data, for example, stored in the transport stream (TS) file 51 and copy the selected video data.

Information of data for which a copy process is allowed is recorded in server response information (Offer Response) received from the management server 140 in the sequence described above with reference to Fig. 4.

First, as described with reference to Figs. 12 and 13, as video data recorded in a BD, there are various types, and only data allowed to be copied needs to be selected from among such video data and be copied.

A specific content of copy limiting information recorded in the server response information (Offer Response) will be described in detail in the next item.

[7. Specific Example and Display Example of Server Response Information (Offer Response) Provided by Management Server]

Next, a specific example and a display example of the server response information (Offer Response) provided by the management server will be described.

First, as described with reference to Fig. 4 and other drawings, the management server 140 generates server response information (Offer Response) 131 in accordance with a copy execution request from the information processing apparatus 120 and provides the generated server response information 131 for the information processing apparatus 120.

The server response information (Offer Response) 131 is information that includes

(A) the basic information described with reference to Fig. 7 and
(B) the additional information illustrated in Fig. 15.

The information processing apparatus 120 receives the server response information (Offer Response) 131 including (A) the basic information and (B) the additional information and displays a list of contents allowed to be copied and detailed information of the contents on the display unit of the information processing apparatus 120. A user can determine a content to be copied in accordance with the display information.

As described with reference to Figs. 4 and 7, the management server 140 generates server response information (Offer Response) 131 as a response to the copy execution request (Offer Request) from the information processing apparatus 120 performing a copy process of a content and provides the generated server response information 131 for the information processing apparatus 120.

In this server response information (Offer Response) 131, the basic information described with reference to Fig. 7 is included. In addition, the management server 140 generates server response information (Offer Response) 131 including the additional information illustrated in Fig. 15 in addition to the basic information illustrated in Fig. 7 and provides the generated server response information 131 for the information processing apparatus 120.

The additional information illustrated in Fig. 15 will be described. In the additional information, the following information is included.

(1) First copy limiting information

(1a) Region limiting information (region)
(1b) Age limiting information (age)
(1c) Three dimensional video (3D) limiting information
(1d) Dynamic range scalability limiting information

(2) Second copy limiting information
Selection limiting information (selection)

(2a) Audio (audio)
(2b) Subtitle (subtitle)
(2c) Angle (angle) + angle information (angleInfo)
(2d) Pair stream limiting information

(3) Play list sequence information

In addition, such information is set as information corresponding to a copy unit (MCU) set as a copy unit.

Such information will be described.

(5-1. Region limiting information (region))

The region limiting information (region) is limiting information relating to a region (for example, a country, a set of countries, or the like) for which copy is allowed. For example, the regions of the world are divided into A, B, C, ... in advance, and the information is information representing that copy is allowed only for information processing apparatuses of the regions A and B.

The information processing apparatus 120 performing a copy process compares the region limiting information (region) received from the management server 140 with a region code (Region Code) or a language code (Language Code) stored in a memory disposed inside the information processing apparatus 120. The information processing apparatus 120 determines whether or not the code stored in the information processing apparatus 120 is a code of a region for which copy is allowed in the region limiting information (region) received from the management server 140. The information processing apparatus 120 performs a copy process only in a case where the code stored in the information processing apparatus 120 is determined to correspond to a copy allowed region but does not perform a copy process in a case where the code stored in the information processing apparatus is determined not to correspond to a copy allowed region.

In addition, in the information processing apparatus 120, a nonvolatile memory in which a region code representing a selling region (Region Code) or a language code (Language Code) representing a used language is stored in advance in accordance with the selling region (for example, a country or the like) is loaded.

Furthermore, the information processing apparatus 120, for example, may perform a process of recording an attribute file in which the additional information illustrated in Fig. 15 is stored also for a copy destination medium. By performing this attribute file recording process, when copy content reproduction from the copy destination medium is performed, content reproduction limiting using various kinds of information recorded in the attribute file can be performed. In other words, content reproduction limiting can be performed according to a region limiting information (region).

In addition, in a case where a reproduction apparatus reproducing copy data from the copy destination medium is set to perform content reproduction control using various kinds of information recorded in the attribute file, a configuration may be employed in which, whether or not a copy process is performed in accordance with the region limiting information (region) described above is not determined, all the content copy is allowed and performed, and content reproduction limiting using the region limiting information (region) recorded in the attribute file is performed at the time of reproduction.

In addition, in the information processing apparatus 120, programs applied to a copy execution/no-execution determining process based on the region limiting information (region) at the time of performing a copy process, a copy process accompanying attribute file recording, a reproduction process of a copy content, and the like are provided in advance.

When a copy process is performed, at the time of reproducing a copy content, processes according to such programs are performed. In addition, various settings such as a configuration in which such programs are recorded in a nonvolatile memory of the information processing apparatus 120 in advance, a configuration in which such programs are provided from the first medium 110, a configuration in which such programs are provided from the management server 140, and the like may be performed.

(5-2. Age Limiting Information (age))

The age limiting information (age) is information used for limiting the age allowed for copy (for example, 13 years old or more, 18 years old or more, or the like). For example, movie contents including violent scenes and the like can be used with being allowed to be copied only for users of 13 years old or more.

In addition, the information processing apparatus 120 is an apparatus in which the age limiting information can be set in an internal memory in advance. For example, a parental rock function that is conventionally known may be used. The parental lock provides a function of comparing age limiting information recorded as management information of a content with age limiting information set in a memory disposed inside the information processing apparatus 120 at the time of reproducing the content and not performing the reproduction of the content in a case where the age limiting information set in the memory disposed inside the information processing apparatus 120 is less than an age limit recorded as the attribute information of the content.

However, this function is operated in a case where, when a content recorded in a disc is reproduced, management information recorded in the disc is read, and a process of comparing the read management information with the parental lock setting information set in the information processing apparatus 120 is performed. In other words, the function is effectively operated when a content is reproduced from a ROM medium in which management information and a content are recorded together.

However, when a copy process of a content according to the BDMV format data is performed, mainly, only a play list file to an AV stream file are selected and copied. Accordingly, even in an apparatus having a parental lock function, the setting of the parental lock of the information processing apparatus 120 is ignored at the time of performing a copy process, and, even a child can copy all the contents. In addition, in a case where a content of a copy destination is reproduced, the age limiting information is not present in the copy destination, and accordingly, reproduction ignoring the age limit can be performed as well.

In the configuration of the present disclosure, in order to prevent such a situation, the process of determining execution/no-execution of copy based on the age limiting information (age) received from the management server 140 as an execution condition of a copy process is performed.

In other words, the information processing apparatus 120 performing a copy process compares the age limiting information (age) received from the management server 140 with the age limiting information (age) (for example, parental lock setting information) stored in the memory disposed inside the information processing apparatus 120. The information processing apparatus 120 performs a copy process only in a case where the copy allowing age setting of the information processing apparatus 120 is determined to be an age allowing copy in the age limiting information (age) received from the management server 140. In a case where the setting of the information processing apparatus is determined not to be an age allowing copy in the age limiting information (age), a copy process is not performed.

In addition, it may be set to generate an attribute file storing the additional information illustrated in Fig. 15 and record the generated attribute file in a copy destination medium. According to this process, when a copy content from a copy destination medium is reproduced, content reproduction limiting using the age limiting information recorded in the attribute file can be performed.

In addition, in a case where the copy destination medium is set to be able to perform content reproduction limiting using various kinds of information recorded in the attribute file, it may be configured such that the execution/no-execution of a copy process according to the age limiting information (age) is not determined, a copy process is performed with all content copy allowed, and content reproduction limiting using the age limiting information (age) recorded in the attribute file is performed at the time of reproduction.

Programs applied to the copy execution/no-execution determining process at the time of performing such a copy process, a copy process accompanying attribute file recording, a reproduction process of a copy content, and the like are provided for the information processing apparatus 120 in advance.

(5-3. Three-dimensional Video (3D) Limiting Information)

The three-dimensional video (3D) limiting information is copy limiting information of a case where three-dimensional video (3D) data is included in a copy target content. More specifically, three pieces of limiting information of

(p1) prohibition of 3D to 2D conversion copy,
(p2) allowing of 3D to 2D conversion copy but prohibition of 2D reproduction, and
(p3) allowing of 3D to 2D conversion copy and allowing of 2D reproduction

are set according to a 3D content.

In addition, two pieces of limiting information of

(q1) allowing of conversion copy toward another 3D format and
(q2) prohibition of conversion copy toward another 3D format

are set according to a 3D content.

When the information processing apparatus 120 or the display apparatus connected to the information processing apparatus 120 is largely classified, two cases including

a case of being an apparatus capable of reproducing a three-dimensional video and
a case of being an apparatus capable of reproducing only a two-dimensional video
are considered.

In addition, in a case where the information processing apparatus 120 or the display apparatus connected to the information processing apparatus 120 is an apparatus capable of reproducing a three dimensional video, it is assumed that reproduction display according to a specific three-dimensional video format can be performed in most cases .

The three-dimensional video (3D) limiting information sets limiting information of a case where a three-dimensional video is copied in such various apparatuses.

For example, in a case where the information processing apparatus 120 or the display apparatus connected to the information processing apparatus 120 is an apparatus capable of reproducing only a two-dimensional video, in a case where a copy process is performed for a hard disk of the information processing apparatus 120, it is sufficient to copy a video as a 2D video.

However, there are cases where a content producer does not desire the reproduction as a 2D video to be performed by a user. In such cases, the settings of (p1) and (p2) described above are used. In other words, the settings of

    (p1) prohibition of 3D to 2D conversion copy and
    (p2) allowing of 3D to 2D conversion copy but prohibition of 2D reproduction

are used.

By using such a setting, it is possible to allow copy or reproduction of a content only as a 3D content.

In addition, as the three-dimensional video (3D) limiting information, the following setting can be used.

Two pieces of limiting information of

    (q1) allowing of conversion copy toward another 3D format and
    (q2) prohibition of conversion copy toward another 3D format

are set according to a 3D content.

As the formats of a 3D video, for example, as representative systems,

    a frame sequential system,
    a side by side system, and
    a top & bottom system
    are known.

The frame sequential system is a coding system of alternately recording/transmitting frames of a left-eye image (L image) and a right-eye image (R image) to be L, R, L, R, ....

The side by side system is a coding system of recording/transmitting LR images to be divided into a left part and a right part within one frame image.

The top & bottom system is a coding system of recording/transmitting LR images to be divided into upper and lower parts within one frame image.

Currently, such various systems are mixed and used.

Also in a case where the information processing apparatus 120 or the display apparatus connected to the information processing apparatus 120 is an apparatus capable of reproducing a three-dimensional video, it is assumed that reproduction display according to one of the three-dimensional video formats described above can be performed in most cases.

Accordingly, in a case where copy is performed, there are cases where it is necessary to perform a conversion into a format that can be reproduced by the information processing apparatus 120 or the display apparatus connected to the information processing apparatus 120. However, there are cases where the quality of the 3D video is degraded in a case where such a format conversion is performed. There are cases where a content producer does not want such quality degradation, and, in such cases, the setting of

    (q2) prohibition of conversion copy toward another 3D format
    is used.

When a copy process of a 3D content is performed, the information processing apparatus 120 performing a copy process refers to the three-dimensional video (3D) limiting information received from the management server 140, in other words,

    (p1) prohibition of 3D to 2D conversion copy,
    (p2) allowing of 3D to 2D conversion copy but prohibition of 2D reproduction,
    (p3) allowing of 3D to 2D conversion copy and allowing of 2D reproduction,
    (q1) allowing of conversion copy toward another 3D format, and
    (q2) prohibition of conversion copy toward another 3D format

and performs copy of a 3D content in accordance with such limiting information.

In addition, an attribute file storing the additional information illustrated in Fig. 15 may be generated and recorded in a copy destination medium. According to this process, when a copy content is reproduced from a copy destination medium, content reproduction limiting using the three-dimensional video (3D) limiting information recorded in the attribute file can be performed.

In addition, in a case where a reproduction apparatus reproducing copy data from a copy destination medium is set to be able to perform content reproduction limiting using various kinds of information recorded in the attribute file, a configuration may be employed in which the execution/no-execution of a copy process according to the three-dimensional video (3D) limiting information is not determined, a copy process is performed with all content copy allowed, and content reproduction limiting using the three-dimensional video (3D) limiting information recorded in the attribute file is performed at the time of reproduction.

Programs applied to the copy execution/no-execution determining process at the time of performing such a copy process, a copy process accompanying attribute file recording, a reproduction process of a copy content, and the like are provided in the information processing apparatus 120 in advance.

(5-4. Dynamic Range Scalability Limiting Information)

The dynamic range scalability limiting information is copy limiting information of a case where two layers including a basic layer and an auxiliary layer are included in a copy target content.

The specific setting of the dynamic range scalability limiting information is one of the following settings.

(r1) allowing copy of only basic layer
(r2) allowing copy of both basic layer and auxiliary layer
(r3) not allowing copy of stream having dynamic range scalability

The copy limiting information of one of these (r1) to (r3) is recorded.

In addition, the basic layer and the auxiliary layer are data layers corresponding to two pieces of data (the basic layer and the auxiliary layer) including coded data generated in a case where scalable coding is performed.

The basic layer and the auxiliary layer correspond to data corresponding to Recording Example 4 among the recording examples described above with reference to Fig. 13.

In a case where copy target data is coded data for which scalable coding is performed, and copy of scalable coded data is set to be allowed, one of (r1) and (r2) described above is set.

In a case where scalable coded data is not included or in a case where copy of a stream having dynamic range scalability is set not to be allowed, (r3) is set.

As specific examples of a layer set of two layers, in other words, the basic layer and the auxiliary layer, corresponding to coded data generated in a case where scalable coding is performed, as described above with reference to Fig. 13, for example, there are the following layer set examples.

(Layer Set Example a)

Basic layer = coded video data having a 10-bit depth
Auxiliary layer = auxiliary data used for extending to a 12-bit depth

(Layer Set Example b)

Basic layer = SDR video coded data
Auxiliary layer = auxiliary data used for generating HDR video

For example, there is a combination of such layer sets.

In addition, there are cases where video reproduction in the information processing apparatus 120 is performed using only the basic layer. In such cases, by using the basic layer and the auxiliary layer together, video reproduction of higher quality can be performed.

In the dynamic range scalability limiting information included in the server response information, one of (r1) to (r3) described above is designated by the management server 140.

When a copy process of a content is performed, the information processing apparatus 120 performing a copy process refers to the dynamic range scalability limiting information received from the management server 140, in other words, information of

(r1) allowing copy of only the basic layer,
(r2) allowing copy of both the basic layer and the auxiliary layer, and
(r3) not allowing copy of a stream having dynamic range scalability

and performs copy of the content in accordance with such limiting information.

In addition, an attribute file storing the additional information illustrated in Fig. 15 may be generated and recorded in a copy destination medium. According to this process, when a copy content is reproduced from a copy destination medium, content reproduction limiting using the dynamic range scalability limiting information recorded in the attribute file can be performed.

In other words, in a case where the reproduction apparatus performing reproduction of copy data from a copy destination medium can perform content reproduction control using various types of information recorded in the attribute file, the copy process may be performed with all the content copy allowed without determining the execution/no-execution of a copy process according to the dynamic range scalability limiting information described above.

In such a case, the reproduction apparatus performing reproduction of copy data from the copy destination medium performs content reproduction control using the dynamic range scalability limiting information recorded in the attribute file at the time of reproduction.

In the copy destination medium, layer data of each of the basic layer and the auxiliary layer used for the reproduction of video data and the dynamic range scalability limiting information recording whether or not a reproduction process using each layer is allowed are recorded.

When data reproduction is performed from the copy destination medium in which such data is recorded, the reproduction apparatus selects and reproduces only layer data of which reproduction is allowed by referring to the dynamic range scalability limiting information.

The setting of the dynamic range scalability limiting information is one of settings of

(1) allowing reproduction of only the basic layer,
(2) allowing reproduction using both the basic layer and the auxiliary layer, and
(3) not allowing reproduction of a stream having dynamic range scalability.

In addition, programs applied to the copy execution/no-execution determining process at the time of performing a copy process, a copy process accompanying attribute file recording, a reproduction process of a copy content, and the like are provided for the information processing apparatus 120 in advance.

(5-5. Selection Limiting Information (selection))

Next, selection limiting information (selection) that is second copy limiting information will be described. The selection limiting information is information that is used for limiting the setting of the following information for a copy content.

(2a) Audio (audio)
(2b) Subtitle (subtitle)
(2c) Angle (angle)
(2d) Pair stream limiting information

(2a) The audio is limiting information of an audio such as a Japanese audio, an English audio, a French audio, and the like, for example, reproduced in accompaniment with a movie content or the like and is information used for limiting audio data allowed as a copy content.

More specifically, as an audio allowed to be copied, an attribute value is set, and, for example, one attribute value among audio attribute values = -1 (no designation), 1 (JPN (Japanese)), 2 (ENG (English)), 3 ... is set.

For example, in a case where the audio attribute value = -1 (no designation), user's free audio selection can be performed. In a case where the audio attribute value = 2 (JPN (Japanese) ), only a content in which a Japanese audio is set is a copy allowed content.

(2b) The subtitle is limiting information of a subtitle such as a Japanese subtitle, an English subtitle, a French subtitle, and the like, for example, displayed in accompaniment with a movie content or the like and is information used for limiting subtitle allowed as a copy content.

More specifically, as a subtitle allowed to be copied, an attribute value is set, and, for example, one attribute value among subtitle attribute values = -1 (no designation), 1 (ENG (English)), 2 (JPN (Japanese)), 3 ... is set.

For example, in a case where the subtitle attribute value = -1 (no designation), user's free subtitle selection can be performed. In a case where the subtitle attribute value = 2 (JPN (Japanese)), only a content in which a Japanese subtitle is set is a copy allowed content.

(2c) The angle is information used for limiting an angle video allowed to be copied. More specifically, for example, in a music video content or the like, there is a content in which a plurality of videos focusing on each specific member from among a plurality of members (for example, members x, y, and z) forming a musician are set.

For example, there is a content having a set of a plurality of angle videos including

a video having an angle attribute value = 1: a video imaged to have the member x focused on,
a video having an angle attribute value = 2: a video imaged to have the member y focused on,
a video having an angle attribute value = 3: a video imaged to have the member z focused on, and
a video having an angle attribute value = 4: a video imaged to include all the members x to z.

A setting allowing copy for a limited content corresponding to a specific angle from such contents or a setting for selecting a content corresponding to a specific angle in accordance with a user's taste can be made.

For example, in a case where the angle attribute value = -1 (no designation), user's free angle selection can be made . In a case where the angle attribute value = 2 (a video imaged to have the member y focused on), only the angle 2 (a video imaged to have the member y focused on) is a copy allowed content.

In addition, angle information (angleInfo) is explanatory information relating to angle videos of the angle attribute values = 1, 2, .... These are presented to a list displayed in a user apparatus for selection of a copy content. A specific example will be described later.

(2d) Pair stream limiting information is designation information used for designating one of

(1) standard dynamic range (SDR) stream and
(2) high dynamic range (HDR) stream

as a copy target stream or limiting information that enables a user to arbitrarily select a copy target stream.

A specific data setting example of (2d) pair stream limiting information is one of the following.

More specifically, the following attribute values representing video streams allowed to be copied are set.

Pair stream limiting information attribute value = -1 (no designation)
Pair stream limiting information attribute value = 1 (SDR)
Pair stream limiting information attribute value = 2 (HDR)

For example, one of such attribute values is set.

In addition, in (2d) Pair stream limiting information, the following information is recorded as additional information.

(a) a clip name and a PID of an SDR video stream
(b) a clip name and a PID of an HDR video stream

An information processing apparatus performing a copy process can instantly select and acquire an SDR video stream or an HDR video stream that is a copy target using the information.

A process according to the attribute value of (2d) Pair stream limiting information is the following process.

For example, in a case where the pair stream limiting information attribute value = -1 (no designation), a user can freely select a stream (SDR or HDR) as a copy target.

In other words, an SDR video stream or an HDR video stream selected by the user can be copied.

On the other hand, in a case where the pair stream limiting information attribute value = 1 (SDR), only an SDR video stream is a copy allowed content.

In addition, in a case where the pair stream limiting information attribute value = 2 (HDR), only an HDR video stream is a copy allowed content.

In addition, when an SDR stream and an HDR stream are present together in one clip, a set of such streams is referred to as a pair stream.

The value of the PID may be operated to be targeted for a fixed value. For example, it is set such that

PID = 0x1011 is an SDR stream, and
PID = 0x1012 is an HDR stream.

An SDR stream and an HDR stream have no difference except for the dynamic range in the representation of a video. The streams are selectively output according to a display device. This limiting information serves a one type of "selection limiting information". While an HDR stream is perceived as an added value, from a viewpoint of being supplied with being necessarily paired with an SDR stream, the meaning of a fall back option is strong, and end user's discretion is prioritized.

A specific setting of each attribute value of the selection limiting information (selection) is the following setting.

The selection limiting information of content A= (audio, subtitle, angle, pair stream) = (1, 2, 1, 1)
The selection limiting information of content B = (audio, subtitle, angle, pair stream) = (2, 2, 1, 2)
The selection limiting information of content C = (audio, subtitle, angle, pair stream) = (-1, -1, 2, -1)

Such settings are performed.

For example, the content A is a content set such that

the audio attribute value = 1 (ENG (English)),
the subtitle attribute value = 2 (JPN (Japanese)),
the angle attribute value = 1 (a video imaged with a member x focused on), and
the pair stream limiting information attribute value = 1 (SDR), and,
in a case where a user selects the content A, this set content, in other words, a content formed by an SDR video is copied.

The clip name of a clip corresponding to an SDR video is 32145, and the PID is 0x1020.

These clip name and PID information are recorded in (2d) Pair stream limiting information as additional information.

The information processing apparatus, by performing clip selection or packet selection according to these clip name and PID, can perform a copy process with an SDR video content selected.

For example, the content B is a content set such that

the audio attribute value = 2 (JPN (Japanese)),
the subtitle attribute value = 2 (JPN (Japanese)),
the angle attribute value = 1 (a video imaged with a member x focused on), and
the pair stream limiting information attribute value = 2 (HDR), and,
in a case where a user selects the content B, this set content, in other words, a content formed by an HDR video is copied.

The clip name of a clip corresponding to an HDR video is 54321, and the PID is 0x1021.

These clip name and PID information are recorded in (2d) Pair stream limiting information as additional information.

The information processing apparatus, by performing clip selection or packet selection according to these clip name and PID, can perform a copy process with an HDR video content selected.

For example, the content C is a content set such that

the audio attribute value = -1 (no designation),
the subtitle attribute value = -1 (no designation),
the angle attribute value = 2 (a video imaged with a member y focused on), and
the pair stream limiting information attribute value = -1 (no designation), and,

in a case where a user selects the content C, this set content, in other words, a content formed by one of an SDR video and an HDR video that is a video selected by the user is copied.

A clip name = 12345 is the clip name of a clip associated with two streams of an HDR video stream and an SDR video stream.

In addition, the PID of a data storing packet corresponding to the SDR video is 0x1020, and the PID of a data storing packet corresponding to the HDR video is 0x1021.

These clip name and PID information are recorded in (2d) Pair stream limiting information as additional information.

A user selects the clip associated with two streams of an SDR video and an HDR video and selects one PID of

PID = 0x1020 of the data storing packet corresponding to the SDR video and
PID = 0x1021 of the data storing packet corresponding to the HDR video,

thereby being able to select copy target data.

In a case where the content C is selected, a user can freely select an audio, a title, and a video (SDR or HDR), and a content of which only the angle is set in advance is copied.

When a copy process of a content is performed, the information processing apparatus 120 refers to the selection limiting information (selection) received from the management server 140 and performs a process of copying a content corresponding to the setting of the selection limiting information (selection) as a copy allowed content. The copy of a content against the setting of the selection limiting information (selection) is not allowed.

However, the information processing apparatus 120 can selectively perform the following process in accordance with a copy destination medium.

(Process 1)

A process of selectively copying only data corresponding to the setting of the selection limiting information (selection) is performed, and a content that can be reproduced from a copy destination medium is set to only data corresponding to the setting of the selection limiting information (selection).

(Process 2)

Data corresponding to the setting of the selection limiting information (selection) and data not corresponding to the setting are copied together, and further an attribute file in which the selection limiting information (selection) is recorded is generated, and the generated attribute file is recorded in a copy destination medium.

In addition, in a case where a copy process according to (Process 2) described above is performed, there is a condition that reproduction control according to the selection limiting information (selection) of the attribute file is performed when content reproduction from the copy destination medium is performed.

According to such reproduction control, it is possible to limit a content that can be reproduced to only the data corresponding to the setting of the selection limiting information (selection).

When the copy process according to (Process 2) described above is performed, for example, the following data is recorded in the copy destination medium.

Standard dynamic range (SDR) video stream
High dynamic range (HDR) video stream

Pair stream limiting information in which whether a reproduction process of one of an SDR video stream and an HDR video stream is allowed

When data reproduction from a copy destination medium is performed, the reproduction apparatus can select and reproduce only video stream data allowed to be reproduced by referring to the pair stream limiting information.

For example, in a case where the copy destination medium is a medium such as a hard disk (HDD) allowing reproduction according to a sequence similar to the BD-ROM reproduction sequence, the copy process and the reproduction process according to (Process 2) described above can be performed.

In addition, in a case where the copy destination medium is a medium such as a flash memory allowing reproduction according to a sequence similar to the BD-ROM reproduction sequence, reproduction accompanying an attribute file referring process cannot be performed, and the copy process according to (Process 1) described above is performed.

In addition, even in a case where the copy destination medium is a medium such as a hard disk (HDD) allowing the reproduction according to a sequence similar to the BD-ROM reproduction sequence, in order to decrease the volume of copy data, it may be set such that the copy process according to (Process 1) described above is performed, and only selected data is copied.

(5-6. Play List Sequence Information)

Next, the play list sequence information will be described. The play list sequence information is information defining the sequence of a play list used when a copy content is reproduced.

As described above, when a copy process of a content is performed, a movie object (MovieObject) file recorded in a disc is not copied, and only the play list file to the AV stream file are selected and copied. In the movie object (MovieObject) file, the use sequence of a play list at the time of performing content reproduction is recorded. When content reproduction using the first medium 110 is performed, according to play list registration information of the movie object (MovieObject) file, a play list is sequentially acquired, and a reproduction process can be performed using a clip information file and an AV stream file selected according to the acquired play list.

However, in the copy destination medium to which the content is copied, the movie object (MovieObject) file is not present. Accordingly, the sequence of the play list applied at the time of reproduction cannot be determined. In a case where such information is not present, a process of simply performing reproduction according to file names of the play list is performed. Even when such a process is performed, there is also a content that can be correctly reproduced. However, for example, for a content of which an angle is selected as described above or the like, there are cases where it is necessary to select a specific play list. This similarly applies also to an audio, a subtitle, and the like, and, in order to perform reproduction using a specific audio and a specific subtitle, it is necessary to select and reproduce a specific play list.

The additional information of the server response information (Offer Response) illustrated in Fig. 15 is provided from the management server 140 for the information processing apparatus 120 performing a copy process together with the basic information of the server response information (Offer Response) described above with reference to Fig. 7.

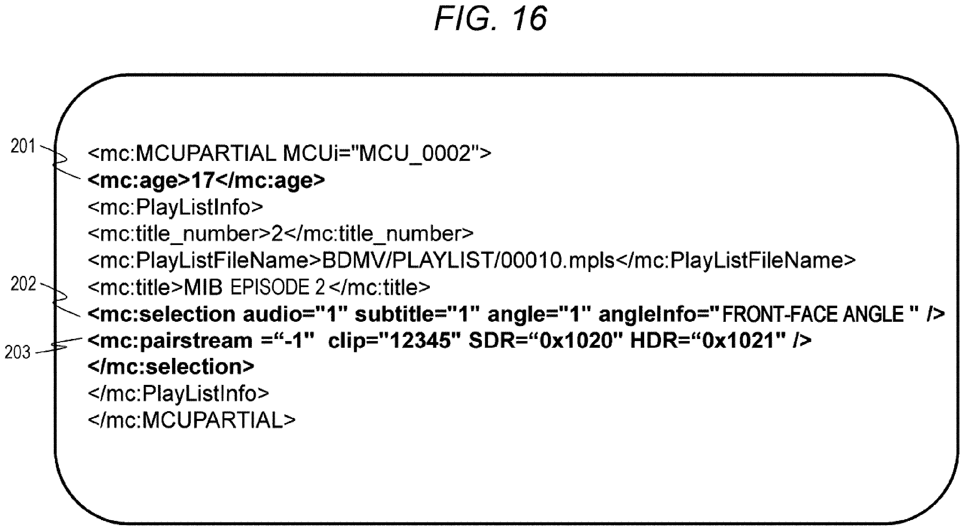

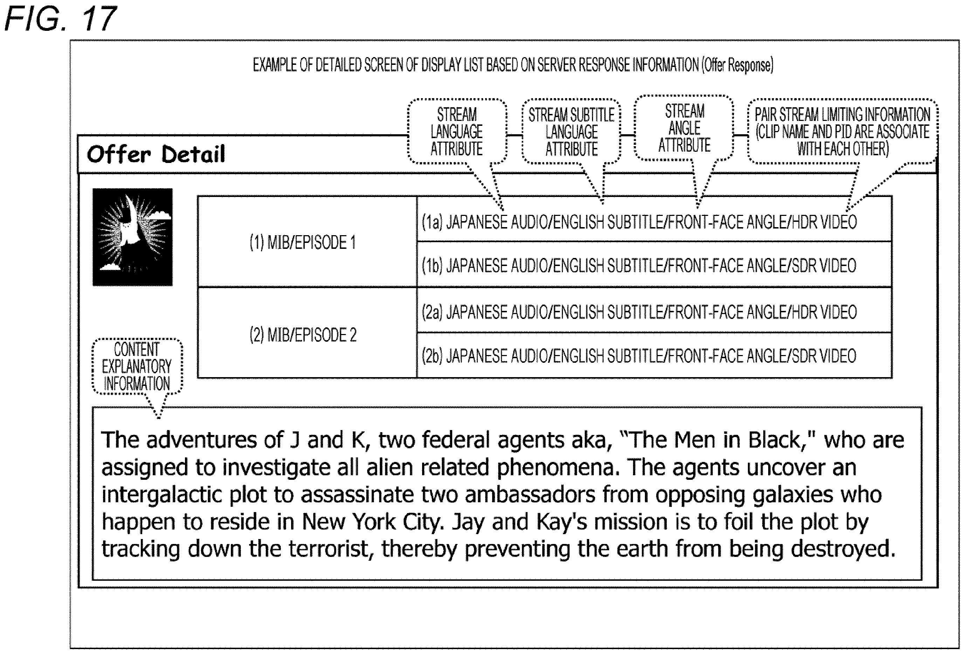

Next, a specific example and a display example of the server response information (Offer Response) provided by the management server 140 for the information processing apparatus 120 performing a copy process will be described with reference to Figs. 16 and 17.

In the sequence diagram illustrated in Fig. 4, the management server 140 generates the server response information (Offer Response) 131, for example, as XML data and provides the generated server response information 131 for the information processing apparatus 120.

An example of partial data of this XML data will be described with reference to Fig. 16.

Fig. 16 illustrates a partial data of server response information corresponding to one copy unit as one copy unit.

    (a) Copy unit [MCU_0002]: Episode set

This is one copy unit.

The management server 140 generates the server response information (Offer Response) 131 in units of copy units and provides the generated server response information 131 for the information processing apparatus 120.

Fig. 16 is XML data representing a main part of basic information and additional information included in the server response information (Offer Response) 131.

The XML data illustrated in Fig. 16 will be described.

(a) Copy unit [MCU_0002] : Data 201 included in an Episode set is setting data of the age limiting information (age) included in the additional information described above with reference to Fig. 15. Data 202 and data 203 are setting data of the selection limiting information (selection) included in the additional information described above with reference to Fig. 15.

A setting value of the age limiting information (age) of the data 201 is "17". This data "17" represents that users of only 17 years old or more are copy allowed users.

In a case where copy is performed in the information processing apparatus 120, the setting value "17" of the age limiting information (age) is compared with the age limiting information (age) (for example, setting information of parental lock) stored in the memory disposed inside the information processing apparatus 120. In a case where the age limiting information (age) stored in the memory disposed inside the information processing apparatus 120 is, for example, "13" (for example, there is a parental lock setting), the setting of the information processing apparatus is determined not to be an age allowed to copy in the age limiting information (age), and copy is not performed.

In addition, a configuration may be employed in which copy is set to be executable, an attribute file including the age limiting information (age) is generated, and a process of recording the generated attribute file in a copy destination.

In other words, the age limiting information (age) is acquired by referring to the attribute file at the time of reproduction, the acquired age limiting information is compared with the age limiting information (age) (for example, setting information of parental lock) stored in the memory of the reproduction apparatus, and only data allowed to be reproduced is reproduced.

In a case where copy is performed for an apparatus (for example, an HDD) for which such reproduction control can be performed, copy may be set to be executable.

The selection limiting information (selection) represented in the data 202 is information used for limiting the setting of the following information of a copy content.

    (a) Audio (audio)
    (b) Subtitle (subtitle)
    (c) Angle (angle)
    (d) Angle information (angleInfo)

A setting value of each thereof is recorded.

The selection limiting information (selection) represented in the data 203 is information used for limiting the setting of the following information of a copy content.

(e) Pair stream limiting information

In the example illustrated in the drawing, the following parameters are recorded as the pair stream limiting information.

Pair stream limiting information attribute value = -1
Clip name (clip) = 12345

```
PID (SDR) = 0x1020

PID (HDR) = 0x1021
```

This parameter setting example corresponds to the pair stream limiting information attribute value = -1 (no designation) described above with reference to Fig. 15.

In other words, a user can freely select one of an SDR video stream and an HDR video stream as a copy target.

A user can select one of an SDR video and an HDR video as copy target data by selecting the clip (12345) associated with a stream, which is one of the SDR video stream and the HDR video stream, selected as a copy target and selecting one of PIDs including

the PID = 0x1020 of the data storing packet corresponding to an SDR video and
the PID = 0x1021 of the data storing packet corresponding to an HDR video.

Data illustrated in Fig. 17 is an example of selection limiting information displayed in the display unit of the information processing apparatus 120, for example, on the basis of the selection limiting information (selection) represented in the server response information described with reference to Figs. 15 and 16.

A plurality of different pieces of selection limiting information corresponding to the data 202 and the data 203 illustrated in Fig. 16 are displayed in each of entries (1a), (1b), (2a), and (2b) illustrated in Fig. 17. In other words,

The entries (1a) and (1b) correspond to two entries that can be selected by a user in correspondence with one copy target unit [(1) MIB/Episode 1]. The entry (1a) is an entry in which selection limiting information of

(a) Audio (audio) = Japanese audio,
(b) Subtitle (subtitle) = English subtitle,
(c) Angle information (angleInfo) = front-face angle, and
(d) Pair stream limiting information = HDR video is set.

The entry (1b) is an entry in which selection limiting information of

(a) Audio (audio) = Japanese audio,
(b) Subtitle (subtitle) = English subtitle,
(c) Angle information (angleInfo) = front-face angle, and
(d) Pair stream limiting information = SDR video is set.

In other words, a user can select one of an HDR video stream and an SDR video stream according to the setting of (a) Audio (audio) = Japanese audio, (b) Subtitle (subtitle) = English subtitle, and (c) Angle information (angleInfo) = front-face angle as a copy target for one copy target unit [(1) MIB/Episode 1].

In addition, the entries (2a) and (2b) correspond to two entries that can be selected by a user in correspondence with one copy target unit [(2) MIB/Episode 2]. The entry (2a) is an entry in which selection limiting information of

(a) Audio (audio) = Japanese audio,
(b) Subtitle (subtitle) = English subtitle,
(c) Angle information (angleInfo) = front-face angle, and
(d) Pair stream limiting information = HDR video is set.

The entry (2b) is an entry in which selection limiting information of

(a) Audio (audio) = Japanese audio,
(b) Subtitle (subtitle) = English subtitle,
(c) Angle information (angleInfo) = front-face angle, and
(d) Pair stream limiting information = SDR video is set.

In other words, a user can select one of an HDR video stream and an SDR video stream according to the setting of

(a) Audio (audio) = Japanese audio,
(b) Subtitle (subtitle) = English subtitle, and
(c) Angle information (angleInfo) = front-face angle

as a copy target also for one copy target unit [(2) MIB/Episode 2].

In addition, correspondence data between the attribute values of an audio, a subtitle, and the others recorded in the XML data described with reference to Fig. 16 and specific meanings (language) thereof, for example, is recorded in an STN table (STN_table) recorded as play item information within a play list file, and the like. When the display data illustrated in Fig. 17 is generated, the information processing apparatus acquires a play list file corresponding to a copy unit from an information recording medium (first medium) and can acquire and display specific language information of each attribute value recorded within the XML data by referring to the STN table recorded in the acquired play list file.

In addition, server response information (Offer Response) configured to record specific language information in the XML data together with an attribute value may be configured to be generated by the management server 140. In such a case, the table search described above is unnecessary.

[8. Process Sequence Performed by Information Processing Apparatus]

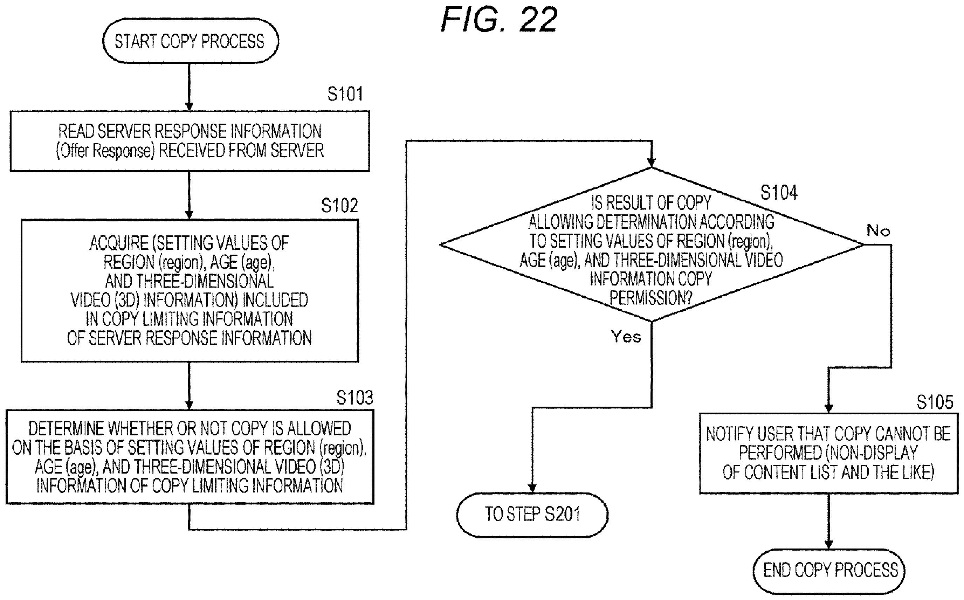

Next, the process sequences performed by the information processing apparatus 120 will be described with reference to flowcharts illustrated in Fig. 22 and subsequent drawings.

The process sequences illustrated below will be sequentially described.

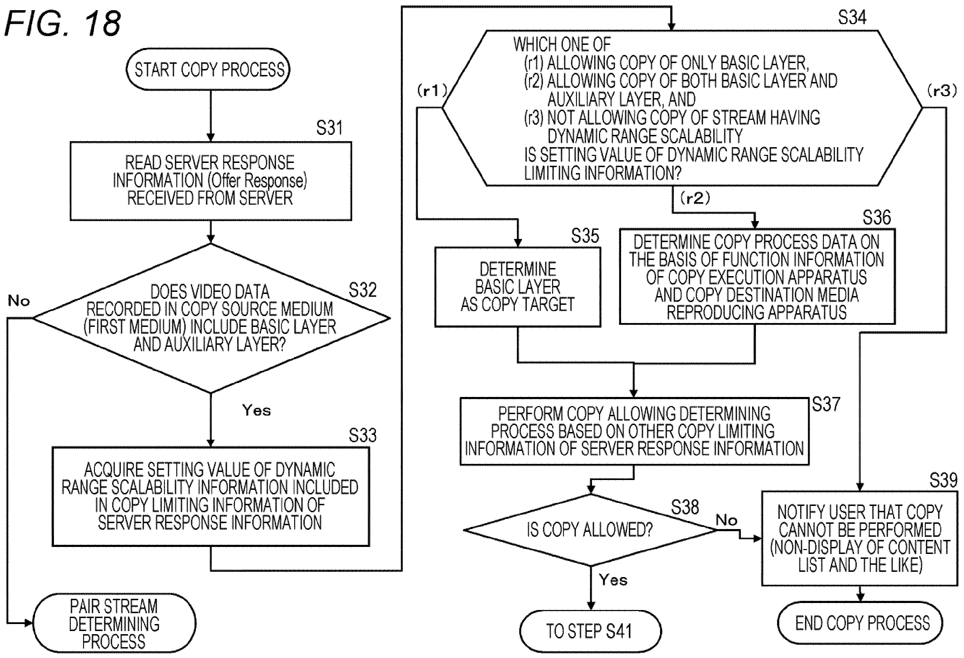

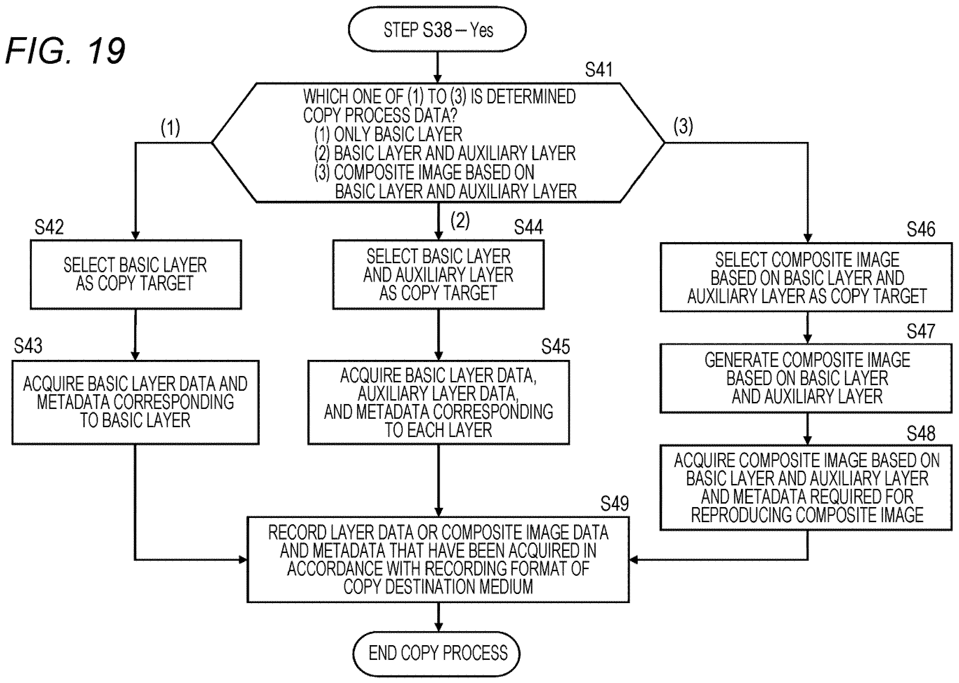

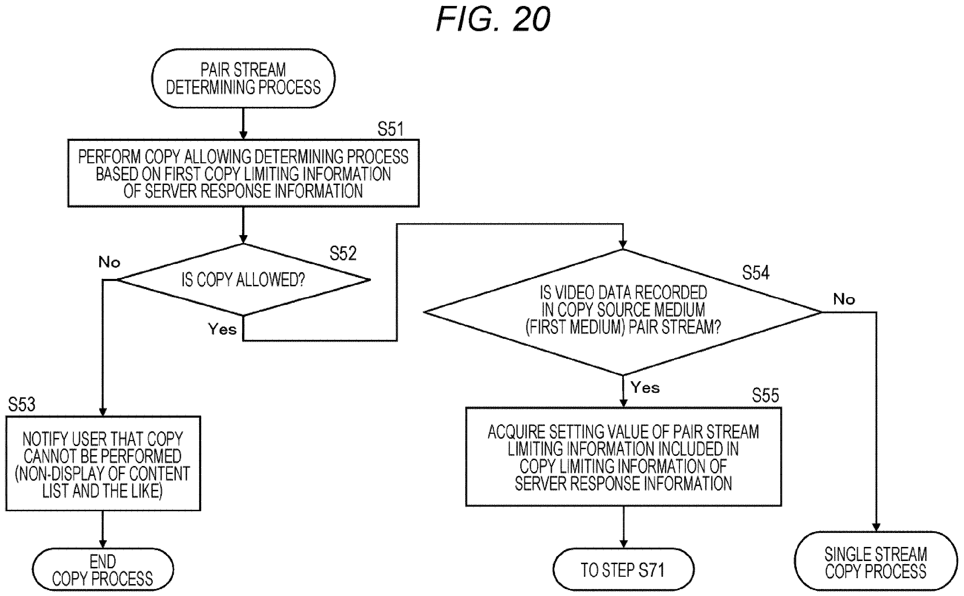

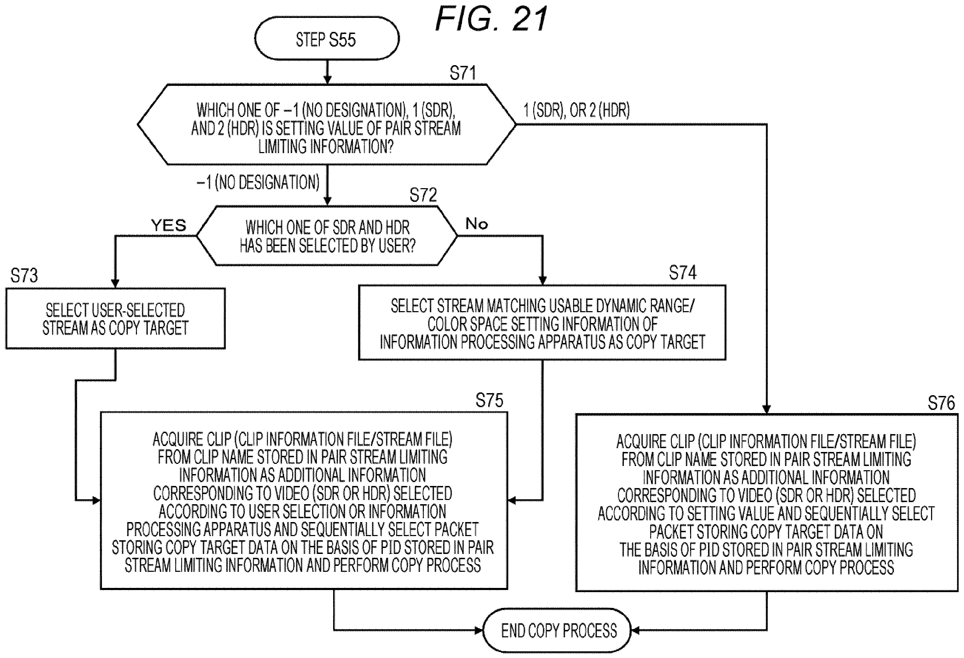

> (8-1) Copy Process Sequence Using Dynamic Range Scalability Information Included in Server Response Information (Figs. 18 and 19)
> (8-2) Copy Process Sequence Using Pair Stream Limiting Information Included in Server Response Information (Figs. 20 and 21)
> (8-3) Whole Process Sequence of Copy Process (Figs. 22 to 26)

In addition, such a process is a process performed by the information processing apparatus 120 illustrated in Fig. 4. The information processing apparatus 120 includes a data processing unit including a CPU having a program execution function, and each process is performed under the control of the data processing unit. In addition, an example of the hardware configuration of the information processing apparatus 120 will be described in a later stage.

(8-1) Copy Process Sequence Using Dynamic Range Scalability Information Included in Server Response Information (Figs. 18 and 19)

First, a copy process sequence using the dynamic range scalability information included in the server response information will be described with reference to Figs. 18 and 19.

The process of each step of the flow illustrated in Figs . 18 and 19 will be described.

(Step S31)

The data processing unit of the information processing apparatus reads server response information (Offer Response) received from the management server in step S31.

First, the copy limiting information included in the additional information included in the server response information described above with reference to Fig. 15 and other drawings is read.

(Step S32)

Next, the data processing unit of the information processing apparatus determines whether or not video data recorded in a copy source medium (first medium) includes a basic layer and an auxiliary layer in step S32.

In other words, it is determined whether or not a video having dynamic range scalability is recorded in the copy source medium (first medium).

A video having dynamic range scalability is a video corresponding to (Recording Example 4) described above with reference to Fig. 13.

In step S32, it is determined whether or not a basic layer and an auxiliary layer for configuring a (Recording Example 4) HDR video are recorded, in other words, a video having dynamic range scalability is recorded in the copy source medium (first medium).

In addition, as data examples corresponding to this Recording Example 4, for example, there are layer set examples as below.

(Layer set example a)

> Basic layer = coded video data having 10-bit depth
> Auxiliary layer = auxiliary data for extending to 12-bit depth

(Layer set example b)

> Basic layer = SDR video coded data
> Auxiliary layer = auxiliary data for generating HDR video

For example, there is a combination of such layer sets.

In step S32, the data processing unit of the information processing apparatus determines whether or not video data recorded in the copy source medium (first medium) includes a basic layer and an auxiliary layer.

In a case where it is checked that the basic layer and the auxiliary layer are included, the process proceeds to step S33.

On the other hand, in a case where a basic layer and an auxiliary layer are not included, the process proceeds to a pair stream determining process (Fig. 20).

(Steps S33 and S34)

In step S32, in a case where the video data recorded in the copy source medium (first medium) is checked to include the basic layer and the auxiliary layer, the process proceeds to step S33.

The information processing apparatus, in step S33, acquires the setting value of the dynamic range scalability information included in the copy limiting information from the server response information.

The setting value is a setting value of the dynamic range scalability information inside the copy limiting information included in the additional information in the server response information described above with reference to Fig. 15 and other drawings.

As described above with reference to Fig. 15, the setting value of the dynamic range scalability limiting information of the copy limiting information is one of the following.

> (r1) allowing copy of only basic layer
> (r2) allowing copy of both basic layer and auxiliary layer
> (r3) not allowing copy of stream having dynamic range scalability

As the setting value of the dynamic range scalability limiting information of the copy limiting information, one of these (r1) to (r3) is recorded.

The data processing unit of the information processing apparatus performing a copy process, in steps S33 and S34, checks the setting value of the dynamic range scalability limiting information of the copy limiting information that is one of (r1) to (r3) described above.

In a case where the setting value of the dynamic range scalability limiting information is the following (r1), that is, the setting of
(r1) allowing copy of only basic layer,
the process proceeds to step S35.

In addition, in a case where the setting value of the dynamic range scalability limiting information is the following (r2), that is, the setting of
(r2) allowing copy of both basic layer and auxiliary layer,
the process proceeds to step S36.

On the other hand, in a case where the setting value of the dynamic range scalability limiting information is the following (r3), that is, the setting of
(r3) not allowing copy of stream having dynamic range scalability,
it is determined that copy of a stream having dynamic range scalability is not allowed, and the process proceeds to step S39.

(Step S35)

In step S34, in a case where the setting value of the dynamic range scalability limiting information is the setting of
(r1) allowing copy of only basic layer,
in step S35, copy target data is determined as the basic layer.

(Step S36)

In step S34, in a case where the setting value of the dynamic range scalability limiting information is checked to be the setting of
(r2) allowing copy of both basic layer and auxiliary layer,
the process of step S36 is performed.

In step S36, the functional information of two apparatuses including a copy execution apparatus and a reproduction apparatus performing reproduction using a copy destination medium is acquired, and copy target data is determined according to such functional information.

In other words, for example, the functional information of the copy execution apparatus such as whether or not the copy execution apparatus can separately copy a basic layer and an auxiliary layer, whether or not a composite image can be generated using the basic layer and the auxiliary layer, and the like is acquired.

In addition, as the functional information of the reproduction apparatus performing reproduction using a copy destination medium, apparatus function information such as whether or not a reproduction process using a basic layer and an auxiliary layer can be performed and the like is acquired.

In addition, the process of acquiring the apparatus function information is performed as a process of acquisition of the apparatus information stored in a storage unit of the apparatus and acquisition of the apparatus information of an external apparatus (a reproduction apparatus of a copy destination medium) input through an input/output unit. Alternatively, a user inquiry is made, and the apparatus function information may be acquired on the basis of a response input from the user.

Next, the information processing apparatus determines copy target data on the basis of the acquired apparatus function information. More specifically, it is determined whether one of

> (1) only the basic layer,
> (2) the basic layer and the auxiliary layer, and
> (3) a composite image generated on the basis of the basic layer and the auxiliary layer

is set as a copy target.

More specifically, in a case where the setting value of the dynamic range scalability limiting information is the setting of
(r2) allowing copy of both basic layer and auxiliary layer,
in a case where a condition

> "(a) the copy execution apparatus cannot analyze the auxiliary layer"
> is satisfied,
> only the basic layer is determined as a copy target.
> In addition, in a case where the setting value of the dynamic range scalability limiting information is the setting of
> (r2) allowing copy of both basic layer and auxiliary layer,

in a case where a condition
"(b) both a copy execution apparatus and a copy destination media reproducing apparatus are configured to be able to analyze the auxiliary layer" is satisfied,
the basic layer and the auxiliary layer are determined as copy targets.
In addition, in a case where the setting value of the dynamic range scalability limiting information is the setting of
(r2) allowing copy of both basic layer and auxiliary layer,
in a case where a condition
" (c) a copy execution apparatus is configured to be able to analyze the auxiliary layer, but a copy destination media reproducing apparatus is configured not to be able to analyze the auxiliary layer" is satisfied,
a composite image is generated from the basic layer and the auxiliary layer, and the composite image is set as a copy target.

(Steps S37 and S38)

Next, the information processing apparatus, in steps S37 and S38, performs a copy allowing determining process based on the other copy limiting information included in the server response information.

More specifically, it is determined whether or not copy is allowed on the basis of the setting values of the region limiting information (region), the age limiting information (age), and the three-dimensional video (3D) limiting information included in the copy limiting information acquired from the server response information.

In a case where it is determined that copy is allowed, the process proceeds to step S41.

On the other hand, in a case where it is determined that copy is not allowed, the process proceeds to step S39.

(Step S39)

In step S39, the user is notified of being unable to copy, and the process ends. For example, a message notifying that there is no content that can be copied is output to the display unit of the information processing apparatus.

(Step S41)

In steps S37 and S38, in a case where it is determined that a copy process is allowed, the information processing apparatus, in step S41, determines whether the copy target data determined in step S36 is one of the following.

(1) only the basic layer
(2) the basic layer and the auxiliary layer

(3) a composite image generated on the basis of the basic layer and the auxiliary layer

In other words, it is determined whether one thereof is determined as a copy target.

(1) In a case where the copy target is only the basic layer, the process proceeds to step S42.
(2) In a case where the copy target is the basic layer and the auxiliary layer, the process proceeds to step S44.
(3) In a case where the copy target is the composite image generated on the basis of the basic layer and the auxiliary layer, the process proceeds to step S46.

(Steps S42 and S43)

In step S41, in a case where it is determined that the copy target is only the basic layer, the process proceeds to step S42.

In steps S42 and S43, the basic layer is selected as a copy target, and basic layer data and metadata corresponding to the basic layer are acquired from the copy source medium (first medium).

(Steps S44 and S45)

In step S41, in a case where the copy target is determined to be the basic layer and the auxiliary layer, the process proceeds to step S44.

In steps S44 and S45, the basic layer and the auxiliary layer are selected as copy targets, and basic layer data, auxiliary layer data, and metadata corresponding to the basic layer and the auxiliary layer are acquired from the copy source medium (first medium).

(Steps S46 to S48)

In step S41, in a case where the copy target is determined to be the composite image generated on the basis of the basic layer and the auxiliary layer, the process proceeds to step S46.

In steps S46 to S48, the basic layer and the auxiliary layer are acquired from the copy source medium (first medium) , and a composite image is generated using data of each of such layers.

Furthermore, metadata required for the reproduction of the composite image is acquired.

(Step S49)

When one of the processes of step S43, step S45, and step S48 is completed, the process proceeds to step S49.

The information processing apparatus, in step S49, performs a process of recording the layer data or the composite image data, and the metadata acquired from the copy source medium (first medium) in accordance with the recording format of the copy destination medium.

For example, a process of converting BDMV format data that is the recording format of the copy source medium (first medium) into the MP4 format that is the recording format of the copy destination medium (second medium) and recording the converted data in the copy destination medium (second medium) is performed.

[(8-2) Copy Process Sequence Using Pair Stream Limiting Information Included in Server Response Information (Figs. 20 and 21)]

Next, a copy process sequence using the pair stream limiting information included in the server response information will be described with reference to flowcharts illustrated in Figs. 20 and 21.

The pair stream limiting information, as described above with reference to Fig. 15, is copy allowed video stream designation information as below.

More specifically, the following attribute value representing a video stream allowed to be copied is set.

  Pair stream limiting information attribute value = -1 (no designation)
  Pair stream limiting information attribute value = 1 (SDR)
  Pair stream limiting information attribute value = 2 (HDR)

For example, one of such attribute values is set.
The process of each step of the flows illustrated in Figs. 20 and 21 will be described.

(Steps S51 and 52)

The information processing apparatus, in steps S51 and S52, performs a copy allowing determining process based on first copy limiting information included in the server response information.

More specifically, it is determined whether or not copy is allowed on the basis of the setting values of the region limiting information (region), the age limiting information (age), and the three-dimensional video (3D) limiting information included in the copy limiting information acquired from the server response information.

In addition, in step S51, since the checking of the video data recorded in the copy source medium (first medium) not being a video formed by the basic layer and the auxiliary layer, in other words, not being a video having dynamic range scalability is in a completed state in step S32 described above with reference to Fig. 18, a determination based on the dynamic range scalability information is unnecessary.

In a case where it is determined that copy is allowed on the basis of the setting values of the region limiting information (region) , the age limiting information (age), and the three-dimensional video (3D) limiting information included in the copy limiting information acquired from the server response information, the process proceeds to step S54.

On the other hand, in a case where it is determined that copy is not allowed, the process proceeds to step S53.

(Step S53)

In step S53, the user is notified that copy cannot be performed, and the process ends. For example, a message notifying that there is no content that can be copied is output to the display unit of the information processing apparatus.

(Step S54)

In the determination process of step S52, in a case where it is determined that copy is allowed, the process proceeds to step S54.
In step S54, the data processing unit of the information processing apparatus, in step S54, determined whether or not video data recorded in the copy source medium (first medium) is a pair stream.
A pair stream is a video stream corresponding to (Recording Example 3) described above with reference to Fig. 13.

(Recording Example 3) Parallel recording of SDR video and HDR video (pair stream recording of SDR video and HDR video)

This recording example is an example in which an SDR video and an HDR video are recorded in a BD in parallel for a same content.
For example, a reproduction apparatus capable of reproducing only an SDR video can select and reproduce the SDR video, and a reproduction apparatus capable of reproducing an HDR video can select and reproduce the HDR video.
In this way, a configuration in which an SDR video stream and an HDR video stream are recorded in parallel for a same content is called a pair stream.
In a case where it is determined that video data recorded in the copy source medium (first medium) is a pair stream, the process proceeds to step S55.
In a case where it is determined that the video data is not a pair stream, a single stream copy process is performed.

(Step S55)

The data processing unit of the information processing apparatus, in step S55, acquires pair stream limiting information from the server response information (Offer Response).
As described above with reference to Fig. 15, the pair stream limiting information recorded in the server response information (Offer Response) is limiting information defining a stream that is a copy target to be limited to one of

(1) an SDR (standard dynamic range) stream and
(2) an HDR (high dynamic range) stream

or to be arbitrarily selectable for a user.

A specific data setting example of the pair stream limiting information recorded in the server response information (Offer Response), as described above with reference to Fig. 15 is as follows.

More specifically, the following attribute values representing a video stream allowed to be copied are set.

Pair stream limiting information attribute value = -1 (no designation)
Pair stream limiting information attribute value = 1 (SDR)
Pair stream limiting information attribute value = 2 (HDR)

For example, one of such attribute values is set.

In addition, in the pair stream limiting information, each information described below is recorded as additional information.

(a) a clip name and a PID of an SDR video stream
(b) a clip name and a PID of an HDR video stream

An information processing apparatus performing a copy process can instantly select and acquire an SDR video stream or an HDR video stream that is a copy target using the information.

As the pair stream limiting information, in a case where one of attribute values of

Pair stream limiting information attribute value = 1 (SDR) and
Pair stream limiting information attribute value = 2 (HDR),

in other words, designation data of one of "1" (SDR) and "2" (HDR) is recorded,
the information processing apparatus can select and copy the designation data of the one (SDR video data or HDR video data).

On the other hand, as (2d) Pair stream limiting information, in a case where

the pair stream limiting information attribute value = -1 (no designation)
is recorded,
the information processing apparatus can selectively copy one of the SDR (standard dynamic range) stream and the HDR (high dynamic range) stream in accordance with user's selection.

(Step S71)

The data processing unit of the information processing apparatus checks the setting value of the pair stream limiting information in step S71. In other words, the setting of

the pair stream limiting information attribute value = -1 (no designation),
the pair stream limiting information attribute value = 1 (SDR) , or
the pair stream limiting information attribute value = 2 (HDR)
is checked.

In a case where the pair stream limiting information is set to be "-1 (no designation)", the process proceeds to step S72.

In addition, in a case where the pair stream limiting information is set to be "1 (SDR) " or "2 (HDR)", the process proceeds to step S76.

(Step S72)

In step S71, in a case where it is checked that the pair stream limiting information is set to "-1 (no designation) ", the process proceeds to step S72.

In step S72, the information processing apparatus inquires about whether the copy target data is set as an SDR video or an HDR video.

In step S72, in a case where the selection information (SDR or HDR) of the copy target data is acquired from a user, the process proceeds to step S73.

On the other hand, in a case where the selection information (SDR or HDR) of the copy target data is not acquired from the user, the process proceeds to step S74.

(Step S73)

In step S72, in a case where the selection information (SDR or HDR) of the copy target data is acquired from the user, the process proceeds to step S73.

In step S73, the information processing apparatus selects the stream selected by the user, in other words, one of the SDR stream and the HDR stream as copy target data.

(Step S74)

On the other hand, in step S72, in a case where the selection information (SDR or HDR) of the copy target data is not acquired from the user, the process proceeds to step S74.

In step S74, the information processing apparatus selects copy target data in accordance with the dynamic range and the color space setting information of the information processing apparatus.

In other words, in a case where the information processing apparatus is an apparatus capable of analyzing and using the dynamic range and the color space corresponding to an HDR video, HDR video data is selected as a copy target.

On the other hand, in a case where the information processing apparatus is not an apparatus capable of analyzing and using the dynamic range and the color space corresponding to an HDR video, SDR video data is selected as a copy target.

(Step S75)

In step S73 or S74, when the copy target data is determined, the information processing apparatus, in step S75, performs the following process.

As additional information corresponding to the video (SDR or HDR) selected according to the user selection or the information processing apparatus, a clip (a clip information file/a stream file) is acquired from the clip name stored in the pair stream limiting information, and packets storing the copy target data are sequentially selected on the basis of a PID corresponding to the selected stream (HDR or SDR), and a copy process is performed.

In addition, in this copy process, a process of recording according to the recording format of the copy destination medium is performed.

For example, a process of converting BDMV format data that is the recording format of the copy source medium (first medium) into the MP4 format that is the recording format of the copy destination medium (second medium) and recording the converted data in the copy destination medium (second medium) is performed.

(Step S76)

On the other hand, in step S71, in a case where the setting of the pair stream limiting information recorded in the server response information (Offer Response) is not the setting of "-1 (no designation)", in other words, the setting is one of "1 (SDR) and 2 (HDR)" of

    Pair stream limiting information attribute value = 1 (SDR) and
    Pair stream limiting information attribute value = 2 (HDR),

the process of step S76 is performed.

The information processing apparatus performs the following process in step S76.

In accordance with the setting value of the pair stream limiting information, in other words, the setting value of "1 (SDR) "or "2 (HDR) ", as additional information corresponding to the selected video (SDR or HDR), a clip (a clip information file/stream file) is acquired from the clip name stored in the pair stream limiting information, and, on the basis of the PID corresponding to the stream, packets storing copy target data are sequentially selected, and a copy process is performed.

In addition, in this copy process, a process of recording according to the recording format of the copy destination medium is performed.

For example, a process of converting BDMV format data that is the recording format of the copy source medium (first medium) into the MP4 format that is the recording format of the copy destination medium (second medium) and recording the converted data in the copy destination medium (second medium) is performed.

In addition, copy target data selected in step S76 is different according to the setting of the pair stream limiting information.

In a case where the setting of the pair stream limiting information is
Pair stream limiting information attribute value = 1 (SDR) ,
the copy target data is an SDR video.

On the other hand, in a case where the setting of the pair stream limiting information is
Pair stream limiting information attribute value = 2 (HDR),
the copy target data is an HDR video.

[8-3. Whole Process Sequence of Copy Process (Figs. 22 to 26)]

Next, the whole process sequence of a case where a copy process of a content is performed for a second medium that is a copy destination will be described with Figs. 22 to 26.

The process of each step of flows illustrated in Figs. 22 to 26 will be described.

(Step S101)

The data processing unit of the information processing apparatus, in step S101, reads server response information (Offer Response) received from the management server.

(Step S102)

Next, the data processing unit of the information processing apparatus, in step S102, acquires setting values of the region limiting information (region), the age limiting information (age), and the three-dimensional video (3D) limiting information included in the copy limiting information from the server response information.

The copy limiting information is the copy limiting information included in the additional information in the server response information described above with reference to Fig. 15 and other drawings.

(Step S103 and S104)

Next, the data processing unit of the information processing apparatus, in steps S103 and S104, determines whether or not copy is allowed on the basis of the setting values of the region limiting information (region), the age limiting information (age), and the three-dimensional video (3D) limiting information included in the copy limiting information acquired from the server response information.

The information processing apparatus 120 performing a copy process compares the region limiting information (region) received from the management server 140 with a region code (Region Code) or a language code (Language Code) stored in a memory disposed inside the information processing apparatus 120. In addition, the information processing apparatus 120 compares the age limiting information (age) received from the management server 140 with the age limiting information (age) (for example, parental lock setting information) stored in the memory disposed inside the information processing apparatus 120.

In addition, it is determined whether or not copy of data according to the setting value of the three-dimensional video (3D) limiting information of the copy limiting information acquired from the server response information can be performed. In addition, when this determination process is performed, it is preferable to perform the process in consideration of the 3D video reproducing function information of the copy destination medium using apparatus. For example, 3D video reproducing function information of the copy destination medium using apparatus is acquired according to user input, and the determination process is performed.

In step S104, in a case where it is determined that copy is allowed on the basis of all the setting values of the region limiting information (region), the age limiting information (age), and the three-dimensional video (3D) limiting information included in the copy limiting information acquired from the server response information, the process proceeds to step S201.

On the other hand, in a case where it is determined that copy is not allowed on the basis of any one of the setting values of the region limiting information (region), the age limiting information (age), and the three-dimensional video (3D) limiting information included in the copy limiting information, the process proceeds to step S105.

(Step S105)

In a case where it is determined that copy is not allowed on the basis of any one of the setting values of the region limiting information (region), the age limiting information (age), and the three-dimensional video (3D) limiting information included in the copy limiting information, the process proceeds to step S105. In step S105, the user is notified that copy cannot be performed, and the process ends. For example, a message notifying that there is no content that can be copied is output to the display unit of the information processing apparatus.

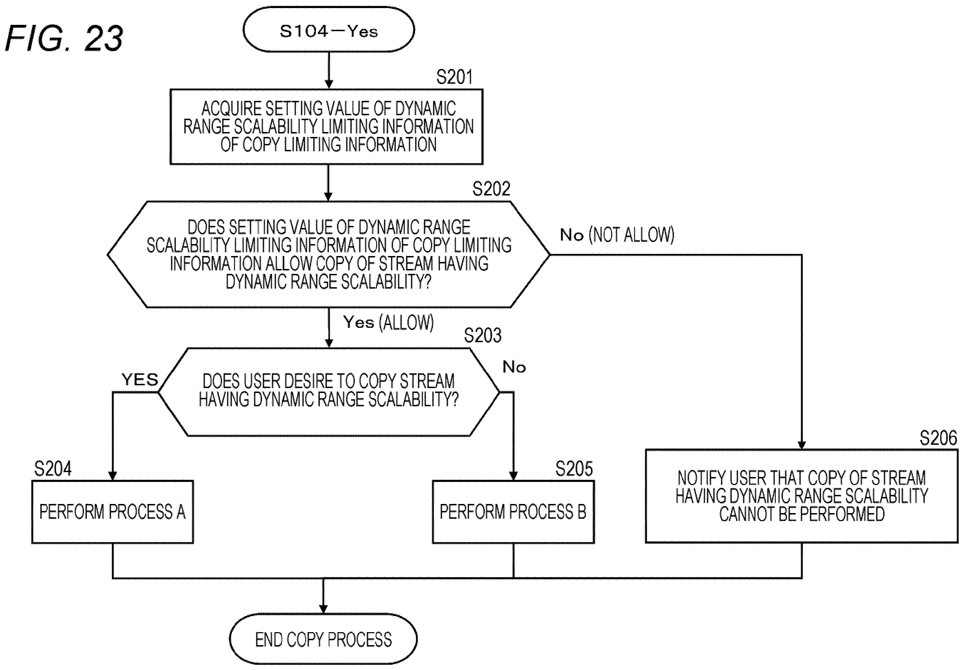

Next, a process of a case where it is determined in step S104 that copy is allowed on the basis of all the setting values of the region limiting information (region), the age limiting information (age), and the three-dimensional video (3D) limiting information included in the copy limiting information acquired from the server response information will be described with reference to flowcharts illustrated in Fig. 23 and subsequent drawings.

The process described with reference to the flowcharts illustrated in Figs. 23 to 26 is a detailed sequence of a process to which the dynamic range scalability limiting information included in the copy limiting information and the selection limiting information are applied. Hereinafter, the process of each step will be sequentially described.

(Step S201)

In step S201, the data processing unit of the information processing apparatus acquires the setting value of the dynamic range scalability limiting information of the copy limiting information.

As described above with reference to Fig. 15, the setting value of the dynamic range scalability limiting information of the copy limiting information is one of the following.

> (r1) allowing copy of only basic layer
> (r2) allowing copy of both basic layer and auxiliary layer
> (r3) not allowing copy of stream having dynamic range scalability

As the setting value of the dynamic range scalability limiting information of the copy limiting information, one of these (r1) to (r3) is recorded.

The data processing unit of the information processing apparatus performing a copy process, in step S201, checks the setting value of the dynamic range scalability limiting information of the copy limiting information that is one of (r1) to (r3) described above.

(Step S202)

Next, the data processing unit of the information processing apparatus, in step S202, determines whether or not the setting value of the dynamic range scalability limiting information of the copy limiting information allows copy of a stream having dynamic range scalability.

In other words, in a case where the setting value of the dynamic range scalability limiting information is one of the following (r1) and (r2), in other words, one of

> (r1) allowing copy of only basic layer and
> (r2) allowing copy of both basic layer and auxiliary layer,

it is determined that copy of a stream having dynamic range scalability is allowed, and the process proceeds to step S203.

On the other hand, in a case where the setting value of the dynamic range scalability limiting information is the setting of the following (r3), in other words,
(r3) not allowing copy of stream having dynamic range scalability,
it is determined that copy of a stream having dynamic range scalability is not allowed, and the process proceeds to step S206.

(Steps S203 to S205)

In step S202, in a case where it is checked that the setting value of the dynamic range scalability limiting information is one of

(r1) allowing copy of only basic layer and
(r2) allowing copy of both basic layer and auxiliary layer, and

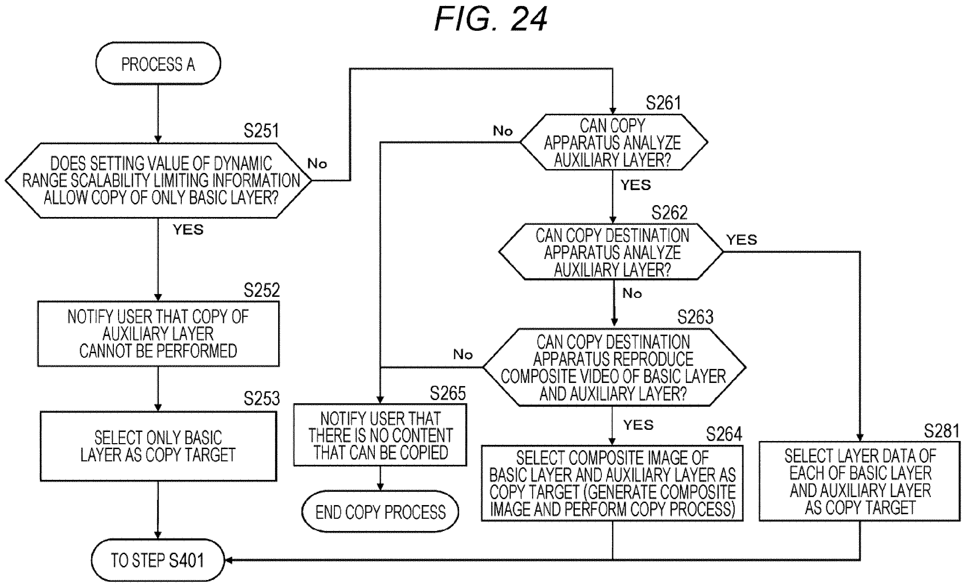

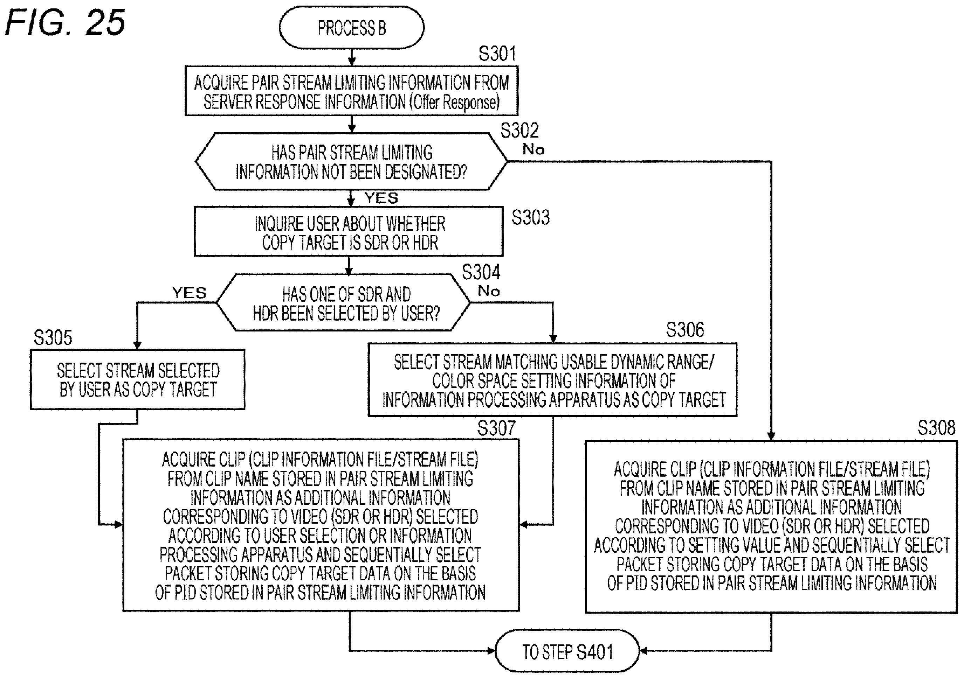

it is determined that copy of a stream having dynamic range scalability is allowed, the determination process of step S203 is performed.
In step S203, it is determined whether or not a user desires to copy a stream having dynamic range scalability.
This determination process, for example, is performed by a process of displaying a message inquiring a user of desiring to copy of a stream having dynamic range scalability in the display unit of the information processing apparatus and allowing the user to input a response, and the like.
In a case where it is checked that the user desires to copy a stream having dynamic range scalability, the process proceeds to step S204, and process A (a process according to the flow illustrated in Fig. 24) is performed.
On the other hand, in a case where it is checked that the user does not desire to copy a stream having dynamic range scalability, the process proceeds to step S205, and process B (a process according to the flow illustrated in Fig. 25) is performed.

(Step S206)

In step S202, in a case where it is checked that the setting value of the dynamic range scalability limiting information is the setting of (r3) not allowing copy of stream having dynamic range scalability, and it is determined that copy of a stream having dynamic range scalability is not allowed, the process of step S206 is performed.
In step S206, the data processing unit of the information processing apparatus notifies the user that copy of a stream having dynamic range scalability cannot be performed. For example, a message representing that copy cannot be performed is displayed in the display unit.
Next, the process A will be described with reference to a flowchart illustrated in Fig. 24.

The process A is a process that is performed in a case where it is checked in step S203 that the user desires to copy a stream having dynamic range scalability.
In addition, it is checked that the setting value of the dynamic range scalability limiting information is one of

(r1) allowing copy of only basic layer and
(r2) allowing copy of both basic layer and auxiliary layer, and

it is checked that copy of a stream having dynamic range scalability is allowed.

(Step S251)

The data processing unit of the information processing apparatus, in step S251, determines whether or not the setting value of the dynamic range scalability limiting information is a setting representing copy permission of only the basic layer. In other words, it is determined whether or not the setting value of the dynamic range scalability limiting information is not the setting of (r2) allowing copy of both basic layer and auxiliary layer but the setting of (r1) allowing copy of only basic layer.
In a case where the setting value of the dynamic range scalability limiting information is the setting of (r1) described above representing copy permission of only the basic layer, the process proceeds to step S252.
On the other hand, in a case where the setting value of the dynamic range scalability limiting information is the setting of (r2) allowing copy of both basic layer and auxiliary layer, the process proceeds to step S261.

(Step S252)

In a case where the setting value of the dynamic range scalability limiting information is the setting of (r1) described above representing copy permission of only the basic layer, the process proceeds to step S252.
In step S252, the data processing unit of the information processing apparatus notifies the user of no permission of copy of the auxiliary layer. For example, a notification message is displayed in the display unit.

(Step S253)

Next, the data processing unit of the information processing apparatus selects only the basic layer as a copy target and, in step S401 and subsequent steps, performs a copy process for a copy destination medium (second medium).
This copy process is performed as a copy process according to the setting value of the dynamic range scalability limiting information included in the copy limiting information of the server response information, in other words, the setting value of
(r1) allowing copy of only basic layer.

(Step S261)

On the other hand, in step S251, in a case where the setting value of the dynamic range scalability limiting information is not the setting representing copy permission of only the basic layer, in other words, the setting of (r2) allowing copy of both basic layer and auxiliary layer, the process of step S261 and subsequent steps is performed.

The data processing unit of the information processing apparatus, in step S261, determines whether or not the information processing apparatus (copy apparatus) performing the copy process can analyze an auxiliary layer.

As described above, as settings of a combination of the basic layer and the auxiliary layer, for example, there are the following settings.

(Layer Set Example a)

Basic layer = coded video data having a 10-bit depth
Auxiliary layer = auxiliary data used for extending to a 12-bit depth

(Layer Set Example b)

Basic layer = SDR video coded data
Auxiliary layer = auxiliary data used for generating HDR video

For example, there is a combination of such layer sets.

An information processing apparatus performing a copy process cannot be determined to be an apparatus capable of analyzing all the layer sets.

In a case where a copy process is performed, it is necessary to be able to analyze the data configuration and the like of the auxiliary layer, and, in a case where such an analysis cannot be performed, the copy process cannot be performed.

In a case where the auxiliary layer cannot be analyzed, the process proceeds to step S265.

In step S265, the data processing unit of the information processing apparatus notifies the user of no presence of a content that can be copied and ends the process.

On the other hand, in step S261, in a case where it is determined that the information processing apparatus (copy apparatus) performing the copy process can analyze the auxiliary layer, the process proceeds to step S262.

(Step S265)

In step S265, the user is notified that there is no content that can be copied, and the process ends. For example, a message notifying that there is no content that can be copied is output to the display unit of the information processing apparatus.

(Step S262)

In step S261, in a case where it is determined that the information processing apparatus (copy apparatus) performing the copy process can analyze the auxiliary layer, next, the information processing apparatus, in step S262, checks whether or not a copy destination apparatus performing data reproduction using a medium of the copy destination is an apparatus capable of analyzing the auxiliary layer.

In this checking process, for example, an inquiry message for the copy destination apparatus performing data reproduction using a medium of the copy destination is displayed in the display unit of the information processing apparatus, and the checking is performed on the basis of the input of a user's response.

In a case where it is checked that the copy destination apparatus performing the data reproduction using the medium of the copy destination is an apparatus capable of analyzing the auxiliary layer, the process proceeds to step S281.

On the other hand, in a case where it is not checked that the copy destination apparatus performing the data reproduction using the medium of the copy destination is an apparatus capable of analyzing the auxiliary layer, the process proceeds to step S263.

(Step S281)

In step S262, in a case where it is checked that the copy destination apparatus performing the data reproduction using the medium of the copy destination is an apparatus capable of analyzing the auxiliary layer, the process proceeds to step S281.

The information processing apparatus, in step S281, selects two layers including the basic layer and the auxiliary layer as copy targets and performs a copy process of step S401 and subsequent steps.

(Step S263)

In step S262, in a case where it is not checked that the copy destination apparatus performing the data reproduction using the medium of the copy destination is an apparatus capable of analyzing the auxiliary layer, the process proceeds to step S263.

In step S263, the information processing apparatus checks whether or not the copy destination apparatus performing the data reproduction using the medium of the copy destination is an apparatus capable of reproducing a composite image of the basic layer and the auxiliary layer.

In this checking process, for example, an inquiry message for the copy destination apparatus performing the data reproduction using the medium of the copy destination is displayed in the display unit of the information processing apparatus, and checking is performed on the basis of the input of a user's response.

In a case where it is checked that the copy destination apparatus performing the data reproduction using the medium of the copy destination is an apparatus capable of reproducing a composite image of the basic layer and the auxiliary layer, the process proceeds to step S264.

On the other hand, in a case where it is not checked that the copy destination apparatus performing the data reproduction using the medium of the copy destination is an apparatus capable of reproducing a composite image of the basic layer and the auxiliary layer, the process proceeds to step S265.

In step S265, the data processing unit of the information processing apparatus notifies the user of no presence of a content that can be copied and ends the process.

(Step S264)

In step S263, in a case where it is checked that the copy destination apparatus performing the data reproduction using the medium of the copy destination is an apparatus capable of reproducing a composite image of the basic layer and the auxiliary layer, the process proceeds to step S264.

The information processing apparatus, in stepS264, sets the composite image based on the basic layer and the auxiliary layer as copy process targets and performs a copy process of the composite image in step S401 and subsequent steps.

In other words, in this case, when a copy process is performed in step S401 and subsequent steps, the information processing apparatus performs a process of generating a composite image based on data of the basic layer and the auxiliary layer and recording the generated composite image in the copy destination medium (second medium).

Next, the process B illustrated in step S205 of the flow illustrated in Fig. 23 will be described with reference to a flowchart illustrated in Fig. 25.

The process B is performed in a case where the determination of step S202 of the flow illustrated in Fig. 23 is "Yes", and the determination of step S203 is "No", in other words, in a case where the following determinations are made.

(S202: Yes) : The setting value of the dynamic range scalability limiting information of the copy limiting information allows copy of a stream having dynamic range scalability, and

(S203: No): A user does not desire to copy a stream having dynamic range scalability.

In a case where such determinations are made, the process B is performed.

The process B will be described with reference to a flowchart illustrated in Fig. 25.

(Step S301)

The data processing unit of the information processing apparatus, in step S301, acquires the pair stream limiting information from the server response information (Offer Response).

As described above with reference to Fig. 15, the pair stream limiting information recorded in the server response information (Offer Response) is limiting information defining a stream that is a copy target to be limited to one of

    (1) an SDR (standard dynamic range) stream and
    (2) an HDR (high dynamic range) stream

or to be arbitrarily selectable for a user.

A specific data setting example of the pair stream limiting information recorded in the server response information (Offer Response), as described above with reference to Fig. 15 is as follows.

More specifically, the following attribute values representing a video stream allowed to be copied are set.

    Pair stream limiting information attribute value = -1 (no designation)
    Pair stream limiting information attribute value = 1 (SDR)
    Pair stream limiting information attribute value = 2 (HDR)

For example, one of such attribute values is set.

In addition, in the pair stream limiting information, each information described below is recorded as additional information.

    (a) a clip name and a PID of an SDR video stream
    (b) a clip name and a PID of an HDR video stream

An information processing apparatus performing a copy process can instantly select and acquire an SDR video stream or an HDR video stream that is a copy target using the information.

As the pair stream limiting information, in a case where one of attribute values of

    Pair stream limiting information attribute value = 1 (SDR) and
    Pair stream limiting information attribute value = 2 (HDR),

in other words, designation data of one of "1" (SDR) and "2" (HDR) is recorded,
the information processing apparatus 120 can select and copy the designation data of the one (SDR video data or HDR video data).

On the other hand, as (2d) Pair stream limiting information, in a case where

> the pair stream limiting information attribute value = -1 (no designation)
> is recorded,
> the information processing apparatus 120 can selectively copy one of the SDR (standard dynamic range) stream and the HDR (high dynamic range) stream in accordance with user's selection.

(Step S302)

The data processing unit of the information processing apparatus, in step S302, determines whether or not the pair stream limiting information is "no designation", in other words, the setting of
Pair stream limiting information attribute value = -1 (no designation).
In a case where the pair stream limiting information is the setting of "-1 (no designation)", the user can freely select and copy any one of an SDR (standard dynamic range) stream and an HDR (high dynamic range) stream.
In a case where the pair stream limiting information is the setting of "-1 (no designation) ", the process proceeds to step S303.
On the other hand, in a case where the pair stream limiting information is not the setting of "-1 (no designation)", in other words, is one of the settings "1 (SDR) and 2 (HDR) " of

> Pair stream limiting information attribute value = 1 (SDR) and
> Pair stream limiting information attribute value = 2 (HDR),

the process proceeds to step S308.
In addition, in this case, the information processing apparatus 120 can select and copy designation data of any one of the SDR and the HDR.

(Steps S303 and S304)

In step S302, in a case where it is checked that the pair stream limiting information is the setting of "-1 (no designation)", the process proceeds to step S303.
In step S303, the information processing apparatus inquires about whether the copy target data is the SDR video or the HDR video.
In step S304, in a case where selection information (SDR or HDR) of the copy target data is acquired from the user, the process proceeds to step S305.

On the other hand, in a case where selection information (SDR or HDR) of the copy target data is not acquired from the user, the process proceeds to step S306.

(Step S305)

In step S304, in a case where selection information (SDR or HDR) of the copy target data is acquired from the user, the process proceeds to step S305.
In step S305, the information processing apparatus selects a stream selected by the user, in other words, one of the SDR stream and the HDR stream as copy target data.

(Step S306)

On the other hand, in step S304, in a case where the selection information (SDR or HDR) of the copy target data is not acquired from the user, the process proceeds to step S306.
In step S306, the information processing apparatus selects copy target data in accordance with the dynamic range and the color space setting information of the information processing apparatus.
In other words, in a case where the information processing apparatus is an apparatus capable of analyzing and using the dynamic range and the color space corresponding to an HDR video, HDR video data is selected as a copy target.
On the other hand, in a case where the information processing apparatus is not an apparatus capable of analyzing and using the dynamic range and the color space corresponding to an HDR video, SDR video data is selected as a copy target.

(Step S307)

In step S305 or S306, when the copy target data is determined, the information processing apparatus, in step S307, performs the following process.
As additional information corresponding to the video (SDR or HDR) selected according to the user selection or the information processing apparatus, a clip (a clip information file/a stream file) is acquired from the clip name stored in the pair stream limiting information, and packets storing the copy target data are sequentially selected on the basis of a PID corresponding to the selected stream (HDR or SDR).
After the selection of such copy target data (packet), the copy process of step S401 and subsequent steps is performed.

(Step S308)

On the other hand, in step S302, in a case where the setting of the pair stream limiting information recorded in the server response information (Offer Response) is not the setting of "-1 (no designation) ", in other words, the setting is one of "1 (SDR) and 2 (HDR)" of

> Pair stream limiting information attribute value = 1 (SDR) and
> Pair stream limiting information attribute value = 2 (HDR),

the process of step S308 is performed.

The information processing apparatus performs the following process in step S308.

In accordance with the setting value of the pair stream limiting information, in other words, the setting value of "1 (SDR) "or "2 (HDR) ", as additional information corresponding to the selected video (SDR or HDR), a clip (a clip information file/stream file) is acquired from the clip name stored in the pair stream limiting information, and, on the basis of the PID corresponding to the stream, packets storing copy target data are sequentially selected.

After the selection of such copy target data (packet), the copy process of step S401 and subsequent steps is performed.

In addition, copy target data selected in step S308 is different according to the setting of the pair stream limiting information.

In a case where the setting of the pair stream limiting information is
Pair stream limiting information attribute value = 1 (SDR), the copy target data is an SDR video.

On the other hand, in a case where the setting of the pair stream limiting information is
Pair stream limiting information attribute value = 2 (HDR), the copy target data is an HDR video.

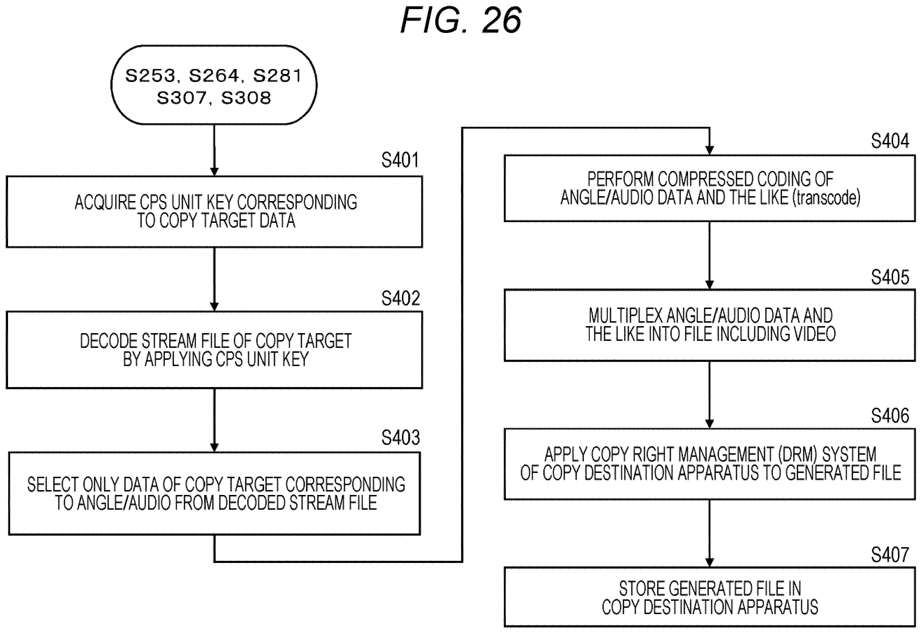

Next, the sequence of a copy process performed after the determination of copy target data will be described with reference to a flowchart illustrated in Fig. 26.

The process of step S401 and subsequent steps illustrated in Fig. 26 is performed after each of the following processes (1) to (5) is performed.

> (1) Step S253 of the flow illustrated in Fig. 24 = the process of determining only the basic layer as copy target data
> (2) Step S264 of the flow illustrated in Fig. 24 = the process of determining a composite image generated by the basic layer and the auxiliary layer as copy target data
> (3) Step S281 of the flow illustrated in Fig. 24 = the process of determining each of the basic layer and the auxiliary layer as copy target data
> (4) Step S307 of the flow illustrated in Fig. 25 = the process of acquiring a clip (clip information file/stream file) from a clip name stored in the pair stream limiting information as additional information corresponding to the video (SDR or HDR) selected according to user selection or the information processing apparatus and sequentially selecting packets storing the copy target data on the basis of a PID corresponding to the selected stream (HDR or SDR)
> (5) Step S308 of the flow illustrated in Fig. 25 = the process of acquiring a clip (clip information file/streamfile) from a clip name stored in the pair stream limiting information as additional information corresponding to the video (SDR or HDR) selected according to the setting value of the pair stream limiting information, in other words, the setting value of "1 (SDR)" or "2 (HDR)" and sequentially selecting packets storing the copy target data on the basis of a PID corresponding to the stream

The process of step S401 and subsequent steps illustrated in Fig. 26 is performed after each of the processes (1) to (5) described above is performed.

Hereinafter, each process of step S401 and subsequent steps will be described.

(Step S401)

First, in step S401, a CPS unit key applied to the process of decoding data selected as a copy target is acquired.

The CPS unit key can be selected and acquired, for example, on the basis of title information associated with the data selected as the copy target.

(Step S402)

Next, in step S402, a process of decoding a stream file that is a copy target by applying the CPS unit key acquired in step S401 is performed.

(Step S403)

Next, in step S403, a process of limiting the copy target data to a specific angle, a specific audio, and a specific subtitle is performed. These are processes of extracting data corresponding to the settings of the angle, the audio, the subtitle, and the pair stream limiting information of copy allowed data, for example, according to the selection limiting information.

(Step S404)

In step S404, compression and coding (transcode) of the selected data is performed. This, for example, is performed as a process according to a copy destination medium.

(Step S405)

Next, in step S405, a multiplexing file corresponding to the format of the copy destination medium is generated.

For example, in a case where the copy destination medium is configured to perform data recording according to the MP4 format, a file and the like corresponding to the MP4 format described above with reference to Figs. 10 and 11 are generated.

(Step S406)

Next, in step S406, an encryption process is performed by applying a key according to the copyright management system (DRM) of the copy destination medium.

(Step S407)

Finally, in step S407, an encrypted stream file and the other management information files (a playlist, a clip information file, and the like) are recorded in a second medium (in this example, a flash memory or the like) that is the copy destination medium.

The copy process is completed according to such processes.

In addition, when the copy process is performed, limiting information included in the response information (Offer Response) provided by the management server 140 for the information processing apparatus 120, in other words, the copy limiting information may be configured to be recorded together in the copy destination medium (second medium).

In a case where copy data is reproduced from the copy destination medium (second medium), reproduction control applying the limiting information included in the response information (Offer Response), in other words, the copy limiting information as reproduction limiting information can be performed.

[9. Configuration Example of Information Processing Apparatus]

Next, a configuration example of the information processing apparatus performing the process according to the embodiment described above will be described.

[9-1. Configuration Example of Information Processing Apparatus Performing Format Conversion and Data Recording Process]

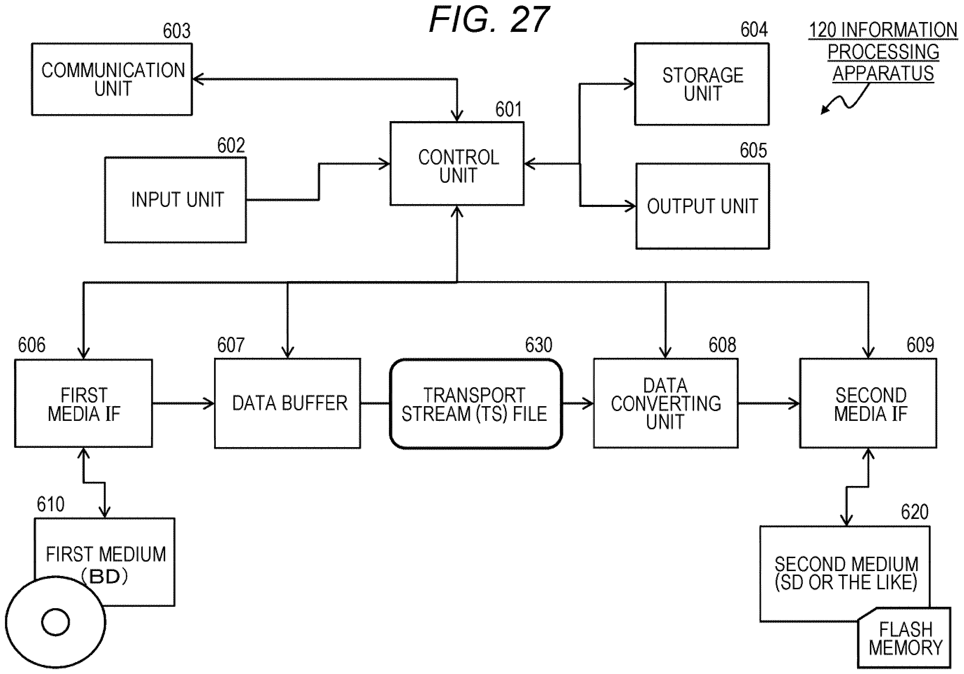

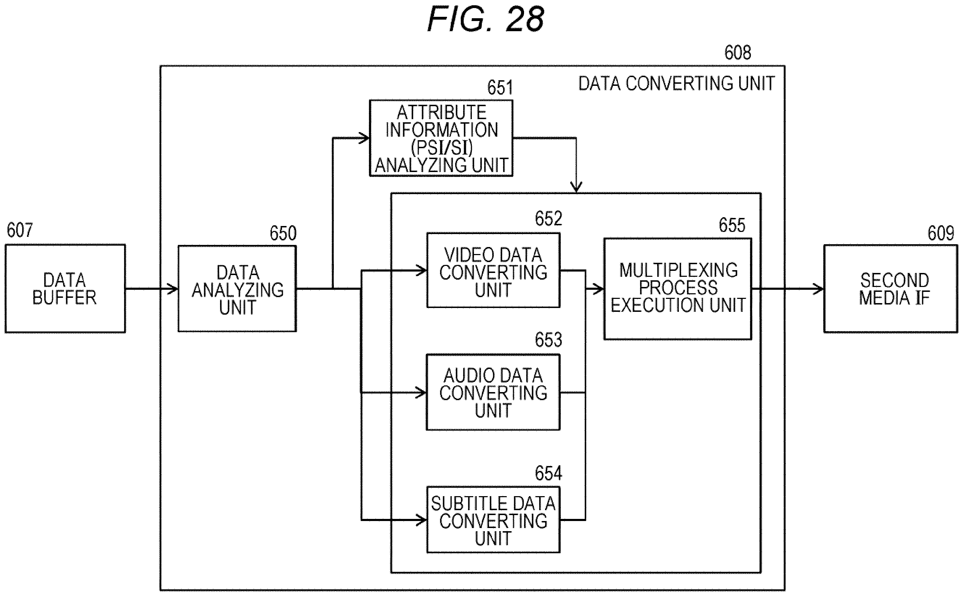

First, the configuration example of the information processing apparatus performing a format conversion and a data recording process will be described with reference to Figs. 27 and 28.

The information processing apparatus 120 illustrated in Fig. 27 is an information processing apparatus that records MP4 format data generated by converting MPEG-2 TS format data recorded in a first medium 610 in a second medium 620.

The information processing apparatus 120 performs a so-called copy process in which data recorded in the first medium 610 that is an information recording medium, for example, a Blu-ray (registered trademark) disc (BD) or the like and records the read data in the second medium 620 that is an information recording medium such as a flash memory or the like.

Alternatively, a process of recording data input through a communication unit 603 in a second medium 620 such as a flash memory or the like is performed.

In addition, the data format of data input through the first medium 610 or the communication unit 603 will be referred to as a first format, and the format of data recorded in the second medium 620 will be referred to as a second format.

When the data of the first format input through the first medium 610 or the communication unit 603 is recorded in the second medium 620 such as a flash memory or the like, the information processing apparatus performs a process of converting the first format data into second format data.

In addition, in the embodiment described above, the format of the data input from the first medium 610 or the communication unit 603 is data of the BDMV format including reproduction target data recorded according to the MPEG-2 TS format, and the recording format of the second medium is the MP4 format.

When the data recording process for the second medium 620 is performed, the information processing apparatus 100 performs a format conversion of the BDMV format, or the MPEG-2 TS format into the MP4 format.

The information processing apparatus 120, as illustrated in Fig. 27, includes: a control unit 601; an input unit 602; the communication unit 603; a storage unit 604; an output unit 605; a first media interface (IF) 606; a data buffer 607; a data converting unit 608; and a second media IF 609.

The control unit 601 functions as a data processing unit and controls data processes performed by the information processing apparatus 120 such as data recording/reproducing using a medium, a data copying process between media, and the like. Such control is performed according to a program, for example, stored in the storage unit 604.

The input unit 602 is an input unit such as a switch, a button, a touch panel, or the like that can be operated by a user and is an input unit that performs instruction input of various processes such as reproduction, copy, recording, and the like.

In addition, the input unit 602 may be configured to include an imaging unit or a microphone that inputs a video, an audio, or the like to be recorded in a medium.

The communication unit 603, for example, communicates with an external server or an external apparatus and is used for various communication processes such as acquisition of recording data for a medium, control information relating to recording data, permission information of a copy process, and the like.

The storage unit 604 is used as a storage area of a program executed by the control unit 601 and parameters and the like used for executing the program, a work area at the time of executing the program and the like.

More specifically, when data is recorded in the second medium 620, the storage unit 604 is used also as an area that temporarily stores data read from the first medium 610 and data input through the communication unit 603.

The storage unit 604, for example, is configured by a RAM, a ROM, and the like.

The output unit 605 is configured using an output unit for an external apparatus and an output unit of reproduction data from a medium. For example, the output unit 605 is used for display of a progress status of a data recording process for the second medium 620, display of a message for a user, and the like and includes a display, a speaker, and the like.

The first media interface (IF) 606 is an interface serving as a data recording/reproducing unit that performs data recording or data reading for the first medium 610, for example, by accessing the first medium 610 such as a Blu-ray (registered trademark) disc (BD) or the like.

The data buffer 607 is a buffer that temporarily stores data read from the first medium 610 or data input from the communication unit 603. For example, the data buffer 607 temporarily stores data to be recorded in the second medium 620.

The data convertingunit 608 performs a format conversion process of converting data of the first format that is the format of the recording data of the first medium 610 or the data input through the communication unit 603 into the second format that is the data format at the time of recording data in the second medium 620 that is a data recording destination.

The second media interface (IF) 609 is an interface that serves as a recording/reproducing unit performing a data recording/reading process for the second medium 620 by accessing the second medium 620.

In this way, the information processing apparatus 120 performs the process of recording data of the first format input through the first medium 610 or the communication unit 603 in the second medium 620 such as a flash memory or the like. When this process is performed, the process of converting the first format data into the second format data is performed.

In addition, the first format, for example, is the BDMV format or the MPEG-2 TS format data, and the second format is MP4 format data.

In addition, the information processing apparatus 120 may perform a process of acquiring data that cannot be acquired from the first medium 610 from an external server through the communication unit 603 and recording data read from the first medium 610 and received data acquired through the communication unit 603 together in the second medium 620.

In addition, in the configuration illustrated in Fig. 27, the first medium 610, for example, is a Blu-ray (registered trademark) disc (BD). The second medium 620, for example, is a flash memory such as an SD card or the like.

In addition, the first medium 610 and the second medium 620 are not limited to the combination described above, and various combinations thereof may be employed.

Next, a detailed configuration of the data converting unit 608 will be described with reference to Fig. 28.

As illustrated in Fig. 28, the data converting unit 608 includes: a data analyzing unit 650; an attribute information (PSI/SI) analyzing unit 651; a video data converting unit 652; an audio data converting unit 653; a subtitle data converting unit 654; and a multiplexing process execution unit 655.

The data analyzing unit 650 classifies data (packets) into various types of data of

video data,
audio data,
subtitle data, and
attribute information (PSI/SI)
on the basis of packet identifiers (PID) set in data,
which is stored in the data buffer 607, read from the
first medium 610 or data (packets) input through the
communication unit 603.

The data analyzing unit 650 outputs the attribute information (PSI/SI) to the attribute information (PSI/SI) analyzing unit 651. The data analyzing unit 650 further outputs the video data to the video data converting unit 652, outputs the audio data to the audio data converting unit 653, and outputs the subtitle data to the subtitle data converting unit 654.

The attribute information (PSI/SI) analyzing unit 651 acquires attribute information in units of elementary streams from the program map table (PMT) disposed inside the PSI/SI.

The program map table (PMT) includes a PID that is a packet identifier of a TS packet and a map as correspondence information of a data type. The information processing apparatus performing a process for a TS packet, first, refers to the PMT, checks a PID corresponding to the data of each of a video, an audio, a subtitle, and the other control information (attribute information), divides received packets for each data type on the basis of the checked PID corresponding to each data type, and performs a process according to each data type.

In the program map table (PMT), video attribute information of a video elementary stream and the like are recorded.

On the basis of the video attribute information in units of streams (ES) recorded in the PMT, a video stream that is a copy target can be selected.

Each of the video data converting unit 652, the audio data converting unit 653, and the subtitle data converting unit 654 performs a process of converting data of the first format that is the data format of input data, for example, MPEG-2 TS format data into data of the second format recorded in the second medium 620, more specifically, for example, the MP4 format.

In other words, the video data converting unit 652 generates video data of the MP4 format that is the data recording format for the second medium 620 and outputs the generated video data to the multiplexing process execution unit 655.

The audio data converting unit 653 generates audio data of the MP4 format and outputs the generated audio data to the multiplexing process execution unit 655.

The subtitle data converting unit 654 generates subtitle data of the MP4 format and outputs the generated subtitle data to the multiplexing process execution unit 655.

The multiplexing process unit 655, for example, performs a multiplexing process of

> (a) video format data in the second format (MP4) generated by the video data generating unit 652,
> (b) audio format data in the second format (MP4) generated by the audio data generating unit 653,
> (c) subtitle format data in the second format (MP4) generated by the subtitle data generating unit 654, and
> (d) metadata in the second format (MP4) generated by the attribute information (PSI/SI) analyzing unit 652

and generates recording data in the second format (MP4) .

The data generated by the multiplexing process execution unit 655 is recorded in the second medium 620 through the second media interface 609.

In this way, the information processing apparatus 120 performs a process of converting the recorded data of the first medium 610 or data of the first format (MPEG-2 TS format) input through the communication unit 603 into the second format (MP4) that is a recording format of the secondmedium 620 and recording the converted data in the second medium 620.

[9-2. Example of Hardware Configuration of Information Processing Apparatus]

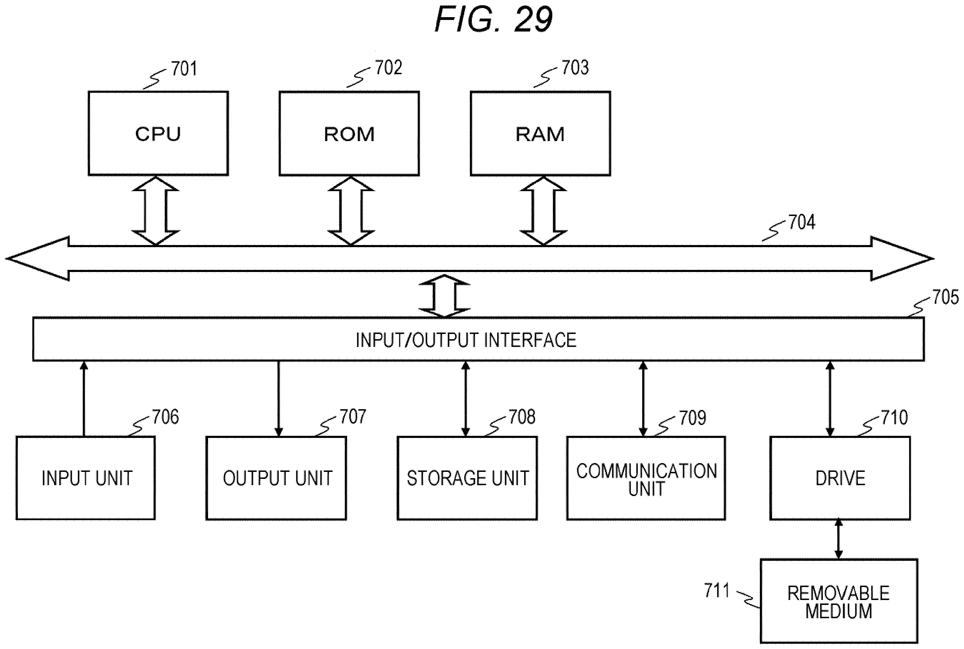

Next, an example of the hardware configurations of the information processing apparatus performing data copy and a data recording and reproducing process and the copy management server will be described with reference to Fig. 29.

A central processing unit (CPU) 701 functions as a data processing unit that performs various processes in accordance with a program stored in a read only memory (ROM) 702 or a storage unit 708. For example, the CPU 701 performs a process according to the sequence described in the embodiment described above. In a random access memory (RAM) 703, a program executed by the CPU 701, data, and the like are stored.

The CPU 701, the ROM 702, and the RAM 703 are interconnected through a bus 704.

The CPU 701 is connected to an input/output interface 705 through the bus 704, and an input unit 706 configured by various switches, a keyboard, a mouse, a microphone, and the like and an output unit 707 configured by a display, a speaker, and the like are connected to the input/output interface 705. The CPU 701 performs various processes in correspondence with an instruction input from the input unit 706 and outputs results of the processes, for example, to the output unit 707.

The storage unit 708 connected to the input/output interface 705, for example, is configured by a hard disk or the like and stores a program executed by the CPU 701 and various kinds of data. The communication unit 709 functions as transmitting/receiving unit of data communication through a network such as the Internet, a local area network, or the like and further functions as a transmitting/receiving unit of broadcast waves and communicates with external apparatuses .

A drive 710 connected to the input/output interface 705 performs data recording or data reading by driving a removable medium 711 such as a magnetic disc, an optical disc, a magneto-optical disk, or a semiconductor memory including a memory card or the like.

In addition, while coding or decoding of data can be performed as a process of the CPU 701 serving as a data processing unit, a codec as hardware dedicatedly used for performing a coding process or a decoding process may be configured to be included.

[10. Summary of Configuration of Present Disclosure]

As above, the embodiment of the present disclosure has been described in detail while referring to a specific example . However, it is apparent that modifications or substitutions may be made by a person skilled in the art in the embodiment in a range not departing from the concept of the present disclosure. In other words, the present invention is disclosed in the form of an example and thus, should not be interpreted in a limited manner. In order to determine the concept of the present disclosure, the claims need to be referred to.

In addition, a series of processes described in the specification may be performed using hardware, software, or a combined configuration of both thereof. In a case where the process using software is performed, a program recording the processing sequence may be installed in a memory disposed inside a computer embedded in dedicated hardware and executed, or the program may be installing in a general computer capable of performing various processes and executed. For example, the program may be recorded in a recording medium in advance. Other than installing the program in a computer from a recording medium, the program may be received through a network such as a local area network (LAN) or the Internet and installed in a recording medium such as a built-in hard disk or the like.

In addition, various processes described in the specification may not only be performed according to the description in a time series but also be performed parallel or individually depending on the processing capability of an apparatus performing the process or as is necessary. In addition, in this specification, a system is a logical aggregated configuration of a plurality of apparatuses, and apparatuses of the configuration are not limited to being disposed inside a same casing.

INDUSTRIAL APPLICABILITY

As described above, according to the configuration of one embodiment of the present disclosure, a configuration enabling selective copy permission for each layer of a basic layer and an auxiliary layer used for the reproduction of video data is realized.

More specifically, for example, a copy execution apparatus performing a data copying process between media performs a process of receiving dynamic range scalability limiting information that is copy limiting information recording whether or not copy is allowed for each of a basic layer and an auxiliary layer used for reproduction of video data from a copy management server, determining whether or not copy is allowed for each of the layers, selecting layer data allowed to be copied or video data generated on the basis of the copy-allowed layer data, and copying the selected data to a second medium.

According to the present configuration, a configuration enabling selective copy permission for each of a basic layer and an auxiliary layer used for reproduction of video data is realized.

REFERENCE SIGNS LIST

| 10 | First medium |
| 20 | Information processing apparatus |
| 30 | Second medium |
| 50 | Management server |
| 51 | Management information setting unit |
| 52 | Data section |
| 110 | First medium |
| 111 | Copy control management file |
| 112 | Management data |
| 113 | Encrypted content |
| 120 | Information processing apparatus |
| 121 | Copy allowing list |
| 122 | Copy permission information |
| 131 | Server response information |
| 132 | Settlement data |
| 140 | Management server |
| 150 | Second medium |
| 151 | Encrypted content |
| 181 | BDMV format data |
| 182 | MP4 format data |
| 601 | Control unit |

| 602 | Input unit |
| 603 | Communication unit |
| 604 | Storage unit |
| 605 | Output unit |
| 606 | First media interface |
| 607 | Data buffer |
| 608 | Data converting unit |
| 609 | Second media interface |
| 610 | First medium |
| 620 | Second medium |
| 650 | Data analyzing unit |
| 651 | Attribute information (PSI/SI) analyzing unit |
| 652 | Video data converting unit |
| 653 | Audio data converting unit |
| 654 | Subtitle data converting unit |
| 655 | Multiplexing process unit |
| 701 | CPU |
| 702 | ROM |
| 703 | RAM |
| 704 | Bus |
| 705 | Input/output interface |
| 706 | Input unit |
| 707 | Output unit |
| 708 | Storage unit |
| 709 | Communication unit |
| 710 | Drive |
| 711 | Removable medium |

Claims

1. An information processing apparatus (20; 120) comprising

　　a data processing unit that performs a copy process of recording recording data of a first medium in a second medium,
　　wherein the data processing unit is adapted to:

　　　　receive dynamic range scalability limiting information that is copy limiting information recording whether or not copy is allowed for each of a basic layer and an auxiliary layer used for reproduction of video data from a copy management server; and
　　　　refer to the dynamic range scalability limiting information in a case where video data that can be generated using the basic layer and the auxiliary layer is recorded in the first medium;

　　wherein the data processing unit is further adapted to
　　determine whether a setting of the dynamic range scalability limiting information is one of following (a) to (c),

　　　　(a) allowing copy of only the basic layer,

(b) allowing copy of both the basic layer and the auxiliary layer, and
(c) not allowing copy of a stream having dynamic range scalability,

and select layer data determined to be allowed to be copied on the basis of a result of the determination, and performs a copy process for the second medium. and
wherein the data processing unit, in a case where the setting of the dynamic range scalability limiting information is the setting of (b) allowing copy of both the basic layer and the auxiliary layer, is further adapted to
determine whether or not a copy process execution apparatus and a reproduction apparatus performing data reproduction from a copy destination medium can analyze the auxiliary layer, and
perform a copy process of the auxiliary layer under a condition that any one of the apparatuses can analyze the auxiliary layer.

2. The information processing apparatus according to claim 1, wherein
in a case where only the copy process execution apparatus is determined to be able to analyze the auxiliary layer, generates a composite image from the basic layer and the auxiliary layer and performs a copy process of the generated composite image.

3. The information processing apparatus according to claim 1, wherein two layers of the basic layer and the auxiliary layer are a combination of

coded video data, which has a 10-bit depth, of the basic layer and
auxiliary data used for extending to a 12-bit depth of the auxiliary layer; or

wherein two layers of the basic layer and the auxiliary layer are a combination of

standard dynamic range (SDR) video coded data of the basic layer and
auxiliary data used for generating a high dynamic range (HDR) image of the auxiliary layer.

4. The information processing apparatus according to claim 1, wherein the data processing unit, in a case where a reproduction apparatus performing reproduction of copy data from the second medium can perform reproduction control using the dynamic range scalability limiting information as reproduction allowing information, generates an attribute file including the dynamic range scalability limiting information and records the generated attribute file in the second medium together with the copy data.

5. A copy management server (50) comprising

a data processing unit adapted to provide copy limiting information for a copy execution apparatus performing a copy process of recording recording data of a first medium in a second medium,
wherein the data processing unit is further adapted to generate the copy limiting information including dynamic range scalability limiting information that is the copy limiting information recording whether or not copy is allowed for each of a basic layer and an auxiliary layer used for reproduction of video data and transmits the generated copy limiting information to the copy execution apparatus; and
wherein the data processing unit is further adapted to generate the copy limiting information including the dynamic range scalability limiting information of which setting is one of settings of following (a) to (c),

(a) allowing copy of only the basic layer,
(b) allowing copy of both the basic layer and the auxiliary layer, and
(c) not allowing copy of a stream having dynamic range scalability,

and transmits the generated copy limiting information to the copy execution apparatus.

6. An information processing system comprising:

a copy management server (50) as defined in claim 5; and
a copy execution apparatus (20; 120) as defined in claim 1

7. An information processing method performed by an information processing apparatus,

wherein the information processing apparatus includes a data processing unit that performs a copy process of recording recording data of a first medium in a second medium, the method comprising:

receiving dynamic range scalability limiting information that is copy limiting information recording whether or not copy is allowed for each of a basic layer and an auxiliary layer used for reproduction of video data from a copy management server;
refering to the dynamic range scalability limiting information in a case where video data that can be generated using the basic layer and the auxiliary layer is recorded in the first medium; and

determining whether a setting of the dynamic range scalability limiting information is one of following (a) to (c),

(a) allowing copy of only the basic layer,
(b) allowing copy of both the basic layer and the auxiliary layer, and
(c) not allowing copy of a stream having dynamic range scalability,

and selecting layer data determined to be allowed to be copied on the basis of a result of the determination, and performs a copy process for the second medium. and
wherein in a case where the setting of the dynamic range scalability limiting information is the setting of (b) allowing copy of both the basic layer and the auxiliary layer, determining whether or not a copy process execution apparatus and a reproduction apparatus performing data reproduction from a copy destination medium can analyze the auxiliary layer, and performing a copy process of the auxiliary layer under a condition that any one of the apparatuses can analyze the auxiliary layer.

8. An information processing method performed by a copy management server, the method comprising:

providing copy limiting information for a copy execution apparatus performing a copy process of recording recording data of a first medium in a second medium,
generating the copy limiting information including dynamic range scalability limiting information that is the copy limiting information recording whether or not copy is allowed for each of a basic layer and an auxiliary layer used for reproduction of video data and transmits the generated copy limiting information to the copy execution apparatus;
generating the copy limiting information including the dynamic range scalability limiting information of which setting is one of settings of following (a) to (c),

(a) allowing copy of only the basic layer,
(b) allowing copy of both the basic layer and the auxiliary layer, and
(c) not allowing copy of a stream having dynamic range scalability; and

transmitting the generated copy limiting information to the copy execution apparatus.

9. A program comprising instructions which when performed by an information processing apparatus causes the information processing apparatus to perform the method as defined in claim 7.

10. A program comprising instructions which when performed by a copy management server causes the copy management server to perform the method as defined in claim 8.

**Patentansprüche**

1. Informationsverarbeitungsvorrichtung (20; 120), umfassend:

eine Datenverarbeitungseinheit, die einen Kopierprozess zum Aufzeichnen von Aufzeichnungsdaten eines ersten Mediums in einem zweiten Medium ausführt,
wobei die Datenverarbeitungseinheit geeignet ist zum:

Empfangen von Begrenzungsinformationen einer dynamischen Bereichsskalierbarkeit, das heißt, dass Kopierbegrenzungsinformationen aufzeichnen, ob ein Kopieren gegebenenfalls für jede von einer Basisschicht und einer Zusatzschicht erlaubt ist, die für eine Wiedergabe von Videodaten von einem Kopienverwaltungsserver verwendet werden; und
Bezugnehmen auf die Begrenzungsinformationen der dynamischen Bereichsskalierbarkeit in einem Fall, in dem die Videodaten, die mithilfe der Basisschicht und der Zusatzschicht erzeugt werden können, in dem ersten Medium aufgezeichnet werden;

wobei die Datenverarbeitungseinheit außerdem geeignet ist zum
Ermitteln, ob eine Einstellung der Begrenzungsinformationen der dynamischen Bereichsskalierbarkeit eine von den folgenden (a) bis (c) ist,

(a) Erlauben eines Kopierens nur von der Basisschicht,
(b) Erlauben eines Kopierens sowohl von der Basisschicht als auch von der Zusatzschicht, und
(c) Nicht-Erlauben eines Kopierens eines Streams, der eine dynamische Bereichsskalierbarkeit aufweist,

und zum Auswählen von Schichtdaten, für die ermittelt wurde, dass es erlaubt ist, dass sie auf der Grundlage eines Ergebnisses der Ermittlung kopiert werden, und zum Ausführen eines Kopierprozesses für das zweite Medium, und
wobei die Datenverarbeitungseinheit, in einem Fall, in dem die Einstellung der Begrenzungsinformationen der dynamischen Bereichsskalierbarkeit die Einstellung von (b) ist, die ein Kopieren sowohl von der Basisschicht als auch von der Zusatzschicht erlaubt, außerdem geeignet ist zum

Ermitteln, ob gegebenenfalls eine Kopierprozessausführungsvorrichtung und eine Wiedergabevorrichtung, die eine Datenwiedergabe von einem Kopierzielmedium ausführt, die Zusatzschicht analysieren kann, und zum Ausführen eines Kopierprozesses der Zusatzschicht unter einer Bedingung, dass eine der Vorrichtungen die Zusatzschicht analysieren kann.

2. Informationsverarbeitungsvorrichtung nach Anspruch 1, wobei in einem Fall, in dem nur für die Kopierprozessausführungsvorrichtung ermittelt wird, dass sie in der Lage ist, die Zusatzschicht zu analysieren, ein zusammengesetztes Bild aus der Basisschicht und der Zusatzschicht erzeugt wird und ein Kopierprozess des erzeugten zusammengesetzten Bildes ausgeführt wird.

3. Informationsverarbeitungsvorrichtung nach Anspruch 1, wobei zwei Schichten der Basisschicht und der Zusatzschicht eine Kombination sind

   von codierten Videodaten aus der Basisschicht, die eine 10-Bit-Tiefe aufweisen, und
   von Zusatzdaten aus der Zusatzschicht, die verwendet werden, um sie auf eine 12-Bit-Tiefe zu erweitern; oder
   wobei zwei Schichten der Basisschicht und der Zusatzschicht eine Kombination sind
   von codierten Videodaten mit einem Standarddynamikbereich (SDR) aus der Basisschicht und
   von Zusatzdaten aus der Zusatzschicht, die verwendet werden, um ein Bild mit einem hohen Dynamikbereich (HDR) zu erzeugen.

4. Informationsverarbeitungsvorrichtung nach Anspruch 1, wobei die Bildverarbeitungseinheit in einem Fall, in dem eine Wiedergabevorrichtung, die eine Wiedergabe von Kopiedaten von dem zweiten Medium ausführt, eine Wiedergabesteuerung ausführen kann, welche die Begrenzungsinformationen der dynamischen Bereichsskalierbarkeit als Informationen zum Erlauben einer Wiedergabe verwendet, eine Attributdatei erzeugt, welche die Begrenzungsinformationen der dynamischen Bereichsskalierbarkeit enthält, und die erzeugte Attributdatei zusammen mit den Kopiedaten in dem zweiten Medium aufzeichnet.

5. Kopienverwaltungsserver (50), umfassend:

eine Datenverarbeitungseinheit, die geeignet ist zum Bereitstellen von Kopierbegrenzungsinformationen für eine Kopierausführungsvorrichtung, die einen Kopierprozess zum Aufzeichnen von Aufzeichnungsdaten eines ersten Mediums in einem zweiten Medium ausführt,
wobei die Datenverarbeitungseinheit außerdem geeignet ist zum Erzeugen der Kopierbegrenzungsinformationen, die Begrenzungsinformationen einer dynamischen Bereichsskalierbarkeit aufweisen, das heißt, dass Kopierbegrenzungsinformationen aufzeichnen, ob gegebenenfalls ein Kopieren für jede von einer Basisschicht und einer Zusatzschicht erlaubt ist, die für eine Wiedergabe von Videodaten verwendet werden, und zum Übertragen der erzeugten Kopierbegrenzungsinformationen zu der Kopierausführungsvorrichtung; und
wobei die Datenverarbeitungseinheit außerdem geeignet ist zum Erzeugen der Kopierbegrenzungsinformationen, welche die Begrenzungsinformationen der dynamischen Bereichsskalierbarkeit aufweisen, deren Einstellung eine der folgenden Einstellungen (a) bis (c) ist,

   (a) Erlauben eines Kopierens nur von der Basisschicht,
   (b) Erlauben eines Kopierens sowohl von der Basisschicht als auch von der Zusatzschicht, und
   (c) Nicht-Erlauben eines Kopierens eines Streams, der eine dynamische Bereichsskalierbarkeit aufweist, und

zum Übertragen der erzeugten Kopierbegrenzungsinformationen zu der Kopierausführungsvorrichtung.

6. Informationsverarbeitungssystem, umfassend:

   einen Kopienverwaltungsserver (50) nach Anspruch 5, und
   eine Kopierausführungsvorrichtung (20; 120) nach Anspruch 1.

7. Informationsverarbeitungsverfahren, das durch eine Informationsverarbeitungsvorrichtung ausgeführt wird,
wobei die Informationsverarbeitungsvorrichtung eine Datenverarbeitungseinheit aufweist, die einen Kopierprozess zum Aufzeichnen von Aufzeichnungsdaten eines ersten Mediums in einem zweiten Medium ausführt, wobei das Verfahren umfasst:

   Empfangen von Begrenzungsinformationen einer dynamischen Bereichsskalierbarkeit, das heißt, dass Kopierbegrenzungsinformationen aufzeichnen, ob ein Kopieren gegebenenfalls für jede von einer Basisschicht und einer Zusatzschicht erlaubt ist, die für eine Wiedergabe von Videodaten von einem Kopienverwaltungsserver verwendet werden;

Bezugnehmen auf die Begrenzungsinformationen der dynamischen Bereichsskalierbarkeit in einem Fall, in dem die Videodaten, die mithilfe der Basisschicht und der Zusatzschicht erzeugt werden können, in dem ersten Medium aufgezeichnet werden; und

Ermitteln, ob eine Einstellung der Begrenzungsinformationen der dynamischen Bereichsskalierbarkeit eine von den folgenden (a) bis (c) ist,

(a) Erlauben eines Kopierens nur von der Basisschicht,
(b) Erlauben eines Kopierens sowohl von der Basisschicht als auch von der Zusatzschicht, und
(c) Nicht-Erlauben eines Kopierens eines Streams, der eine dynamische Bereichsskalierbarkeit aufweist,

und Auswählen von Schichtdaten, für die ermittelt wurde, dass es erlaubt ist, dass sie auf der Grundlage eines Ergebnisses der Ermittlung kopiert werden, und zum Ausführen eines Kopierprozesses für das zweite Medium, und

wobei in einem Fall, in dem die Einstellung der Begrenzungsinformationen der dynamischen Bereichsskalierbarkeit die Einstellung von (b) ist, die ein Kopieren sowohl von der Basisschicht als auch von der Zusatzschicht erlaubt, ermittelt wird, ob gegebenenfalls eine Kopierprozessausführungsvorrichtung und eine Wiedergabevorrichtung, die eine Datenwiedergabe von einem Kopierzielmedium ausführt, die Zusatzschicht analysieren kann, und zum Ausführen eines Kopierprozesses der Zusatzschicht unter einer Bedingung, dass eine der Vorrichtungen die Zusatzschicht analysieren kann.

8. Informationsverarbeitungsverfahren, das durch einen Kopienverwaltungsserver ausgeführt wird, wobei das Verfahren umfasst:

Bereitstellen von Kopierbegrenzungsinformationen für eine Kopierausführungsvorrichtung, die einen Kopierprozess zum Aufzeichnen von Aufzeichnungsdaten eines ersten Mediums in einem zweiten Medium ausführt,

Erzeugen der Kopierbegrenzungsinformationen, die Begrenzungsinformationen einer dynamischen Bereichsskalierbarkeit aufweisen, das heißt, dass Kopierbegrenzungsinformationen aufzeichnen, ob gegebenenfalls ein Kopieren für jede von einer Basisschicht und einer Zusatzschicht erlaubt ist, die für eine Wiedergabe von Videodaten verwendet werden; und Übertragen der erzeugten Kopierbegrenzungsinformationen zu der Kopierausführungsvorrichtung;

Erzeugen der Kopierbegrenzungsinformationen, welche die Begrenzungsinformationen der dynamischen Bereichsskalierbarkeit aufweisen, deren Einstellung eine der folgenden Einstellungen (a) bis (c) ist,

(a) Erlauben eines Kopierens nur von der Basisschicht,
(b) Erlauben eines Kopierens sowohl von der Basisschicht als auch von der Zusatzschicht, und
(c) Nicht-Erlauben eines Kopierens eines Streams, der eine dynamische Bereichsskalierbarkeit aufweist; und

Übertragen der erzeugten Kopierbegrenzungsinformationen zu der Kopierausführungsvorrichtung.

9. Programm, das Befehle umfasst, die, wenn sie von einer Informationsverarbeitungsvorrichtung ausgeführt werden, die Informationsverarbeitungsvorrichtung veranlassen, das Verfahren nach Anspruch 7 auszuführen.

10. Programm, das Befehle umfasst, die, wenn sie von einem Kopienverwaltungsserver ausgeführt werden, den Kopienverwaltungsserver veranlassen, das Verfahren nach Anspruch 8 auszuführen.

**Revendications**

1. Appareil de traitement d'informations (20 ; 120) comprenant :

l'unité de traitement de données qui exécute un processus de copie consistant à enregistrer des données d'enregistrement d'un premier support dans un second support,

dans lequel l'unité de traitement de données est adaptée pour :

recevoir des informations de limitation d'extensibilité de plage dynamique qui constituent des informations de limitation de copie enregistrant si oui ou non une copie est autorisée pour chacune d'une couche de base et d'une couche auxiliaire utilisées pour la reproduction de données vidéo à partir d'un serveur de gestion de copie ; et faire référence aux informations de limitation d'extensibilité de plage dynamique au cas où des données vidéo qui peuvent être générées en utilisant la couche de base et la couche auxiliaire sont enregistrées dans le premier support ;

dans lequel l'unité de traitement de données est adaptée en outre pour :
déterminer si un réglage des informations de limitation d'extensibilité de plage dynamique est l'un des réglages (a) à (c) suivants :

(a) autoriser une copie de seulement une couche de base,
(b) autoriser une copie à la fois de la couche de base et de la couche auxiliaire, et
(c) ne pas autoriser une copie d'un flux ayant une extensibilité de plage dynamique,

et sélectionner des données de couche déterminées comme étant autorisées à être copiées sur la base d'un résultat de la détermination, et exécuter un processus de copie pour le second support, et

dans lequel l'unité de traitement de données, au cas où le réglage des informations de limitation d'extensibilité de plage dynamique est le réglage de (b) autorisant une copie à la fois de la couche de base et de la couche auxiliaire, est adaptée en outre pour :

déterminer si oui ou non un appareil d'exécution de processus de copie et un appareil de reproduction exécutant une reproduction de données à partir du support de destination de copie peuvent analyser la couche auxiliaire, et

exécuter un processus de copie de la couche auxiliaire sous la condition que n'importe lequel des appareils puisse analyser la couche auxiliaire.

**2.** Appareil de traitement d'informations selon la revendication 1, dans lequel
au cas où seul l'appareil d'exécution de traitement de copie est déterminé comme étant capable d'analyser la couche auxiliaire, générer une image composite à partir de la couche de base et de la couche auxiliaire et exécuter un processus de copie de l'image composite générée.

**3.** Appareil de traitement d'informations selon la revendication 1, dans lequel deux couches de la couche de base et de la couche auxiliaire sont une combinaison de :

données vidéo codées, qui ont une profondeur de 10 bits, de la couche de base et
données auxiliaires utilisées pour s'étendre à une profondeur de 12 bits de la couche auxiliaire ; ou

dans lequel deux couches de la couche de base et de la couche auxiliaire sont une combinaison de :
données codées vidéo d'une plage dynamique standard (SDR) de la couche de base et données auxiliaires utilisées pour générer une image d'une plage dynamique élevée (HDR) de la couche auxiliaire.

**4.** Appareil de traitement d'informations selon la revendication 1, dans lequel l'unité de traitement de données, au cas où un appareil de reproduction exécutant une reproduction de données de copie à partir du second support peut exécuter une commande de reproduction en utilisant les informations de limitation d'extensibilité de plage dynamique en tant qu'informations autorisant la reproduction, génère un fichier d'attributs incluant les informations de limitation d'extensibilité de plage dynamique et enregistre le fichier d'attributs généré dans le second support conjointement avec les données de copie.

**5.** Serveur de gestion de copie (50) comprenant :

une unité de traitement de données adaptée pour fournir des informations de limitation de copie pour un appareil d'exécution de copie exécutant un processus de copie consistant à enregistrer des données d'enregistrement d'un premier support dans un second support,
dans lequel l'unité de traitement de données est adaptée en outre pour générer les informations de limitation de copie incluant des informations de limitation d'extensibilité de plage dynamique qui constituent les informations de limitation de copie enregistrant si oui ou non une copie est autorisée pour chacune d'une couche de base et d'une couche auxiliaire utilisée pour la reproduction de données vidéo, et transmet les informations de limitation de copie générées à l'appareil d'exécution de copie ; et
dans lequel l'unité de traitement de données est adaptée en outre pour générer les informations de limitation de copie incluant les informations de limitation d'extensibilité de plage dynamique dont le réglage est l'un des réglages (a) à (c) suivants :

(a) autoriser une copie de seulement la couche de base,
(b) autoriser une copie à la fois de la couche de base et de la couche auxiliaire, et
(c) ne pas autoriser une copie d'un flux ayant une extensibilité de plage dynamique,

et transmet les informations de limitation de copie générées à l'appareil d'exécution de copie.

6. Système de traitement d'informations comprenant :

un serveur de gestion de copie (50) comme défini selon la revendication 5 ; et
un appareil d'exécution de copie (20 ; 120) comme défini selon la revendication 1.

7. Procédé de traitement d'informations exécuté par un appareil de traitement d'informations,
dans lequel l'appareil de traitement d'informations inclut une unité de traitement de données qui exécute un processus de copie consistant à enregistrer des données d'enregistrement d'un premier support dans un second support, le procédé comprenant les étapes consistant à :

recevoir des informations de limitation d'extensibilité de plage dynamique qui constituent des informations de limitation de copie enregistrant si oui ou non une copie est autorisée pour chacune d'une couche de base et d'une couche auxiliaire utilisées pour la reproduction de données vidéo à partir d'un serveur de gestion de copie ;
faire référence aux informations de limitation d'extensibilité de plage dynamique au cas où des données vidéo qui peuvent être générées en utilisant la couche de base et la couche auxiliaire sont enregistrées dans le premier support ; et
déterminer si un réglage des informations de limitation d'extensibilité de plage dynamique est l'un des réglages (a) à (c) suivants :

(a) autoriser une copie de seulement la couche de base,
(b) autoriser une copie à la fois de la couche de base et de la couche auxiliaire, et
(c) ne pas autoriser une copie d'un flux ayant une extensibilité de plage dynamique,

et sélectionner des données de couche déterminées comme étant autorisées à être copiées sur la base d'un résultat de la détermination, et exécuter un processus de copie pour le second support, et
dans lequel, au cas où le réglage des informations de limitation d'extensibilité de plage dynamique est le réglage de (b) autorisant une copie à la fois de la couche de base et de la couche auxiliaire, déterminer si oui ou non un appareil d'exécution de processus de copie et un appareil de reproduction exécutant une reproduction de données à partir d'un support de destination de copie peuvent analyser la couche auxiliaire, et exécuter un processus de copie de la couche auxiliaire sous la condition que n'importe lequel des appareils puisse analyser la couche auxiliaire.

8. Procédé de traitement d'informations exécuté par un serveur de gestion de copie, le procédé comprenant les étapes consistant à :

fournir des informations de limitation de copie pour un appareil d'exécution de copie exécutant un processus de copie consistant à enregistrer des données d'enregistrement d'un premier support dans un second support,
générer les informations de limitation de copie incluant des informations de limitation d'extensibilité de plage dynamique qui constituent les informations de limitation de copie enregistrant si oui ou non une copie est autorisée pour chacune d'une couche de base et d'une couche auxiliaire utilisées pour une reproduction de données vidéo, et transmet les informations de limitation de copie générées à l'appareil d'exécution de copie ;
générer les informations de limitation de copie incluant les informations de limitation d'extensibilité de plage dynamique dont le réglage est l'un des réglages (a) à (c) suivants :

(a) autoriser une copie de seulement la couche de base,
(b) autoriser une copie à la fois de la couche de base et de la couche auxiliaire, et
(c) ne pas autoriser une copie d'un flux ayant une extensibilité de plage dynamique ; et

transmettre les informations de limitation de copie générées à l'appareil d'exécution de copie.

9. Programme comprenant des instructions qui, lorsqu'elles sont exécutées par un appareil de traitement d'informations, amènent l'appareil de traitement d'informations à mettre en œuvre le procédé selon la revendication 7.

10. Programme comprenant des instructions qui, lorsqu'elles sont exécutées par un serveur de gestion de copie, amènent le serveur de gestion de copie à mettre en œuvre le procédé selon la revendication 8.

FIG. 1

MANAGEMENT SERVER

50

30

20

10

HDD

FLASH MEMORY

FIRST MEDIUM

INFORMATION PROCESSING APPARATUS (USER APPARATUS)

SECOND MEDIUM

EP 3 319 089 B1

# FIG. 2

| INDEX | CONTENT MANAGEMENT UNIT (CPS) | UNIT KEY (CPS UNIT KEY) |
|---|---|---|
| TITLE 1 | CPS1 | Ku1 |
| TITLE 2 | CPS2 | Ku2 |
| TITLE 3 | CPS3 | Ku3 |
| : | : | : |
| TITLE n | CPSn | Kun |

EP 3 319 089 B1

FIG. 3

10 FIRST MEDIUM (BD-ROM)

Root

51
- AACS
  - CPSUnit001.cci
  - CPSUnit002.cci

52
- BDMV
  - index.bdmv — INDEX FILE
  - MovieObject.bdmv — MOVIE OBJECT FILE
  - PLAYLIST — PLAY LIST FILE
    - 00001.mpls
  - CLIPINF — CLIP INFORMATION FILE
    - 01001.clpi
    - 01002.clpi
  - STREAM — CLIP AV STREAM
    - 01001.m2ts
    - 01002.m2ts
  - BDJO — BDJ Object FILE
    - 00001.bdjo
    - 00002.bdjo

FIG. 4

MANAGEMENT SERVER (MC Server) 140

CHECK REQUEST & GENERATE SERVER RESPONSE INFORMATION (GENERATE Offer Response) S12

SETTLEMENT PROCESS S14

GENERATE COPY PERMISSION INFORMATION (Grant Permission) S16

INFORMATION PROCESSING APPARATUS 120

COPY EXECUTION REQUEST (Offer Request) S11

SERVER RESPONSE INFORMATION [Offer Response] (INCLUDING MANAGED COPY EXECUTION INFORMATION (dealManifest), PRICE INFORMATION, AND THE LIKE) 131

COPY ALLOWING LIST 121

SELECT COPY CONTENT S13

SETTLEMENT DATA (Financial Transaction) 132

SETTLEMENT PROCESS S14

COPY PERMISSION INFORMATION REQUEST S15

COPY PERMISSION INFORMATION (Permission) 122

COPY PROCESS (DECODING/RE-ENCRYPTION/ RECORDING) S17

FIRST MEDIUM 110

COPY CONTROL MANAGEMENT FILE [MCMF OR THE LIKE] 111

MANAGEMENT DATA [AACS data] (UNIT KEY OR THE LIKE) 112

ENCRYPTED CONTENT [Encrypted Content] (AV STREAM) 113

SECOND MEDIUM 150

HDD

FLASH MEMORY

DISC 151

ENCRYPTED CONTENT [Encrypted Content] (AV STREAM)

# FIG. 5

## MCMF (Managed Copy Manifest File)

| ELEMENT (**Element**) | | CONTENT (**Note**) |
|---|---|---|
| MANAGEMENT SERVER URL (**URL of MCS**) | | URL OF MANAGEMENT SERVER OF ACCESS DESTINATION |
| COPY DATA INFORMATION (**File name to be copied**) | PLAY LIST FILE NAME (**PlayList file name**) | PLAY LIST FILE NAME OF COPY TARGET (CLIP CAN BE SPECIFIED ON THE BASIS OF PLAY LIST) |
| | CPS UNIT KEY INFORMATION (**Index to identify the CPS Unit Key**) | ENCRYPTION KEY APPLIED TO DECODING PROCESS |
| | COPY UNIT IDENTIFIER (**MCUi**) | INFORMATION USED FOR IDENTIFYING COPY UNIT AS Managed Copy (MC) EXECUTION UNIT |
| CONTENT ID (**Content ID**) | | CONTENT IDENTIFIER |

EP 3 319 089 B1

## FIG. 6

### COPY EXECUTION REQUEST（Offer Request）

| ELEMENT (**Element**) | CONTENT (**Note**) |
|---|---|
| CONTENT ID<br>（Content ID） | CONTENT IDENTIFIER |
| CONTENT CERTIFICATE ID<br>（Content Certificate ID） | IDENTIFIER OF CONTENT CERTIFICATE |
| MEDIUM IDENTIFIER<br>（Pre-recorded Media Serial Number） | MEDIUM-SPECIFIC IDENTIFIER |
| RANDOM NUMBER（mcmNonce） | DATA USED FOR DATA JUSTIFIABILITY CHECKING |
| LANGUAGE CODE<br>（Language Code） | USED FOR DETERMINING DISPLAY LANGUAGE AND THE LIKE OF PLAY LIST AND THE LIKE |

EP 3 319 089 B1

# FIG. 7

BASIC INFORMATION OF SERVER RESPONSE INFORMATION (Offer Response)

| ELEMENT (**Element**) | | CONTENT (**Note**) |
|---|---|---|
| OFFER DETAILED INFORMATION (offer) | TITLE/ABSTRACT/DESCRIPTION (title / abstract / description) | IDENTIFICATION INFORMATION OF CONTENT ALLOWED TO BE COPIED (To identify content by MCS) |
| | COPY UNIT IDENTIFIER (MCUi) | IDENTIFICATION INFORMATION OF COPY UNIT AS COPY UNIT (To identify Managed Copy Unit (item for sale)) |
| | PRICE INFORMATION/PRICE AUXILIARY INFORMATION (price / priceInfo) | COPY PRICE INFORMATION (priceInfo is a additional information regarding price (e.g. remaining copy count)) |
| | SERIAL NUMBER (serialNumberRequired) | SET SERIAL NUMBER OF SERVER (To indicate if sticker code input is required or not) |
| | SETTLEMENT SERVER URL (financialHTMLURL) | SETTLE SERVER ACCESS INFORMATION (URL of financial server (may be different from MCS)) |
| | COPY DESTINATION INFORMATION (mcotInfo) | INFORMATION OF APPARATUS AND MEDIUM THAT ARE COPY DESTINATION (Information regarding copy destination) |
| RANDOM NUMBER (mcmNonce) | | DATA USED FOR CHECKING DATA JUSTIFIABILITY (To compare with mcmNonce which MCM sent) |
| COPY DATA INFORMATION [File name to be copied(dealManifest)] | PLAY LIST FILE NAME (PlayList file name) | SPECIFYING INFORMATION OF FILE THAT IS COPY PROCESS TARGET (To identify Clip AV stream(s) and Clip Information) |
| | CPS UNIT KEY INFORMATION (Index to identify the CPS Unit Key) | KEY INFORMATION USED FOR CONTENT DECODING (To decrypt Clip AV stream(s)) |
| | COPY UNIT IDENTIFIER (MCUi) | COPY UNIT IDENTIFICATION INFORMATION AS COPY UNIT (To identify Managed Copy Unit (item for sale)) |
| SERVER PUBLIC KEY CERTIFICATE (MCScert) | | PUBLIC KEY CERTIFICATE STORING PUBLIC KEY OF MANAGEMENT SERVER (Including MCS public key) |
| SIGNATURE (signature) | | DATA USED FOR CHECKING DATA JUSTIFIABILITY (To verify integrity of offer) |

## FIG. 8

PlayList Layer

Access point

Clip Layer

Data—byte position

**PlayList #1**

Play Item #11    Play Item #12

**PlayList #2**

Play Item #21    Play Item #22

Clip Information (CI#1)

Clip AV Stream (ST#1)

Clip

Clip Information (CI#2)

Clip AV Stream (ST#2)

Clip

EP 3 319 089 B1

# FIG. 9

MPEG-2 transport stream(=Clip AV Stream)

MPEG-2TS(transport stream)

(A)

| Aligned Unit | Aligned Unit | Aligned Unit | ... | Aligned Unit | Aligned Unit |
|---|---|---|---|---|---|

← 6144B →

(B)

| source packet-0 | source packet-1 | source packet-2 | ... | source packet-30 | source packet-31 |
|---|---|---|---|---|---|

← 192B →

(C)

| TP_extra _header | Transport packet |
|---|---|

← 4B → ← 188B →

(D) TRANSPORT PACKET (TS PACKET)

| TS Packet header | PAYLOAD (PES PACKET/PES HEADER, AND THE LIKE) |
|---|---|

← 4B → ← 184B →

(E) TS PACKET HEADER

| Sync byte | Transport error indicator | Payload unit start indicator | Transport priority | PID | Transport scrambling control | Adaptation field control | Continuity counter | Adaptation field |
|---|---|---|---|---|---|---|---|---|

EP 3 319 089 B1

# FIG. 10

(a) FRAGMENTED TYPE (fragmented movie)

```
MP4
    moov
        trak
        trak

        moof
            traf

        mdat

        moof
            traf

        mdat

        . . .

        . . .
```

(b) NON-FRAGMENTED TYPE (non-fragmented movie)

```
MP4
    moov
        trak
        trak

    mdat
```

EP 3 319 089 B1

FIG. 11

CFF(Common File Format)

CFF

moov
- trak
- trak

moof
- traf

mdat

moof
- traf

mdat

moof
- traf

mdat

...

...

VIDEO DATA
ATTRIBUTE
INFORMATION

VIDEO DATA

AUDIO DATA
ATTRIBUTE
INFORMATION

AUDIO DATA

SUBTITLE DATA
ATTRIBUTE
INFORMATION

SUBTITLE DATA

VIDEO
SAMPLE

AUDIO
SAMPLE

SUBTITLE
SAMPLE

EP 3 319 089 B1

## FIG. 12

| | VIDE TYPE | (A)<br>OUTPUT<br>PIXEL NUMBER | (B)<br>OUTPUT<br>DYNAMIC RANGE | (C)<br>APPLIED<br>COLOR SPACE |
|---|---|---|---|---|
| (1) | HIGH DEFINITION VIDEO<br>[HD:High Definition] | 2K<br>(1920×1080<br>PIXELS) | SDR(Standard Dynamic Range)<br>MAXIMUM LUMINANCE=ABOUT 100nit | ITU. BT. 709 |
| (2) | ULTRA HIGH<br>DEFINITION VIDEO<br>[UHD:Ultra High<br>Definition] | 4K<br>(3840×2160<br>PIXELS)<br>OR MORE | HDR(High Dynamic Range)<br>MAXIMUM LUMINANCE<br>=ABOUT 500 TO 1000nit | ITU. BT. 2020 |

EP 3 319 089 B1

# FIG. 13

| | (A)<br>RECORDING DATA | (B)<br>REPRODUCTION METHOD |
|---|---|---|
| RECORDING<br>EXAMPLE 1 | RECORDING ONLY SDR VIDEO<br>(SDR SINGLE STREAM) | ACQUIRE AND REPRODUCE SDR VIDEO STREAM |
| RECORDING<br>EXAMPLE 2 | RECORDING ONLY HDR VIDEO<br>(HDR SINGLE STREAM) | ACQUIRE AND REPRODUCE HDR VIDEO STREAM |
| RECORDING<br>EXAMPLE 3 | PARALLEL RECORDING OF<br>SDR VIDEO AND HDR VIDEO<br>(RECORD PAIR STREAM OF<br>SDR VIDEO AND HDR VIDEO) | SELECT AND ACQUIRE AND<br>REPRODUCE ONE OF SDR VIDEO<br>STREAM AND HDR VIDEO STREAM |
| RECORDING<br>EXAMPLE 4 | RECORD BASIC LAYER AND AUXILIARY<br>LAYER FOR CONFIGURING HDR VIDEO<br>(RECORD VIDEO HAVING<br>DYNAMIC RANGE SCALABILITY) | ACQUIRE AND REPRODUCE<br>BASIC LAYER AND AUXILIARY LAYER<br>(THERE IS ALSO SETTING FOR<br>REPRODUCING ONLY BASIC LAYER) |

EP 3 319 089 B1

# FIG. 14

BDMV
FORMAT DATA
181

INFORMATION
PROCESSING
APPARATUS
120

MP4
FORMAT DATA
182

FIRST MEDIUM
（BD）
10

SECOND
MEDIUM
(FLASH
MEMORY)
20

EP 3 319 089 B1

# FIG. 15

ADDITIONAL INFORMATION OF SERVER RESPONSE INFORMATION (Offer Response) (COPY UNIT (MCU) UNIT)

| ELEMENT (Element) | | CONTENT (Note) |
|---|---|---|
| (1) FIRST COPY LIMITING INFORMATION | (1a) REGION LIMITING INFORMATION (region) | REGION A, REGION B, REGION C, REGION D, ⋯ |
| | (1b) AGE LIMITING INFORMATION (age) | 13 YEARS OLD OR MORE, 18 YEARS OLD OR MORE, ⋯ |
| | (1c) THREE-DIMENSIONAL VIDEO (3D) LIMITING INFORMATION | (p1) PROHIBITION OF CONVERSION COPY FROM 3D TO 2D<br>(p2) ALLOWING CONVERSION COPY FROM 3D TO 2D BUT PROHIBITION OF 2D REPRODUCTION<br>(p3) ALLOWING CONVERSION COPY FROM 3D TO 2D AND ALLOWING ALSO 2D REPRODUCTION |
| | | (q1) ALLOWING CONVERSION COPY TOWARD DIFFERENT 3D FORMAT<br>(q2) PROHIBITION OF CONVERSION COPY TOWARD DIFFERENT 3D FORMAT |
| | (1d) DYNAMIC RANGE SCALABILITY LIMITING INFORMATION | (r1) ALLOWING COPY OF ONLY BASIC LAYER<br>(r2) ALLOWING COPY OF BASIC LAYER AND AUXILIARY LAYER<br>(r3) NOT ALLOWING COPY OF STREAM HAVING DYNAMIC RANGE SCALABILITY |
| (2) SECOND COPY LIMITING INFORMATION | SELECTION LIMITING INFORMATION<br><br>(2a) AUDIO (audio)<br>(2b) SUBTITLE (subtitle)<br>(2c) ANGLE (angle)+ANGLE INFORMATION (angleInfo)<br><br>(2d) PAIR STREAM LIMITING INFORMATION | AUDIO (audio)=−1 (NO DESIGNATION), 1 (EN), 2 (JP), 3 ⋯<br>SUBTITLE (subtitle)=−1 (NO DESIGNATION), 1 (EN), 2 (JP), 3 ⋯<br>ANGLE (angle)=−1 (NO DESIGNATION), 1, 2, 3 ⋯<br>ANGLE INFORMATION (angleInfo)=EXPLANATORY INFORMATION OF EACH ANGLE<br><br>PAIR STREAM LIMITING INFORMATION=−1 (NO DESIGNATION), 1 (SDR), 2 (HDR)<br>ADDITIONAL INFORMATION   (a) CLIP NAME AND PID OF SDR VIDEO STREAM<br>                                              (b) CLIP NAME AND PID OF HDR VIDEO STREAM |
| (3) PLAY LIST SEQUENCE INFORMATION | | PLAY LIST #3 → PLAY LIST #5 →<br>PLAY LIST #8 ⋯ |

EP 3 319 089 B1

## FIG. 16

```
<mc:MCUPARTIAL MCUi="MCU_0002">
<mc:age>17</mc:age>
<mc:PlayListInfo>
<mc:title_number>2</mc:title_number>
<mc:PlayListFileName>BDMV/PLAYLIST/00010.mpls</mc:PlayListFileName>
<mc:title>MIB EPISODE 2 </mc:title>
<mc:selection audio="1" subtitle="1" angle="1" angleInfo="FRONT-FACE ANGLE " />
<mc:pairstream ="-1"  clip="12345" SDR="0x1020" HDR="0x1021" />
</mc:selection>
</mc:PlayListInfo>
</mc:MCUPARTIAL>
```

EP 3 319 089 B1

# FIG. 17

EXAMPLE OF DETAILED SCREEN OF DISPLAY LIST BASED ON SERVER RESPONSE INFORMATION (Offer Response)

**Offer Detail**

STREAM LANGUAGE ATTRIBUTE · STREAM SUBTITLE LANGUAGE ATTRIBUTE · STREAM ANGLE ATTRIBUTE · PAIR STREAM LIMITING INFORMATION (CLIP NAME AND PID ARE ASSOCIATE WITH EACH OTHER)

| (1) MIB/EPISODE 1 | (1a) JAPANESE AUDIO/ENGLISH SUBTITLE/FRONT-FACE ANGLE/HDR VIDEO |
| | (1b) JAPANESE AUDIO/ENGLISH SUBTITLE/FRONT-FACE ANGLE/SDR VIDEO |
| (2) MIB/EPISODE 2 | (2a) JAPANESE AUDIO/ENGLISH SUBTITLE/FRONT-FACE ANGLE/HDR VIDEO |
| | (2b) JAPANESE AUDIO/ENGLISH SUBTITLE/FRONT-FACE ANGLE/SDR VIDEO |

CONTENT EXPLANATORY INFORMATION

The adventures of J and K, two federal agents aka, "The Men in Black," who are assigned to investigate all alien related phenomena. The agents uncover an intergalactic plot to assassinate two ambassadors from opposing galaxies who happen to reside in New York City. Jay and Kay's mission is to foil the plot by tracking down the terrorist, thereby preventing the earth from being destroyed.

FIG. 18

START COPY PROCESS

S31 — READ SERVER RESPONSE INFORMATION (Offer Response) RECEIVED FROM SERVER

S32 — DOES VIDEO DATA RECORDED IN COPY SOURCE MEDIUM (FIRST MEDIUM) INCLUDE BASIC LAYER AND AUXILIARY LAYER?

No / Yes

S33 — ACQUIRE SETTING VALUE OF DYNAMIC RANGE SCALABILITY INFORMATION INCLUDED IN COPY LIMITING INFORMATION OF SERVER RESPONSE INFORMATION

PAIR STREAM DETERMINING PROCESS

S34 — WHICH ONE OF
(r1) ALLOWING COPY OF ONLY BASIC LAYER,
(r2) ALLOWING COPY OF BOTH BASIC LAYER AND AUXILIARY LAYER, AND
(r3) NOT ALLOWING COPY OF STREAM HAVING DYNAMIC RANGE SCALABILITY
IS SETTING VALUE OF DYNAMIC RANGE SCALABILITY LIMITING INFORMATION?

(r1) / (r2) / (r3)

S35 — DETERMINE BASIC LAYER AS COPY TARGET

S36 — DETERMINE COPY PROCESS DATA ON THE BASIS OF FUNCTION INFORMATION OF COPY EXECUTION APPARATUS AND COPY DESTINATION MEDIA REPRODUCING APPARATUS

S37 — PERFORM COPY ALLOWING DETERMINING PROCESS BASED ON OTHER COPY LIMITING INFORMATION OF SERVER RESPONSE INFORMATION

S38 — IS COPY ALLOWED?

Yes → TO STEP S41

No →

S39 — NOTIFY USER THAT COPY CANNOT BE PERFORMED (NON-DISPLAY OF CONTENT LIST AND THE LIKE)

END COPY PROCESS

64

*FIG. 19*

STEP S38 — Yes

S41
WHICH ONE OF (1) TO (3) IS DETERMINED
COPY PROCESS DATA?
(1) ONLY BASIC LAYER
(2) BASIC LAYER AND AUXILIARY LAYER
(3) COMPOSITE IMAGE BASED ON
    BASIC LAYER AND AUXILIARY LAYER

(1)

(2)

(3)

S42
SELECT BASIC LAYER
AS COPY TARGET

S44
SELECT BASIC LAYER
AND AUXILIARY LAYER
AS COPY TARGET

S46
SELECT COMPOSITE IMAGE
BASED ON BASIC LAYER AND
AUXILIARY LAYER AS COPY TARGET

S43
ACQUIRE BASIC LAYER DATA AND
METADATA CORRESPONDING
TO BASIC LAYER

S45
ACQUIRE BASIC LAYER DATA,
AUXILIARY LAYER DATA,
AND METADATA CORRESPONDING
TO EACH LAYER

S47
GENERATE COMPOSITE IMAGE
BASED ON BASIC LAYER
AND AUXILIARY LAYER

S48
ACQUIRE COMPOSITE IMAGE BASED ON
BASIC LAYER AND AUXILIARY LAYER
AND METADATA REQUIRED FOR
REPRODUCING COMPOSITE IMAGE

S49
RECORD LAYER DATA OR COMPOSITE IMAGE DATA
AND METADATA THAT HAVE BEEN ACQUIRED IN
ACCORDANCE WITH RECORDING FORMAT OF
COPY DESTINATION MEDIUM

END COPY PROCESS

EP 3 319 089 B1

## FIG. 20

```
        ┌─────────────────────────┐
        │      PAIR STREAM        │
        │  DETERMINING PROCESS    │
        └─────────────────────────┘
                    │
                    ▼                                    S51
    ┌────────────────────────────────────────────┐
    │ PERFORM COPY ALLOWING DETERMINING PROCESS   │
    │  BASED ON FIRST COPY LIMITING INFORMATION   │
    │      OF SERVER RESPONSE INFORMATION         │
    └────────────────────────────────────────────┘
                    │
                    ▼                S52
         No    ◇ IS COPY ALLOWED? ◇
    ┌──────────                           Yes
    │                                      │
```

S53 — NOTIFY USER THAT COPY CANNOT BE PERFORMED (NON-DISPLAY OF CONTENT LIST AND THE LIKE)

END COPY PROCESS

S54 — IS VIDEO DATA RECORDED IN COPY SOURCE MEDIUM (FIRST MEDIUM) PAIR STREAM?

No

Yes

S55 — ACQUIRE SETTING VALUE OF PAIR STREAM LIMITING INFORMATION INCLUDED IN COPY LIMITING INFORMATION OF SERVER RESPONSE INFORMATION

TO STEP S71

SINGLE STREAM COPY PROCESS

EP 3 319 089 B1

# FIG. 21

```
        ┌─────────────┐
        │  STEP S55   │
        └─────────────┘
               │
               ▼                                              S71
   ┌────────────────────────────────────────────┐  1 (SDR), OR 2 (HDR)
  ◁  WHICH ONE OF −1 (NO DESIGNATION), 1 (SDR),   ▷──────────────────────┐
   │  AND 2 (HDR) IS SETTING VALUE OF PAIR STREAM  │                      │
   │           LIMITING INFORMATION?              │                      │
   └────────────────────────────────────────────┘                       │
               │ −1 (NO DESIGNATION)                                     │
               ▼                        S72                              │
        ┌──────────────────────────────────┐                            │
  YES  ◁   WHICH ONE OF SDR AND HDR         ▷  No                        │
   │    │  HAS BEEN SELECTED BY USER?       │   │                        │
   │    └──────────────────────────────────┘   │                        │
   │                                            │                        │
   ▼ S73                                        ▼ S74                    │
┌──────────────────────┐         ┌─────────────────────────────────┐    │
│ SELECT USER-SELECTED │         │ SELECT STREAM MATCHING USABLE   │    │
│ STREAM AS COPY TARGET│         │ DYNAMIC RANGE/COLOR SPACE       │    │
│                      │         │ SETTING INFORMATION OF          │    │
│                      │         │ INFORMATION PROCESSING          │    │
│                      │         │ APPARATUS AS COPY TARGET        │    │
└──────────────────────┘         └─────────────────────────────────┘    │
   │                                      │                              │
   │              S75                     │                      S76     │
   │  ┌─────────────────────────────────┐ │  ┌──────────────────────────┐│
   │  │ ACQUIRE CLIP (CLIP INFORMATION  │ │  │ ACQUIRE CLIP (CLIP        ││
   │  │ FILE/STREAM FILE) FROM CLIP NAME│ │  │ INFORMATION FILE/STREAM   ││
   │  │ STORED IN PAIR STREAM LIMITING  │ │  │ FILE) FROM CLIP NAME      ││
   └─▶│ INFORMATION AS ADDITIONAL       │◀┘  │ STORED IN PAIR STREAM     │◀┘
      │ INFORMATION CORRESPONDING TO    │    │ LIMITING INFORMATION AS   │
      │ VIDEO (SDR OR HDR) SELECTED     │    │ ADDITIONAL INFORMATION    │
      │ ACCORDING TO USER SELECTION OR  │    │ CORRESPONDING TO VIDEO    │
      │ INFORMATION PROCESSING APPARATUS│    │ (SDR OR HDR) SELECTED     │
      │ AND SEQUENTIALLY SELECT PACKET  │    │ ACCORDING TO SETTING VALUE│
      │ STORING COPY TARGET DATA ON THE │    │ AND SEQUENTIALLY SELECT   │
      │ BASIS OF PID STORED IN PAIR     │    │ PACKET STORING COPY TARGET│
      │ STREAM LIMITING INFORMATION AND │    │ DATA ON THE BASIS OF PID  │
      │ PERFORM COPY PROCESS            │    │ STORED IN PAIR STREAM     │
      └─────────────────────────────────┘    │ LIMITING INFORMATION AND  │
                    │                         │ PERFORM COPY PROCESS      │
                    │                         └──────────────────────────┘
                    │                                    │
                    ▼                                    ▼
              ┌──────────────────────┐
              │   END COPY PROCESS   │
              └──────────────────────┘
```

EP 3 319 089 B1

## FIG. 22

START COPY PROCESS

S101
READ SERVER RESPONSE INFORMATION
(Offer Response) RECEIVED FROM SERVER

S102
ACQUIRE (SETTING VALUES OF
REGION (region), AGE (age),
AND THREE-DIMENSIONAL
VIDEO (3D) INFORMATION) INCLUDED
IN COPY LIMITING INFORMATION
OF SERVER RESPONSE INFORMATION

S103
DETERMINE WHETHER OR NOT COPY IS ALLOWED
ON THE BASIS OF SETTING VALUES OF REGION (region),
AGE (age), AND THREE-DIMENSIONAL VIDEO (3D)
INFORMATION OF COPY LIMITING INFORMATION

S104
IS RESULT OF COPY
ALLOWING DETERMINATION ACCORDING
TO SETTING VALUES OF REGION (region),
AGE (age), AND THREE-DIMENSIONAL VIDEO
INFORMATION COPY
PERMISSION?

Yes → TO STEP S201

No

S105
NOTIFY USER THAT COPY CANNOT BE
PERFORMED (NON-DISPLAY
OF CONTENT LIST AND THE LIKE)

END COPY PROCESS

*FIG. 23*

```
                        ┌─────────────┐
                        │  S104—Yes   │
                        └──────┬──────┘
                               │
                               ▼  S201
              ┌────────────────────────────────────┐
              │     ACQUIRE SETTING VALUE OF DYNAMIC│
              │ RANGE SCALABILITY LIMITING INFORMATION│
              │       OF COPY LIMITING INFORMATION   │
              └────────────────┬───────────────────┘
                               │
                               ▼  S202
         ╱───────────────────────────────────────────╲
        ╱    DOES SETTING VALUE OF DYNAMIC RANGE        ╲        No (NOT ALLOW)
       ⟨ SCALABILITY LIMITING INFORMATION OF COPY LIMITING⟩──────────────────────┐
        ╲  INFORMATION ALLOW COPY OF STREAM HAVING      ╱                         │
         ╲      DYNAMIC RANGE SCALABILITY?             ╱                          │
          ╲───────────────────┬───────────────────────╱                          │
                              │ Yes (ALLOW)                                       │
                              ▼  S203                                             │
              ╱─────────────────────────────────────╲                            │
       YES   ╱     DOES USER DESIRE TO COPY STREAM    ╲    No                     │
      ┌─────⟨    HAVING DYNAMIC RANGE SCALABILITY?     ⟩──────┐                   │
      │      ╲───────────────────────────────────────╱       │                   │
      │                                                       │                   ▼  S206
   S204▼                                              S205  ▼          ┌──────────────────────────┐
┌─────────────────┐                          ┌─────────────────┐      │ NOTIFY USER THAT COPY OF │
│ PERFORM PROCESS A│                          │PERFORM PROCESS B │      │ STREAM HAVING DYNAMIC    │
└────────┬────────┘                          └────────┬────────┘      │ RANGE SCALABILITY        │
         │                                            │               │ CANNOT BE PERFORMED      │
         │                                            │               └──────────┬───────────────┘
         └──────────────────┬─────────────────────────┘                          │
                            ▼                                                     │
                    ┌───────────────┐                                            │
                    │ END COPY PROCESS│                                          │
                    └───────────────┘                                            │
```

EP 3 319 089 B1

# FIG. 24

# FIG. 25

PROCESS B

**S301**
ACQUIRE PAIR STREAM LIMITING INFORMATION FROM SERVER RESPONSE INFORMATION (Offer Response)

**S302**
HAS PAIR STREAM LIMITING INFORMATION NOT BEEN DESIGNATED?

No →

YES ↓

**S303**
INQUIRE USER ABOUT WHETHER COPY TARGET IS SDR OR HDR

**S304**
HAS ONE OF SDR AND HDR BEEN SELECTED BY USER?

YES ← → No

**S305**
SELECT STREAM SELECTED BY USER AS COPY TARGET

**S306**
SELECT STREAM MATCHING USABLE DYNAMIC RANGE/ COLOR SPACE SETTING INFORMATION OF INFORMATION PROCESSING APPARATUS AS COPY TARGET

**S307**
ACQUIRE CLIP (CLIP INFORMATION FILE/STREAM FILE) FROM CLIP NAME STORED IN PAIR STREAM LIMITING INFORMATION AS ADDITIONAL INFORMATION CORRESPONDING TO VIDEO (SDR OR HDR) SELECTED ACCORDING TO USER SELECTION OR INFORMATION PROCESSING APPARATUS AND SEQUENTIALLY SELECT PACKET STORING COPY TARGET DATA ON THE BASIS OF PID STORED IN PAIR STREAM LIMITING INFORMATION

**S308**
ACQUIRE CLIP (CLIP INFORMATION FILE/STREAM FILE) FROM CLIP NAME STORED IN PAIR STREAM LIMITING INFORMATION AS ADDITIONAL INFORMATION CORRESPONDING TO VIDEO (SDR OR HDR) SELECTED ACCORDING TO SETTING VALUE AND SEQUENTIALLY SELECT PACKET STORING COPY TARGET DATA ON THE BASIS OF PID STORED IN PAIR STREAM LIMITING INFORMATION

TO STEP S401

EP 3 319 089 B1

## FIG. 26

```
        ┌─────────────────────┐
        │  S253, S264, S281   │
        │    S307, S308       │
        └──────────┬──────────┘
                   │
                   ▼
```

**S401**
ACQUIRE CPS UNIT KEY CORRESPONDING
TO COPY TARGET DATA

**S402**
DECODE STREAM FILE OF COPY TARGET
BY APPLYING CPS UNIT KEY

**S403**
SELECT ONLY DATA OF COPY TARGET CORRESPONDING
TO ANGLE/AUDIO FROM DECODED STREAM FILE

**S404**
PERFORM COMPRESSED CODING OF
ANGLE/AUDIO DATA AND THE LIKE (transcode)

**S405**
MULTIPLEX ANGLE/AUDIO DATA AND
THE LIKE INTO FILE INCLUDING VIDEO

**S406**
APPLY COPY RIGHT MANAGEMENT (DRM) SYSTEM
OF COPY DESTINATION APPARATUS TO GENERATED FILE

**S407**
STORE GENERATED FILE IN
COPY DESTINATION APPARATUS

# FIG. 27

603 COMMUNICATION UNIT

604 STORAGE UNIT

120 INFORMATION PROCESSING APPARATUS

601 CONTROL UNIT

602 INPUT UNIT

605 OUTPUT UNIT

606 FIRST MEDIA IF

607 DATA BUFFER

630 TRANSPORT STREAM (TS) FILE

608 DATA CONVERTING UNIT

609 SECOND MEDIA IF

610 FIRST MEDIUM (BD)

620 SECOND MEDIUM (SD OR THE LIKE)

FLASH MEMORY

EP 3 319 089 B1

## FIG. 28

DATA CONVERTING UNIT — 608

607 — DATA BUFFER

650 — DATA ANALYZING UNIT

651 — ATTRIBUTE INFORMATION (PSI/SI) ANALYZING UNIT

652 — VIDEO DATA CONVERTING UNIT

653 — AUDIO DATA CONVERTING UNIT

654 — SUBTITLE DATA CONVERTING UNIT

655 — MULTIPLEXING PROCESS EXECUTION UNIT

609 — SECOND MEDIA IF

EP 3 319 089 B1

## FIG. 29

EP 3 319 089 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008098765 A
- JP 2011023071 A
- EP 1768407 A